# EUROPEAN PATENT APPLICATION

(11) **EP 2 262 181 A1**
(43) Date of publication of application: **15.12.2010**
(21) Application number: 09727844.4
(22) Date of filing: 31.03.2009
(51) Int. Cl.: H04L 12/40, H04L 12/56, H04M 11/06

(54) **COMMUNICATION TERMINAL DEVICE AND COMMUNICATION CONTROL METHOD**

(30) Priority: 31.03.2008 JP 2008091087
(71) Applicant: Panasonic Corporation, Kadoma-shi Osaka 571-8501 (JP)
(72) Inventor: FUJIWARA, Yuki, Osaka 540-6207 (JP); MATSUSHITA, Yosuke, Osaka 540-6207 (JP); URABE, Yoshio, Osaka 540-6207 (JP)
(74) Representative: Grünecker, Kinkeldey, Stockmair & Schwanhäusser Anwaltssozietät
(86) International application number: PCT/JP2009/001491
(87) International publication number: WO 2009/122723

(57) **Abstract**

Each of PLC modems 11 through 14 that perform communication using a PLC network 1 manages a priority management table that contains, for each of a plurality of data exchanged using a common transmission line, (i) a main priority (original), (ii) a main priority (changed), and (iii) a sub-priority. For example, when the PLC modem 11 detects congestion, the PLC modem 11 searches its priority management table for a stream that has the same main priority (original) as and a lower sub-priority than data transmitted by the PLC modem 11. The PLC modem 11 then transmits, to the PLC modem that transmits the stream found as a result of the above search, a notification signal notifying that the data transmitted by the PLC modem 11 has a high sub-priority.

## Description

### Technical Field

The present invention relates to a technique to mediate data communication in a common transmission line based on priorities determined in accordance with data types.

### Background Art

Conventionally, when data communication, such as wireless LAN (Local Area Network) communication and power line communication, is performed between a plurality of communication terminal devices using a common transmission line, the following transmission control has been performed.

A plurality of data to be transmitted/received between the communication terminal devices are assigned different priorities depending on their data types. For example, data for voice communication, such as VoIP (Voice over Internet Protocol), is assigned a priority "7", data for stream distribution is assigned a priority "6", normal data is assigned a priority "3", and so forth. When a plurality of data having different data types are transmitted/received, transmission control is performed on these data according to their priorities.

For example, in a case where voice communication, stream distribution and normal data communication are performed between the communication terminal devices using a common transmission line, transmission control is performed on these communications so that one of the communication terminal devices that performs voice communication, which is assigned the highest priority, has a higher data transmission probability using the common transmission line than any other communication terminal devices. In a case where the transmission band has been reduced to the point where a plurality of data cannot be exchanged without any of them incurring data loss, a communication terminal device that performs normal data communication and thus has a low transmission probability cannot attain sufficient right to perform the normal data communication without data loss. On the other hand, voice communication and stream distribution, which are assigned a high priority, can be performed without any data loss.

Assume that while a plurality of data having the same data type (data that are all assigned the same priority) are being transmitted/received between a plurality of communication terminal devices via a common transmission line (e.g., while three streams are being distributed), the communication terminal devices fall in a situation where the transmission band has been reduced such that the capacity of the resulting available band only allows distribution of two streams. In such a situation, as the three streams are of the same data type and are thus assigned the same priority, all the communication terminal devices contend for the transmission right. This gives rise to the problem that it becomes impossible to distribute the three streams without any of them suffering data loss.

To overcome the above problem, there is a technique to mediate data communication in accordance with not only priorities but also sub-priorities of a plurality of data. More specifically, according to this technique, a server is provided connected to a plurality of communication terminal devices that perform data communication using a common transmission line, and a plurality of data having the same data type (a plurality of data assigned the same priority) are assigned different sub-priorities. The sub-priorities are registered in the server in one-to-one correspondence with the data types (for example, see Patent Document 1).

The following describes processing that is performed according to the above conventional technique in a case where the transmission band is reduced while a plurality of data having the same data type (a plurality of data having the same priority) are being transmitted/received between the communication terminal devices using the common transmission line. It is assumed that (i) streams A, B and C, which are all assigned a priority "6", are being distributed, (ii) sub-priorities "2", "1" and "0" are respectively assigned to the streams A, B and C, and (iii) the sub-priorities "2", "1" and "0" are registered in the server in on-to-one correspondence with the streams A, B and C. Here, a priority and a sub-priority are higher as the value indicated thereby is larger.

Assume that while the three streams A, B and C are being distributed, the communication terminal devices fall in a situation where the transmission band has been reduced such that the capacity of the resulting available band only allows distribution of two streams. In such a situation, in accordance with the sub-priorities registered in the server, the largest, the second largest and the third largest number of time slots are respectively assigned to the stream A (the highest sub-priority), the stream B (the second highest sub-priority) and the stream C (the third highest sub-priority).
Patent Document 1:
Japanese Patent Application Publication No. 2006-528437

### Disclosure of the Invention

### Problems to be Solved by the Invention

The following problems lie in the above conventional technique.

As each communication terminal device needs to calculate the number of necessary slots in accordance with (i) the amount of data it wants to transmit and (ii) the transmission line status, each communication terminal device has a large processing load. Moreover, as communication terminal device needs to transmit/receive a control signal for mediating the number of time slots it uses to/from another communication terminal device, the amount of communication performed in the entire network is increased. Furthermore, if the above-conventional technique is employed in a network where the transmission line status readily changes, then each communication terminal device need to calculate the number of necessary slots more frequently so as to efficiently use the transmission band, and the amount of communication associated with transmission/reception of control signals is consequently increased as well. As a result, each communication terminal device has a larger processing load.

Another problem with the above conventional technique is that, as the sub-priorities are assigned to the streams by the server, the server is required to centrally manage these sub-priorities. The server centrally managing the sub-priorities gives rise to the problem that, in order to set the sub-priorities in consideration of the specific communication status that changes constantly in the common transmission line, it is required to (i) change the sub-priorities by collecting information pieces from the communication terminal devices using the common transmission line, and (ii) cause each communication terminal device to conform to the changed sub-priorities. As a result, processing cannot be performed promptly.

In view of the above problems, it is an object of the present invention to provide a communication terminal device and a communication control method that (i) do not require central management by a server, (ii) can suppress the amount of communication associated with signals for performing transmission control, and (iii) can perform appropriate and prompt transmission control in accordance with the communication status, even when the transmission band is reduced while a plurality of data having the same data type (a plurality of data having the same priority) are being exchanged in the common transmission line.

### Means to Solve the Problems

In order to achieve the stated object, a communication terminal device of the present invention comprises: a storage unit storing a table in which, for each of a plurality of data that are exchanged using a common transmission line and include first data and second data, the following (i) and (ii) are registered in correspondence with each other: (i) one of a plurality of communication terminal devices that transmits the data, the plurality of communication terminal devices including the own device; and (ii) a main priority determined in accordance with a data type of the data; a control unit operable to register, in the table, a sub-priority for each of the plurality of data, each sub-priority being determined in accordance with one of predetermined attribute information pieces that is associated with a corresponding one of the plurality of data; and a communication unit operable to, upon detecting congestion in the common transmission line when the own device is to transmit the first data, (i) refer to the table and (ii) transmit a notification signal, which notifies that the sub-priority of the first data is high, to another device that is included in the plurality of communication terminal devices and transmits the second data whose main priority and sub-priority are respectively same as and lower than the main priority and the sub-priority of the first data.

### Effects of the Invention

The above communication terminal device manages, on its own, the main priority and the sub-priority of each data in the table. Upon detecting congestion, the above communication terminal device refers to the table and transmits the notification signal. This structure (i) does not require central management by a server, (ii) can suppress the amount of communication associated with signals for performing transmission control, and (iii) allows the communication terminal device to perform appropriate and prompt transmission control in accordance with the specific communication status that changes constantly in the common transmission line.

### Brief Description of the Drawings

FIG. 1 is a structural diagram of a PLC network pertaining to Embodiment 1;
FIG. 2 is a structural diagram of a network including the PLC network shown in FIG. 1;
FIG. 3 is a structural diagram of hardware of each PLC modem shown in FIG. 1;
FIG. 4 shows a functional structure of CPU shown in FIG. 3;
FIG. 5 shows a service information table stored in a memory shown in FIG. 3;
FIG. 6 shows a QoS management table stored in the memory shown in FIG. 3;
FIG. 7 shows a priority setting table stored in the memory shown in FIG. 3;
FIG. 8 shows a sub-priority management table stored in the memory shown in FIG. 3;
FIG. 9 shows a priority management table stored in the memory shown in FIG. 3;
FIG. 10 shows a frame format of a data frame carried through the PLC network shown in FIG. 1;
FIG. 11 shows a frame format of a notification signal carried through the PLC network shown in FIG. 1;
FIG. 12 is a diagram illustrating a CSMA/CA (Carrier Sense Multiple Access with Collision Avoidance) method that is used by each PLC modem of FIG. 1 in performing transmission control;
FIG. 13 is a flowchart of initial processing performed by CPU shown in FIG. 3;
FIG. 14 is a flowchart of registration processing performed by CPU shown in FIG. 3;
FIG. 15 is a flowchart of transmission processing performed by CPU shown in FIG. 3;
FIG. 16 is a flowchart of reception processing performed by CPU shown in FIG. 3;
FIG. 17 is a flowchart of data frame reception processing shown in FIG. 16;
FIG. 18 is a flowchart of notification signal reception processing shown in FIG. 16;
FIG. 19 is a flowchart of the notification signal reception processing shown in FIG. 16;
FIG. 20 is a diagram illustrating specific examples of operations of the PLC modems pertaining to Embodiment 1;
FIG. 21 is a diagram illustrating specific examples of operations of the PLC modems pertaining to Embodiment 1;
FIG. 22 is a diagram illustrating specific examples of operations of the PLC modems pertaining to Embodiment 1;
FIG. 23 is a diagram illustrating specific examples of operations of the PLC modems pertaining to Embodiment 1;
FIG. 24 is a diagram illustrating specific examples of operations of the PLC modems pertaining to Embodiment 1;
FIG. 25 is a diagram of a network including a PLC network pertaining to Embodiment 2;
FIG. 26 shows a functional structure of CPU provided in each of PLC modems 11 through 14 shown in FIG. 25;
FIG. 27 shows a frame format of a response signal carried through the PLC network shown in FIG. 25;
FIG. 28 is a flowchart of reception processing performed by CPU shown in FIG. 26;
FIG. 29 is a flowchart of notification signal reception processing shown in FIG. 28;
FIG. 30 is a flowchart of the notification signal reception processing shown in FIG. 28;
FIG. 31 is a diagram illustrating specific examples of operations of the PLC modems pertaining to Embodiment 2;
FIG. 32 is a diagram illustrating specific examples of operations of the PLC modems pertaining to Embodiment 2;
FIG. 33 is a diagram illustrating specific examples of operations of the PLC modems pertaining to Embodiment 2;
FIG. 34 is a diagram illustrating specific examples of operations of the PLC modems pertaining to Embodiment 2;
FIG. 35 is a structural diagram of a network including a PLC network pertaining to Embodiment 3;
FIG. 36 shows a functional structure of CPU provided in each of PLC modems 11 through 14 shown in FIG. 35;
FIG. 37 is a flowchart of data frame reception processing performed by CPU shown in FIG. 36;
FIG. 38 is a diagram illustrating specific examples of operations of the PLC modems pertaining to Embodiment 3;
FIG. 39 is a diagram illustrating specific examples of operations of the PLC modems pertaining to Embodiment 3;
FIG. 40 is a diagram illustrating specific examples of operations of the PLC modems pertaining to Embodiment 3;
FIG. 41 shows a functional structure of CPU provided in each PLC modem pertaining to Embodiment 4;
FIG. 42 is a flowchart of transmission processing performed by CPU shown in FIG. 41; and
FIG. 43 is a flowchart of reception processing performed by CPU shown in FIG. 41.

### Description of Numerical References

- 1: Power line communication network (PLC network)
- 11-14: PLC modem
- 31: Memory
- 32: CPU
- 33,34: Network interface
- 51: Reception processing unit
- 52: Sub-priority control unit
- 53: Notification signal generation unit
- 54: Congestion detection unit
- 55: Transmission processing unit
- 130: Priority setting table
- 140: Sub-priority management table
- 150: Priority management table

### Best Modes for Carrying Out the Invention

One aspect of the present invention is a first communication terminal device comprising: a storage unit storing a table in which, for each of a plurality of data that are exchanged using a common transmission line and include first data and second data, the following (i) and (ii) are registered in correspondence with each other: (i) one of a plurality of communication terminal devices that transmits the data, the plurality of communication terminal devices including the own device; and (ii) a main priority determined in accordance with a data type of the data; a control unit operable to register, in the table, a sub-priority for each of the plurality of data, each sub-priority being determined in accordance with one of predetermined attribute information pieces that is associated with a corresponding one of the plurality of data; and a communication unit operable to, upon detecting congestion in the common transmission line when the own device is to transmit the first data, (i) refer to the table and (ii) transmit a notification signal, which notifies that the sub-priority of the first data is high, to another device that is included in the plurality of communication terminal devices and transmits the second data whose main priority and sub-priority are respectively same as and lower than the main priority and the sub-priority of the first data.

Another aspect of the present invention is a first communication control method used in a communication terminal device, the method comprising the steps of: storing a table in which, for each of a plurality of data that are exchanged using a common transmission line and include first data and second data, the following (i) and (ii) are registered in correspondence with each other: (i) one of a plurality of communication terminal devices that transmits the data, the plurality of communication terminal devices including the own device; and (ii) a main priority determined in accordance with a data type of the data; registering, in the table, a sub-priority for each of the plurality of data, each sub-priority being determined in accordance with one of predetermined attribute information pieces that is associated with a corresponding one of the plurality of data; and upon detecting congestion in the common transmission line when the own device is to transmit the first data, (i) referring to the table and (ii) transmitting a notification signal, which notifies that the sub-priority of the first data is high, to another device that is included in the plurality of communication terminal devices and transmits the second data whose main priority and sub-priority are respectively same as and lower than the main priority and the sub-priority of the first data.

The above communication terminal device manages, on its own, the main priority and the sub-priority of each data in the table. Upon detecting congestion, the above communication terminal device refers to the table and transmits the notification signal. This structure (i) does not require central management by a server, (ii) can suppress the amount of communication associated with signals for performing transmission control, and (iii) allows the communication terminal device to perform appropriate and prompt transmission control in accordance with the specific communication status that changes constantly in the common transmission line.

Another aspect of the present invention is a second communication terminal device, which is the first communication terminal device wherein when the own device is to transmit the first data, the control unit updates, on a per-frame basis, the sub-priority of the first data in accordance with one of the predetermined attribute information pieces that is associated with the first data.

According to the above structure, transmission of the notification signal can be controlled in accordance with the sub-priory of the first data valid at the time of transmitting the corresponding frame.

Another aspect of the present invention is a third communication terminal device, which is the first communication terminal device wherein the plurality of data further include third data, and the control unit lowers the main priority of the first data in accordance with another notification signal transmitted by another device that is included in the plurality of communication terminal devices and transmits the third data, the other notification signal notifying that the sub-priority of the third data is high.

The above structure lowers a main priority of, from among a plurality of data having the same data type (the same main priority), data having a low sub-priority. This reduces the transmission probability for data having a low sub-priority, and relatively increases the transmission probability for data having a high sub-priority. Accordingly, exchange of data having a high sub-priority can be guaranteed.

Another aspect of the present invention is a fourth communication terminal device, which is the first communication terminal device where the notification signal includes one of (i) information indicating a value by which the main priority of the second data should be lowered, (ii) information indicating a new main priority to which the main priority of the second data should be changed, and (iii) information indicating that the other device should halt transmission of the second data.

With the above structure, data transmission performed by the other device can be controlled in accordance with the degree of congestion detected by the own device.

Another aspect of the present invention is a fifth communication terminal device, which is the first communication terminal device wherein upon detecting another congestion in the common transmission line after having transmitted the notification signal, the communication unit further transmits another notification signal.

The above structure can effectively avoid a situation where the common transmission line continuously suffers congestion.

Another aspect of the present invention is a sixth communication terminal device, which is the first communication terminal device wherein when the own device has completed transmission of the first data, the communication unit transmits, to the other device, a completion notification signal notifying that the own device has completed the transmission of the first data.

With the above structure, upon receiving the completion notification signal, the other device can perform processing of, for example, resetting the main priority of the second data to a value originally indicated thereby. This way, exchange of data having a low sub-priority can be recovered and guaranteed.

Another aspect of the present invention is a seventh communication terminal device, which is the sixth communication terminal device wherein (i) the plurality of data further include third data, (ii) the control unit lowers the main priority of the first data in accordance with another notification signal transmitted by another device that is included in the plurality of communication terminal devices and transmits the third data, the other notification signal notifying that the sub-priority of the third data is high, and (iii) the control unit resets the main priority of the first data to a value originally indicated thereby in accordance with another completion notification signal transmitted by the other device that transmits the third data, the other completion notification signal notifying that transmission of the third data has been completed.

The above structure can not only guarantee exchange of data having a high sub-priority, but also recover and guarantee exchange of data having a low sub-priority.

Another aspect of the present invention is an eighth communication terminal device, which is the first communication terminal device wherein the plurality of data further include third data, and when the communication unit has received, from another device that is included in the plurality of communication terminal devices and transmits the third data, another notification signal notifying that a sub-priority of the third data registered in another table held by the other device is high, the communication unit (i) refers to the table stored in the storage unit, and (ii) if the sub-priority of the first data is higher than the sub-priority of the third data registered in the table stored in the storage unit, transmits a response signal to the other device that transmits the third data, the response signal notifying that the sub-priority of the first data is high.

Even when the plurality of communication terminal devices belong to different interference ranges, the above structure allows the own device that has received a notification signal to perform proper processing in accordance with the sub-priorities registered in the table stored in the storage unit.

One aspect of the present invention is a ninth communication terminal device, which is the eighth communication terminal device wherein the plurality of data further include fourth data, and when the control unit has received, from another device that is included in the plurality of communication terminal devices and transmits the fourth data, another response signal notifying that an actual sub-priority of the fourth data is high, the control unit updates the sub-priority of the fourth data, which is registered in the table stored in the storage unit, to the actual sub-priority thereof.

Even when the plurality of communication terminal devices belong to different interference ranges, the above structure allows the own device to properly manage the sub-priorities registered in the table stored in the storage unit.

Another aspect of the present invention is a tenth communication terminal device, which is the first communication terminal device wherein a reception unit operable to receive the predetermined attribute information pieces that are distributed by a management terminal that manages the plurality of communication terminal devices.

With the above structure, the same attribute information pieces can be used among the plurality of communication terminal devices.

Another aspect of the present invention is an eleventh communication terminal device comprising: a storage unit storing a table in which, for each of a plurality of data that are exchanged using a common transmission line and include first data and second data, the following (i) and (ii) are registered in correspondence with each other: (i) one of a plurality of communication terminal devices that transmits the data, the plurality of communication terminal devices including the own device; and (ii) a main priority determined in accordance with a data type of the data; a control unit operable to register, in the table, a sub-priority for each of the plurality of data, each sub-priority being determined in accordance with one of predetermined attribute information pieces that is associated with a corresponding one of the plurality of data; and a communication unit operable to, upon detecting congestion in the common transmission line when the own device is to receive the first data, (i) refer to the table and (ii) transmit a notification signal, which notifies that the sub-priority of the first data is high, to another device that is included in the plurality of communication terminal devices and transmits the second data whose main priority and sub-priority are respectively same as and lower than the main priority and the sub-priority of the first data.

Another aspect of the present invention is a second communication control method used in a communication terminal device, the method comprising the steps of: storing a table in which, for each of a plurality of data that are exchanged using a common transmission line and include first data and second data, the following (i) and (ii) are registered in correspondence with each other: (i) one of a plurality of communication terminal devices that transmits the data, the plurality of communication terminal devices including the own device; and (ii) a main priority determined in accordance with a data type of the data; registering, in the table, a sub-priority for each of the plurality of data, each sub-priority being determined in accordance with one of predetermined attribute information pieces that is associated with a corresponding one of the plurality of data; and upon detecting congestion in the common transmission line when the own device is to receive the first data, (i) referring to the table and (ii) transmitting a notification signal, which notifies that the sub-priority of the first data is high, to another device that is included in the plurality of communication terminal devices and transmits the second data whose main priority and sub-priority are respectively same as and lower than the main priority and the sub-priority of the first data.

The above communication terminal device manages, on its own, the main priority and the sub-priority of each data in the table. Upon detecting congestion, the above communication terminal device refers to the table and transmits the notification signal. This structure (i) does not require central management by a server, (ii) can suppress the amount of communication associated with signals for performing transmission control, and (iii) allows the communication terminal device to perform appropriate and prompt transmission control in accordance with the specific communication status that changes constantly in the common transmission line.

Another aspect of the present invention is a twelfth communication terminal device comprising: a storage unit storing a table in which, for each of a plurality of data that are exchanged using a common transmission line and include first data and second data, the following (i) and (ii) are registered in correspondence with each other: (i) one of a plurality of communication terminal devices that transmits the data, the plurality of communication terminal devices including the own device; and (ii) a main priority determined in accordance with a data type of the data; and a control unit operable to (i) register, in the table, a sub-priority for each of the plurality of data, each sub-priority being determined in accordance with one of predetermined attribute information pieces that is associated with a corresponding one of the plurality of data, and (ii) upon detecting congestion in the common transmission line when the own device is to transmit the first data, (a) refer to the table and (b) if the table does not contain another device that is included in the plurality of communication terminal devices and transmits the second data whose main priority and sub-priority are respectively same as and higher than the main priority and the sub-priority of the first data, raises the main priority of the first data.

Another aspect of the present invention is a third communication control method used in a communication terminal device, the method comprising the steps of: storing a table in which, for each of a plurality of data that are exchanged using a common transmission line and include first data and second data, the following (i) and (ii) are registered in correspondence with each other: (i) one of a plurality of communication terminal devices that transmits the data, the plurality of communication terminal devices including the own device; and (ii) a main priority determined in accordance with a data type of the data; registering, in the table, a sub-priority for each of the plurality of data, each sub-priority being determined in accordance with one of predetermined attribute information pieces that is associated with a corresponding one of the plurality of data, and upon detecting congestion in the common transmission line when the own device is to transmit the first data, (i) referring to the table and (ii) if the table does not contain another device that is included in the plurality of communication terminal devices and transmits the second data whose main priority and sub-priority are respectively same as and higher than the main priority and the sub-priority of the first data, raising the main priority of the first data.

The above communication terminal device manages, on its own, the main priority and the sub-priority of each data in the table. Upon detecting congestion, the above communication terminal device refers to the table and raises the main priority of the first data. This structure (i) does not require central management by a server, (ii) can suppress the amount of communication associated with signals for performing transmission control, and (iii) allows the communication terminal device to perform appropriate and prompt transmission control in accordance with the specific communication status that changes constantly in the common transmission line.

The following describes embodiments of the present invention with reference to the accompanying drawings. It should be noted that although a power line communication (hereinafter, "PLC") network is exemplarily discussed in the embodiments, the present invention is also applicable to networks of a different type than the PLC network (e.g., a wireless network).

In Embodiments 1 through 3, a priority (i.e., a main priority (original) and a main priority (changed) described below) is higher as the value indicated thereby is larger. In Embodiments 1 and 2, a sub-priority is higher as the value indicated thereby is larger. In Embodiment 3, a sub-priority is higher as the value indicated thereby is smaller.

### <<Embodiment 1>>

A description is now given of Embodiment 1 of the present invention, with reference to the accompanying drawings.

### <Network>

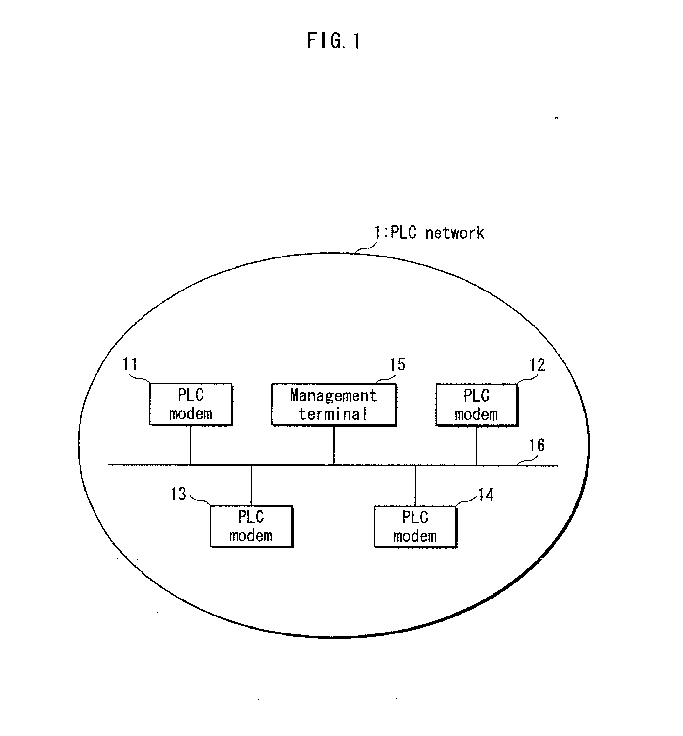

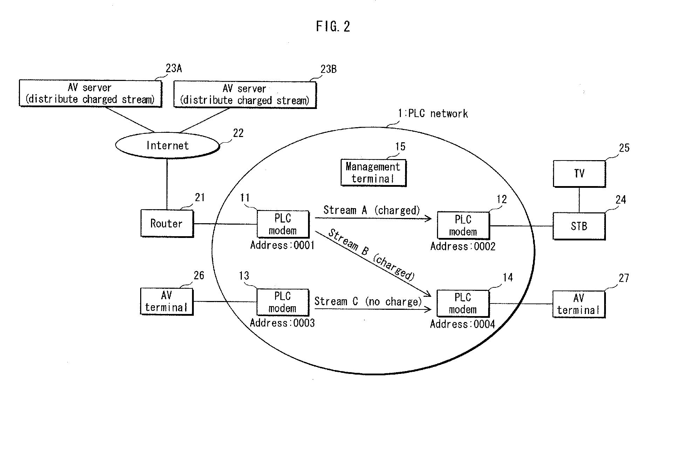

FIG. 1 is a structural diagram of a PLC network 1 pertaining to the present embodiment. FIG. 2 is a structural diagram of a network including the PLC network 1 shown in FIG. 1. Note, in the drawings that show the PLC network 1 (e.g., FIG. 2), the illustration of power lines, through which power line communication is performed within the PLC network 1, is omitted (this, however, is not true of FIG. 1). Also note, in the drawings illustrating the present embodiment, terms contained in the parentheses (as in "Stream A (...)") each represent a corresponding one of charge information pieces.

The PLC network 1 includes PLC modems 11 through 14 and a management terminal 15. The PLC modems 11 through 14 and the management terminal 15 are connected to a power line 16, which is a common transmission line, via an alternating-current power socket (not illustrated). Addresses of the PLC modems 11, 12, 13 and 14 are "0001", "0002", "0003" and "0004", respectively.

Between the PLC modems 11 through 14, communications such as voice communication, stream distribution and normal data communication are performed through the power line 16, namely the common transmission line. In the example of FIG. 2, Stream A (charged) is transmitted by the PLC modem 11 to the PLC modem 12, Stream B (charged) is transmitted by the PLC modem 11 to the PLC modem 14, and Stream C (no charge) is transmitted by the PLC modem 13 to the PLC modem 14.

The communications performed between the PLC modems 11 through 14, such as voice communication, stream distribution and normal data communication, are assigned different priorities according to their data types in advance. The data communications performed between the PLC modems 11 through 14 are subject to transmission control based on the assigned priorities. There are different types of data, such as data for voice communication, data for stream distribution, and normal data. A priority "7" is assigned to data for voice communication. A priority "6" is assigned to data for stream distribution. A priority "3" is assigned to normal data. These priorities are parameters depending on which priority control is performed.

There is a case where, while a plurality of data having the same data type (the same priority) are being exchanged between the PLC modems 11 through 14, the PLC modems 11 through 14 fall in a situation where the transmission band has been reduced such that the capacity of the resulting available band only allows a part of such data communications to be performed. In such a case, transmission control is performed on such data communications (the plurality of data having the same data type and priority) by determining, from among all the data communications, one or more data communications that should be protected based on the sub-priorities of their data. These sub-priorities are parameters depending on which a plurality of data having the same data type are differentiated from one another.

Below, a priority may be referred to as "a main priority" in order to be clearly distinguished from a sub-priority.

The PLC modem 11 is connected to a router 21. The router 21 is connected to the Internet 22 via an access line, and relays data communication between, for instance, the PLC modem 11 and a device connected to the Internet 22. As one example, the PLC modem 11 receives, from AV servers 23A and 23B connected to the Internet 22, a charged stream distribution service via the router 21.

The PLC modem 11, for example, has the functions of (i) storing a provided stream, (ii) transmitting a stream to other PLC modems 12 through 14 via the power line 16, and (iii) receiving a stream from other PLC modems 12 through 14 via the power line 16. Each of the PLC modems 12 through 14 also has the same functions as the PLC modem 11.

The PLC modem 12 is connected to a television 25 via STP (Set-top Box) 24. The PLC modem 13 is connected to an AV terminal 26. The PLC modem 14 is connected to an AV terminal 27.

In order to make all of the PLC modems 11 through 14 connected to the PLC network 1 share the same standard of setting sub-priorities, the management terminal 15 has the function of distributing, to the PLC modems 11 through 14, attribute information pieces that serve as the standard of setting sub-priorities. In accordance with the distributed attribute information pieces, each of the PLC modems 11 through 14 sets sub-priorities on its own.

Note, the number of the PLC modems is not limited to being four, but may be two, three, or five or more. Also, devices connected to the PLC modems are not limited to being the above router, STB, and AV terminals.

### <Hardware Structure of PLC Modem>

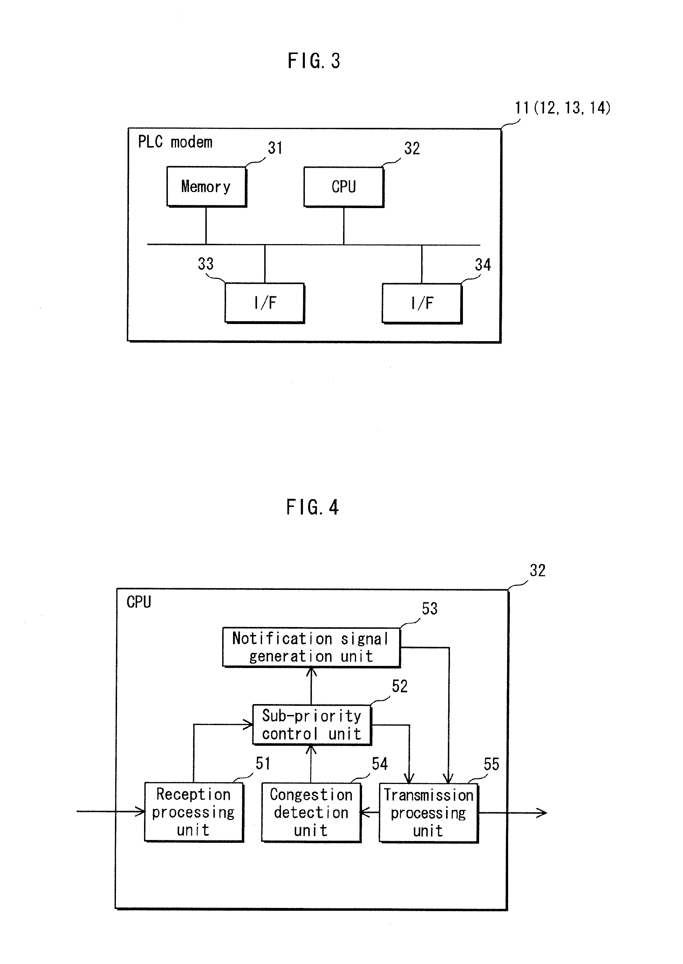

FIG. 3 shows a hardware structure of each of the PLC modems 11 through 14 shown in FIG. 1. The PLC modems 11 through 14 are each composed of a memory 31, CPU (Central Processing Unit) 32, and network interfaces 33 and 34. In FIG. 3, the network interfaces are each abbreviated as "I/F".

The memory 31 stores various types of control programs for controlling the PLC modem (one of 11 through 14) in which it is provided, and includes a work area. The memory 31 also stores a service information table 110, a QoS (Quality of Service) management table 120, a priority setting table 130, a sub-priority management table 140 and a priority management table 150. Specifics of each table are described later.

CPU 32 controls an entirety of the PLC modem (one of 11 through 14) in which it is provided, by performing the various types of control programs stored in the memory 31. Specifics of processing performed by CPU 32 are described later.

The network interface 33 is connected to the power line 16 (see FIG. 1) via an alternating-current power socket (not illustrated), and exchanges various types of data with other PLC modems, the management terminal 15, and the like via the power line 16.

The network interface 34 exchanges various types of data with a device connected thereto. In the example of FIG. 2, the network interfaces 34 of the PLC modems 11, 12, 13 and 14 are connected to the router 21, STB 24, the AV terminal 26 and the AV terminal 27, respectively.

### <Functional Structure of CPU>

FIG. 4 is a functional block diagram of CPU 32 shown in FIG. 3. CPU 32 functions as a reception processing unit 51, a sub-priority control unit 52, a notification signal generation unit 53, a congestion detection unit 54 and a transmission processing unit 55, by performing the various types of control programs stored in the memory 31. Specifics of each functional unit are described later with reference to the accompanying processing flows, and are thus omitted from this section.

### <Contents of Each Table Stored in Memory>

As stated earlier, the memory 31 stores the service information table 110, the QoS management table 120, the priority setting table 130, the sub-priority management table 140 and the priority management table 150. Below, contents of each table are described in order.

### {Contents of Service Information Table}

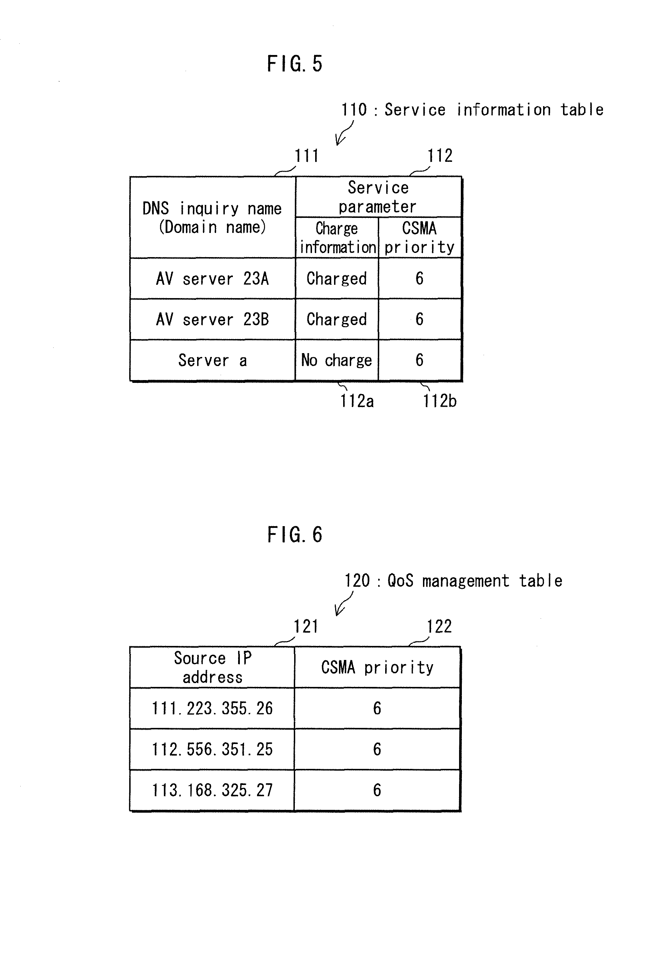

FIG. 5 shows the service information table 110 stored in the memory 31 shown in FIG. 3. The service information table 110 is stored into the memory 31 at a manufacturing factory or the like. A DNS inquiry name (domain name) 111 and a service parameter 112 are registered in the service information table 110 in correspondence with each other. In the example of FIG. 5, the service parameter 112 is composed of (i) charge information 112a indicating "Charged" or "No charge", and (ii) CSMA priority 112b indicating a priority in CSMA. In the present embodiment, the CSMA priority is the main priority. The contents registered in the service information table 110 may be changed, and new contents may be additionally registered in the service information table 110, as necessary.

### {Contents of QoS Management Table}

FIG. 6 shows the QoS management table 120 stored in the memory 31 shown in FIG. 3. A source IP addresses 121 and a CSMA priority 122 are registered in correspondence with each other in the QoS management table 120. The source IP address 121 holds, for example, the IP address of the AV server 23A that transmits Stream A (charged). The CSMA priority 122 holds a priority in CSMA.

### {Contents of Priority Setting Table}

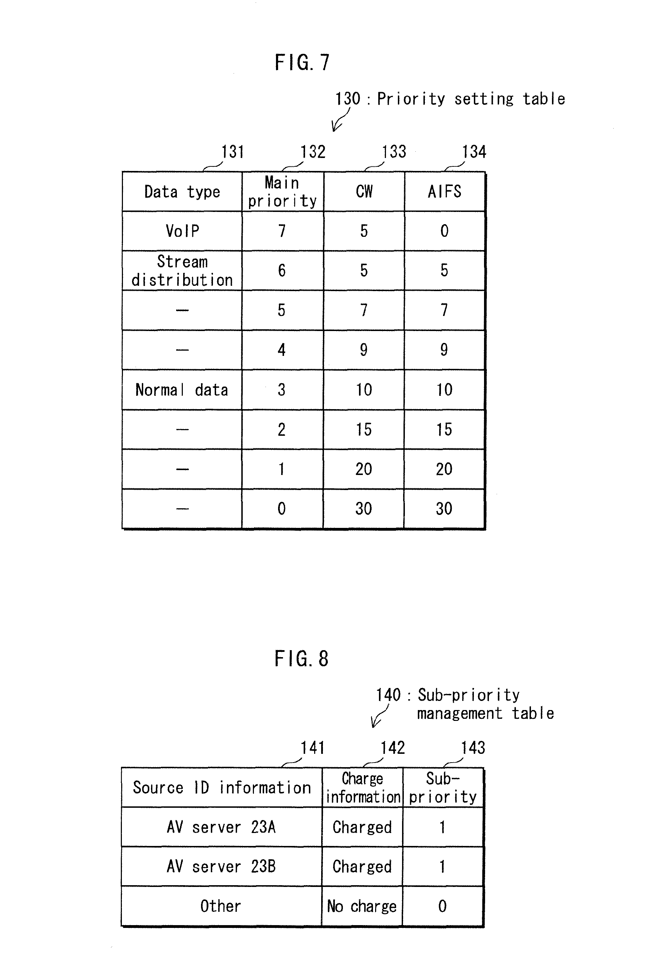

FIG. 7 shows the priority setting table 130 stored in the memory 31 shown in FIG. 3. The following contents are registered in correspondence with one another in the priority setting table 130: (i) a data type 131; a main priority 132; CW 133; and AIFS 134. It should be noted that as the present embodiment involves changing main priorities utilized in the transmission control, the priority setting table 130 of the present embodiment contains information relating to main priorities "0" to "7". The contents registered in the priority setting table 130 may be changed, and new contents may be additionally registered in the priority setting table 130, as necessary.

The data type 131 holds a data type of data, such as data relating to voice communication (VoIP), data relating to stream distribution, and normal data. Referring to FIG. 7, "VoIP" denotes data relating to voice communication (VoIP), "Stream distribution" denotes data relating to stream distribution, and "Normal data" denotes normal data. The data type 131 may be blank, i.e., hold "-" that does not directly show a data type, so as to be able to adapt to changes in the main priorities utilized in the priority control.

The main priority 132 holds a main priority of the corresponding data type. In the example of FIG. 7, a priority "7" is assigned to data relating to VoIP, a priority "6" is assigned to data relating to stream distribution, and a priority "3" is assigned to normal data. Data relating to voice communication (VoIP) is of a higher priority than data relating to stream distribution. The data relating to stream distribution is of a higher priority than normal data. Note, the main priority 132 may hold a main priority that is not directly related to the corresponding data type, so as to be able to adapt to changes in the main priorities utilized in the priority control.

The CW 133 holds CW (Contention Window). CW represents the maximum number of slots that indicates how many slots the transmitter device must wait to be able to start data transmission since occupation of the common transmission line (in the present embodiment, the power line 16) by transmission of certain data was cleared. Here, CW has, for example, the same meaning as CW specified in the IEEE 802.11e.

The AIFS 134 holds AIFS (Arbitration Inter Frame Space). AIFS denotes a wait time period for which the transmitter device must wait to be able to start transmission since occupation of the common transmission line (in the present embodiment, the power line 16) by transmission of certain data was cleared. Here, AIFS has, for example, the same meaning as AIFS specified in the IEEE 802.11 e.

The transmission processing unit 55 refers to the priority setting table 130, and assigns a priority to each data to be transmitted according to the corresponding data type 131. The transmission processing unit 55 also prepares a transmission queue for every pair of a priority and a destination address, and stores each data to be transmitted into the corresponding transmission queue. Here, the priority may be a main priority. Alternatively, the priority may cause values indicated by corresponding CW and AIFS to be changed, so as to accelerate a transmission timing of certain data compared to transmission timings of other data.

### {Contents of Sub-priority Management Table}

FIG. 8 shows the sub-priority management table 140 stored in the memory 31 shown in FIG. 3. The sub-priority management table 140 shown in FIG. 8 is created when the attribute information pieces distributed by the management terminal 15 are charge information pieces.

The following contents are registered in correspondence with one another in the sub-priority management table 140: (i) source device identification information 141 (hereinafter, "source ID information 141"); (ii) charge information 142; and (iii) sub-priority 143. The source ID information 141 holds a source ID information piece for identifying a transmitter device, such as a host that transmits a stream. The charge information 142 holds a charge information piece indicating whether the stream transmitted by the transmitter device indicated by the corresponding source ID information 141 is charged or is of no charge. The sub-priority 143 holds a sub-priority that conforms to the corresponding charge information. In the present embodiment, a sub-priority "1" is assigned when the corresponding charge information 142 shows "Charged", and a sub-priority "0" is assigned when the corresponding charge information 142 shows "No charge". A charged stream is of a higher sub-priority than a stream of no charge. Note, the above description is merely an example, and the present embodiment is not limited to this.

Also note, the source ID information 141 may hold any information as long as it can identify the corresponding transmitter device, such as a MAC (Media Access Control) address. A plurality of source ID information pieces may correspond to one server.

### {Contents of Priority Management Table}

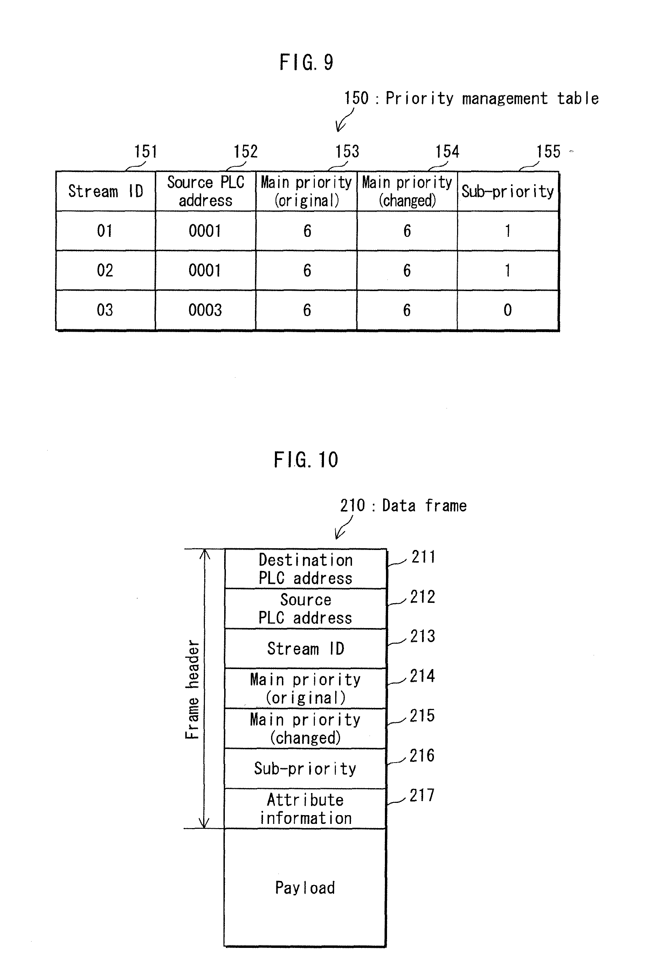

FIG. 9 shows the priority management table 150 stored in the memory 31 shown in FIG. 3. The following contents are registered in correspondence with one another in the priority management table 150: (i) a stream ID 151; (ii) a source PLC address 152; (iii) a main priority (original) 153; (iv) a main priority (changed) 154; and (v) a sub-priority 155.

The stream ID 151 holds a stream ID for identifying a stream. The source PLC address 152 holds an address of the PLC modem that transmits the stream. The main priority (original) 153 holds a main priority (hereinafter referred to as "main priority (original)" as necessary) assigned to the data type of data relating to the stream. The main priority (changed) 154 holds a changed main priority (hereinafter referred to as "main priority (changed)" as necessary). The default value of the main priority (changed) is the same as the value indicated by the corresponding main priority (original) 153. The sub-priority 155 holds a sub-priority determined according to an attribute information piece associated with the stream.

### <Frame Formats of Frames Carried through PLC Network>

The following describes frame formats of a data frame and a notification signal carried through the PLC network 1.

### {Frame Format of Data Frame}

FIG. 10 shows a frame format of a data frame carried through the PLC network 1 shown in FIG. 1. A data frame 210 is a class of data that can be transmitted at a time, and is composed of a frame header and a payload in which data to be actually exchanged is stored.

The frame header contains a destination PLC address 211, a source PLC address 212, a stream ID 213, a main priority (original) 214, a main priority (changed) 215, a sub-priority 216, and attribute information 217.

The destination PLC address 211 is set to the address of the PLC modem to which the data frame is transmitted. The source PLC address 212 is set to the address of the PLC modem by which the data frame is transmitted. The stream ID 213 is set to the stream ID of a stream relating to the data stored in the payload of the data frame. The main priority (original) 214 and the main priority (changed) 215 are respectively set to the main priority (original) and the main priority (changed) assigned to this stream. The sub-priority 216 is set to the sub-priority assigned to this stream. In the present embodiment, the attribute information 217 is set to a charge information piece associated with this stream.

### {Frame Format of Notification Signal}

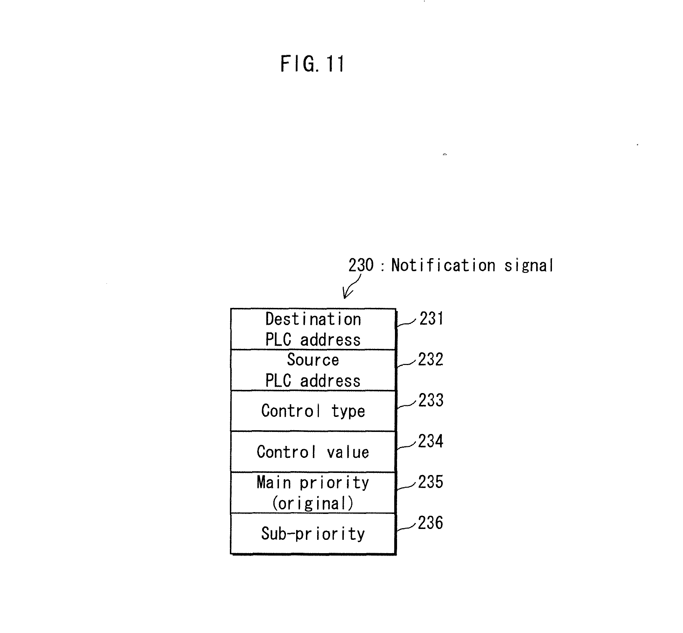

FIG. 11 shows a frame format of a notification signal carried through the PLC network 1 shown in FIG. 1. The notification signal 230 notifies other PLC modems that the stream relating to data to be transmitted by the transmitter of the notification signal has a high sub-priority. The notification signal 230 is composed of a frame header and a payload in which data to be actually exchanged is stored.

The frame header contains a destination PLC address 231 and a source PLC address 232. The destination PLC address 231 is set to the address of the receiver PLC modem, to which the notification signal is transmitted. The source PLC address 232 is set to the address of the PLC modem by which the notification signal is transmitted.

The payload contains a control type 233, a control value 234, a main priority (original) 235, and a sub-priority 236.

The control type 233 is set to a parameter value assigned to a control type representing a control that causes other PLC modems to change main priorities (changed). In the present embodiment, the parameter value is one of "0" through "3". A control type assigned a parameter value "0" represents a control that causes the receiver PLC modem (to which the notification signal is transmitted) to lower a certain main priority (changed) to the value indicated by the control value 234; for example, when the control value 234 indicates a value "5", the receiver PLC modem (to which the notification signal is transmitted) is caused to lower a certain main priority (changed) to "5". A control type assigned a parameter value "1" represents a control that causes the receiver PLC modem (to which the notification signal is transmitted) to lower a certain main priority (changed) by a value indicated by the control value 234; for example, when the control value 234 indicates a value "1", the receiver PLC modem (to which the notification signal is transmitted) is caused to lower a certain main priority (changed) by "1". A control type assigned a parameter value "2" represents a control that causes the receiver PLC modem (to which the notification signal is transmitted) to halt data transmission. A control type assigned a parameter value "3" represents a control that causes the receiver PLC modem (to which the notification signal is transmitted) to either change a certain main priority (changed) to the main priority (original) corresponding thereto, or cancel the halting of data transmission.

When the control type 233 is set to a parameter value "0", the control value 234 is set to a value to which the receiver PLC modem (to which the notification signal is transmitted) should change a certain main priority (changed). When the control type 233 is set to a parameter value "1", the control value 234 is set to a value by which the receiver PLC modem (to which the notification signal is transmitted) should lower the certain main priority (changed).

The main priority (original) 235 is set to the main priority (original) assigned to a stream relating to data to be transmitted by the PLC modem that transmits the notification signal. The sub-priority 236 is set to the sub-priority assigned to this stream.

Note, a notification signal whose control type 233 is set to one of parameter values "0" through "2" is a notification signal for notifying that the data transmitted by the transmitter of the notification signal has a high sub-priority. A notification signal whose control type 233 is set to a parameter value "3" is a completion notification signal for notifying other communication terminal devices that the transmitter of the notification signal has completed data transmission.

### <Overview of CSMA/CA Method>

In each of the PLC modems 11 through 14, the transmission processing unit employs the CSMA/CA (Carrier Sense Multiple Access with Collision Avoidance) method in controlling data transmission. The CSMA/CA method is a method to avoid contention between a plurality of terminals (in the present embodiment, the PLC modems) when they access the same transmission line.

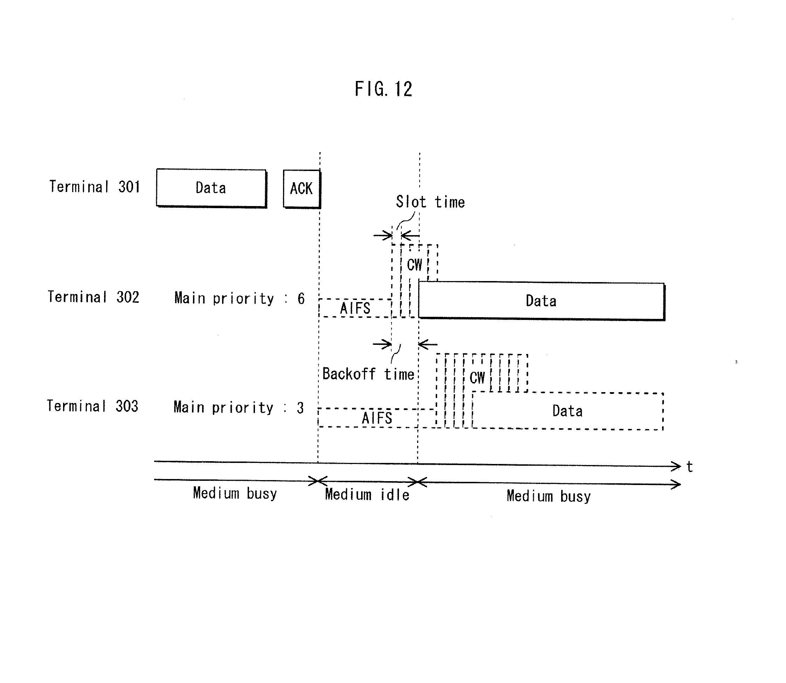

FIG. 12 is a diagram illustrating the CSMA/CA method. Terminals shown in FIG. 12 are equivalent to PLC modems. For simplicity, it is assumed here that no changes have been made to main priorities.

For example, in a medium busy period during which a terminal 301 is performing data transmission, terminals 302 and 303 halt data transmissions and are in a wait state. The terminals 302 and 303 monitor the transmission line. Upon confirming (i) that the terminal 301 has completed the data transmission and (ii) arrival of a medium idol period during which the transmission line is vacant, the terminals 302 and 303 start data transmission.

At this time, if both of the terminals 302 and 303 concurrently start the data communication, their frames will collide. To avoid such collision, various types of parameters are set according to priorities, so that priority control can be performed on each transmission according to main priorities. In the present embodiment, the above-described CW and AIFS are used as such parameters. CW and AIFS pertaining to the present embodiment are stored in the priority setting table 130, which is shown in FIG. 7, in correspondence with a main priority. Note, parameters to be stored in correspondence with the main priority are not limited to being CW and AIFS.

The terminal 302, which is attempting to transmit data whose main priority is "6", acquires CW "5" and AIFS "5" corresponding to the main priority "6" from the priority setting table 130 shown in FIG. 7. The terminal 302 generates a random number between integers 0 and 5 (5 being the value indicated by the acquired CW), uses the acquired random number (e.g., 3) as the number of slots, and calculates a backoff time by multiplying the number of slots by a slot time. Then, the terminal 302 adds the calculated backoff time to the acquired AIFS "5", and starts data transmission when a time period obtained by this addition has elapsed.

Meanwhile, the terminal 303, which is attempting to transmit data whose main priority is "3", acquires CW "10" and AIFS "10" corresponding to the main priority "3" from the priority setting table 130 shown in FIG. 7. The terminal 303 generates a random number between integers 0 and 10 (10 being the value indicated by the acquired CW), uses the acquired random number (e.g., 4) as the number of slots, and calculates a backoff time by multiplying the number of slots by a slot time. Then, the terminal 303 adds the calculated backoff time to the acquired AIFS "10", and waits for a time period obtained by this addition. At a time when this time period has elapsed, the transmission line is in a medium busy state as the terminal 302 has already started data transmission; hence, the terminal 303 cannot transmit its data. It should be noted here that although the terminal 303 cannot start transmitting the data, this data is still illustrated in FIG. 12 enclosed by a dotted line for the purpose of conveying a timing at which this data could have been transmitted if the transmission line were not in the medium busy state.

In the present embodiment, a main priority to be referred to when acquiring CW and AIFS from the priority setting table 130 is a main priority (changed).

As set forth above, by controlling time periods for which terminals must wait to start data transmission according to the main priorities, a terminal attempting to transmit data of a high main priority is granted more transmission opportunities than other terminals. Stated another way, a terminal has a higher transmission probability for data having a higher main priority. Normally, a main priority is set according to a data type. However, in the present embodiment, when congestion occurs between a plurality of data having the same main priority, various parameters are modified by temporarily changing the main priority assigned to at least one of these data that has a low sub-priority. In this manner, a stream that needs to be protected is preferentially transmitted.

### <Internal Control on PLC Modems>

A description is now given of internal control on the PLC modems 11 through 14.

### {Initial Processing}

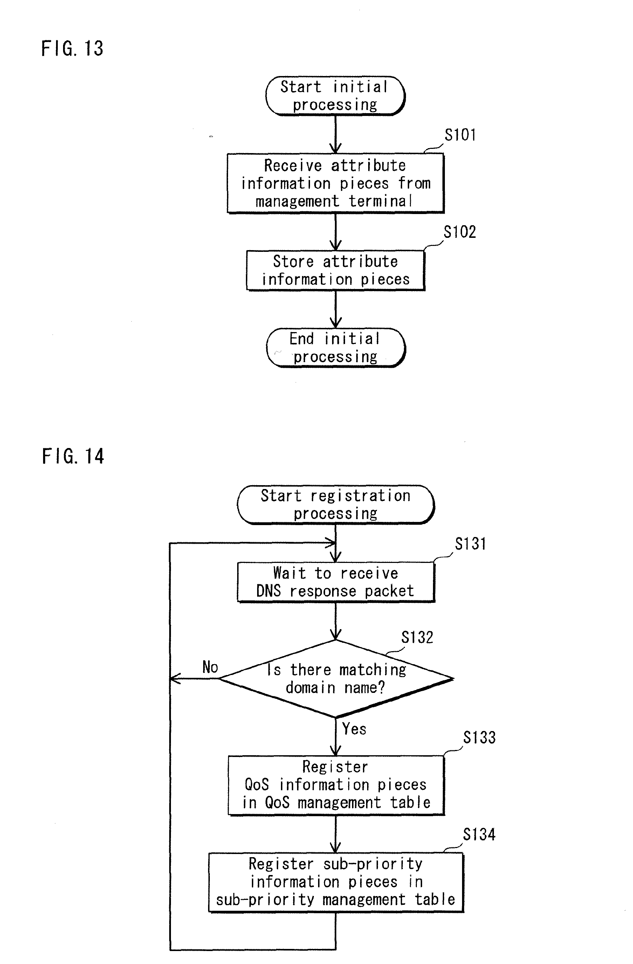

FIG. 13 is a flowchart of initial processing performed by CPU 32 provided in each of the PLC modems 11 through 14.

The reception processing unit 51 receives, from the management terminal 15, the attribute information pieces that serve as the standard of setting sub-priorities (Step S101). The sub-priority control unit 52 acknowledges that the attribute information pieces received by the reception processing unit 51 are charge information pieces, and stores the attribute information pieces into the memory 31. The sub-priority control unit 52 then creates the sub-priority management table 140 in which the source ID information, the charge information and the sub-priority are to be registered in correspondence with one another (Step S102). At the time of startup, none of the PLC modems 11 through 14 possesses a source ID information piece indicating a device that transmits a charged stream. Hence, at the time of startup, in the sub-priority management table 140 of each of the PLC modems 11 through 14, the source ID information 141 is set to "Other", the charge information 142 is set to "No charge", and the sub-priority 143 is set to "0".

As set forth above, by the management terminal 15 distributing the attribute information pieces to all of the PLC modems 11 through 14 in the PLC network 1, the PLC modems 11 through 14 can share the same standard of setting the sub-priorities, or collectively alter the standard of setting the sub-priorities.

Note, the attribute information pieces may be distributed, for example, at any of the following timings: (i) at the start-up of each PLC modem; (ii) at predetermined intervals after the start-up; (iii) when each PLC modem makes a request; and (iv) when a change request is made from outside.

### {Registration Processing}

FIG. 14 is a flowchart of registration processing performed by CPU 32 provided in each of the PLC modems 11 through 14.

Each of the PLC modems 11 through 14 relays, for example, a DNS (Domain Name System) request packet that stores a domain name and is transmitted by the device connected thereto, and transmits the DNS request packet to a DNS server. In response to this DNS request packet, the DNS server transmits a DNS response packet storing the domain name and the IP address corresponding to the domain name. Each of the PLC modems 11 through 14 waits to receive the DNS response packet from the DNS server (Step S131).

Upon receiving the DNS response packet, each of the PLC modems 11 through 14 relays the received DNS response packet. At this time, CPU 32 provided in each of the modems 11 through 14 (transmitter devices) refers to the service information table 110, so as to (i) compare the domain name stored in a payload of the DNS response packet with each of the domain names indicated by the DNS inquiry names (domain names) 111, and (ii) judge whether any of the domain names indicated by the DNS inquiry names 111 matches the domain name stored in the payload of the DNS response packet (Step S132). If CPU 32 judges in the negative (S132: NO), then processing moves to Step S131.

On the other hand, if CPU 32 judges in the affirmative (S132: YES), then CPU 32 stores, in the QoS management table 120, (i) the IP address stored in the payload of the DNS response packet into the source IP address 121, and (ii) the CSMA priority corresponding to the matching domain name into the CSMA priority 122 (Step S133). Also, the sub-priority control unit 52 of CPU 32 stores, in the sub-priority management table 140, (i) the matching domain name into the source ID information 141, (ii) the charge information piece corresponding to the matching domain name into the charge information 142, and (iii) a sub-priority determined according to the charge information 142 into the sub-priority 143 (Step S 134). Thereafter, processing of Step S 131 is performed. Note, CPU 32 determines the sub-priority to be "1" when the charge information 142 indicates "Charged", and "0" when the charge information 142 indicates "No charge".

The following describes a specific example.

The television 25 transmits, via STB 24, a DNS request packet storing the domain name of the AV server 23A that distributes a movie a viewer of the television 25 wishes to watch. The PLC modems 12 and 11 relay the DNS request packet, transmitting the same to the DNS server. The DNS server returns a DNS response packet storing the IP address corresponding to the domain name. When relaying the DNS response packet, the PLC modem 11 (transmitter device) compares the domain names contained in the service information table 110 with the domain name of the AV server 23A stored in the payload of the DNS response packet. As the service information table 110 contains a domain name that matches the domain name of the AV server 23A, the PLC modem 11 stores, in the QoS management table 120, (i) the IP address stored in the payload of the DNS response packet into the source IP address 121, and (ii) a CSMA priority "6" corresponding to the matching domain name into the CSMA priority 122. The PLC modem 11 also stores, in the sub-priority management table 140, (i) a domain name "AV server 23A" into the source ID information 141, (ii) a charge information piece "Charged" corresponding to the matching domain into the charge information 142, and (iii) a sub-priority "1" determined according to the charge information into the sub-priority 143.

The AV terminal 27 transmits a DNS request packet storing the domain name of the AV server 23B that distributes a movie a viewer of the AV terminal 27 wishes to watch. The PLC modems 14 and 11 relay the DNS request packet, transmitting the same to the DNS server. The DNS server returns a DNS response packet storing the IP address corresponding to the domain name. When relaying the DNS response packet, the PLC modem 11 (transmitter device) compares the domain names contained in the service information table 110 with the domain name of the AV server 23B stored in the payload of the DNS response packet. As the service information table 110 contains a domain name that matches the domain name of the AV server 23B, the PLC modem 11 stores, in the QoS management table 120, (i) the IP address stored in the payload of the DNS response packet into the source IP address 121, and (ii) a CSMA priority "6" corresponding to the matching domain name into the CSMA priority 122. The PLC modem 11 also stores, in the sub-priority management table 140, (i) a domain name "AV server 23B" into the source ID information 141, (ii) a charge information piece "Charged" corresponding to the matching domain name into the charge information 142, and (iii) a sub-priority "1" determined according to the charge information into the sub-priority 143.

It should be mentioned that each of the PLC modems 11 through 14 can only decode header information of data addressed to PLC modems other than itself. Accordingly, in a case where all of the PLC modems 11 through 14 should preferably share the same sub-priority management table 140, one of the following procedures may be performed: (i) every time each of the PLC modems 11 through 14 updates the sub-priority management table 140, it notifies details of the update to all of the PLC modems within the PLC network 1 other than itself; and (ii) each of the PLC modems 11 through 14 notifies contents of the sub-priority management table 140 to all of the PLC modems within the PLC network 1 other than itself at predetermined intervals.

As one example, the QoS management table 120 may be extended in such a manner that the QoS management table 120 and the sub-priority management table 140 are combined into one table.

### {Transmission Processing}

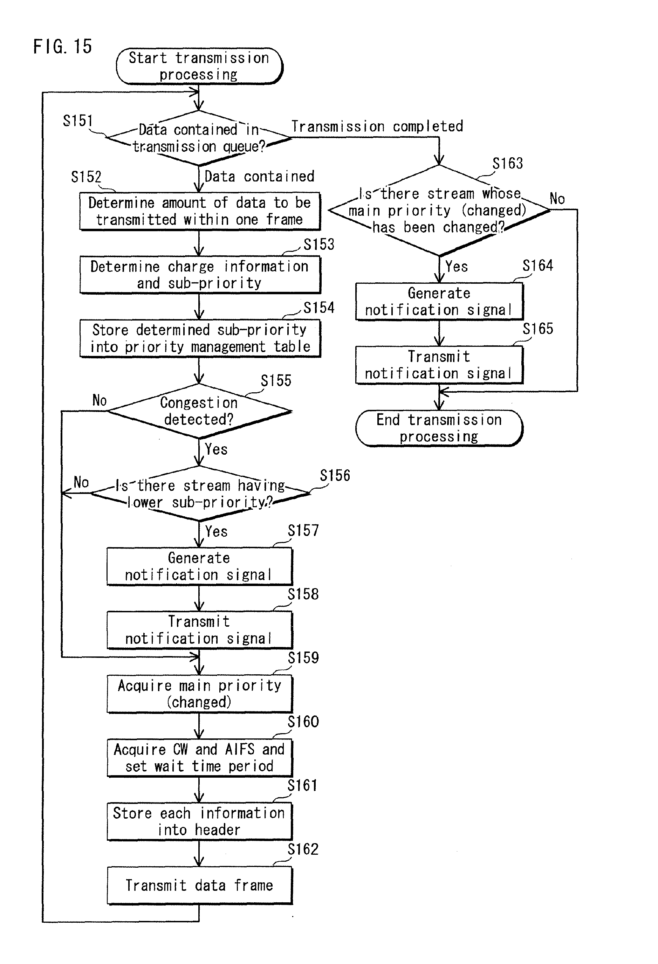

FIG. 15 is a flowchart of transmission processing performed by CPU 32 provided in each of the PLC modems 11 through 14.

The transmission processing unit 55 confirms whether the transmission queue provided therein contains any data (Step S151). Upon confirming that the transmission queue contains data (S151: Data contained), the transmission processing unit 55 determines the amount of data to be transmitted within one frame (Step S 152). Here, if the priority management table 150 does not contain stream information pieces of a stream relating to the data to be transmitted, the transmission processing unit 55 refers to the priority setting table 130 and determines a main priority according to the data type of this stream. Then, the transmission processing unit 55 stores, in the priority management table 150, (i) the stream ID of this stream into the stream ID 151, (ii) the address of the own device into the source PLC address 152, and (iii) the determined main priority into the main priority (original) 153 and the main priority (changed) 154. The main priority stored in the main priority (changed) 154 is changed as necessary in accordance with a notification signal.

As the attribute information pieces are charge information pieces, every time the own device attempts to transmit a frame, the sub-priority control unit 52 refers to the sub-priority management table 140 and determines a charge information piece and a sub-priority based on the source ID information piece corresponding to the data to be transmitted (Step S153). Then, the sub-priority control unit 52 stores, in the priority management table 150, the determined sub-priority into the sub-priority 155 corresponding to the stream relating to the data to be transmitted (Step S 154). In the aforementioned structure, sub-priorities are not set by servers but are determined by each of the PLC modems 11 through 14. Hence, the servers need not manage the sub-priorities.

The congestion detection unit 54 monitors the occurrence of congestion (Step S155). If the congestion is not detected (S155: NO), then processing of Step S159 is performed. On the other hand, if the congestion is detected (S155: YES), then processing of Step S156 is performed.

As a specific example, the following describes how the congestion detection unit 54 detects congestion. The congestion detection unit 54 monitors the occurrence of congestion in the transmission line by monitoring (i) whether the amount of data remaining in each transmission queue provided in the transmission processing unit 55 is larger than a threshold value, or (ii) whether overflow has occurred in each transmission queue. Upon detecting congestion in the transmission line, the congestion detection unit 54 notifies the sub-priority control unit 52 that the congestion has been detected. Here, congestion denotes a state in which the network fails to meet the requests of the end-terminals due to the amount of data flowing into the network exceeding the allowable amount set in the network. The allowable amount in the network depends upon, for example, processing capabilities of the terminals and a link band. The requests of the end-terminals include, for example, a delay request (e.g., a request for transmission/reception at 200 ms or slower), a request for prevention of data loss (e.g., a data loss rate of 10% or less), and a request for a guaranteed band.

The sub-priority control unit 52 refers to the priority management table 150, and searches for, from among streams transmitted by other PLC modems, a stream that has (i) the same main priority (original) as the stream relating to data to be transmitted by the own device, and (ii) a lower sub-priority than this stream. In this manner, the sub-priority control unit 52 judges whether or not such a stream exists (Step S156). If the sub-priority unit 52 judges in the negative (S156: NO), then processing of Step S159 is performed without transmitting a notification signal. On the other hand, if the sub-priority control unit 52 judges in the affirmative (S 156: YES), then processing of Step S 157 is performed.

The notification signal generation unit 53 generates a notification signal and outputs the notification signal to the transmission processing unit 55 (Step S157). The transmission processing unit 55 transmits the notification signal input from the notification signal generation unit 53 (Step S158). Thereafter, processing of Step S159 is performed.

In Step S 157, the notification signal generation unit 53 refers to the priority management table 150, and sets the destination PLC address 231 to the address stored in the source PLC address 152 corresponding to the stream that has been found as a result of the search conducted in Step S156 (namely, the stream that has the same main priority (original) as and a lower sub-priority than the stream relating to data to be transmitted by the own device). The notification signal generation unit 53 also sets the source PLC address 232 and the control type 233 of the notification signal respectively to the address of the own device and one of parameter values "0", "1" and "2". When setting the control type 233 to a parameter value "0", the notification signal generation unit 53 sets the control value 234 directly to the main priority (changed) to which the PLC modem receiving the notification signal should change a certain main priority. When setting the control type 233 to a parameter value "1", the notification signal generation unit 53 sets the control value 234 to a value by which the PLC modem receiving the notification signal should lower the certain priority. The notification signal generation unit 53 also sets the main priority (original) 235 and the sub-priority 236 of the notification signal respectively to the main priority (original) and the sub-priority of the stream relating to data to be transmitted by the own device.

A parameter value to which the control type 233 or the control value 234 is set may be determined, for example, as follows.

The notification signal generation unit 53 determines that the control type 233 should be set to a parameter value "2" in a case where the data loss rate that the own device has suffered has exceeded a predetermined value. In other cases, the notification signal generation unit 53 arbitrarily sets the control type 233 to a parameter value "0" or "1".

When determining that the control type 233 should be set to a parameter value "0", the notification signal generation unit 53 has pre-stored therein the following (i) in one-to-one correspondence with the following (ii): (i) a plurality of sections divided by a plurality of threshold values, each section including a different one of ranges of data loss rates; and (ii) main priorities (changed) to one of which the receiver PLC modem should change a certain main priority. The notification signal generation unit 53 searches for one of the sections including the data loss rate that the own device has suffered, and determines that the control value 234 should be set to the main priority (changed) corresponding to the searched one of the sections.

When determining that the control type 233 should be set to a parameter value "1", the notification signal generation unit 53 has pre-stored therein the following (i) in one-to-one correspondence with the following (ii): (i) a plurality of sections divided by a plurality of threshold values, each section including a different one of ranges of data loss rates; and (ii) values by one of which the receiver PLC modem should lower a certain main priority (changed). The notification signal generation unit 53 searches for one of the sections including the data loss rate that the own device has suffered, and determines that the control value 234 should be set to the value corresponding to the searched one of the sections.

In the above manner, upon detecting congestion, each PLC modem can control changes to be made to main priorities (changed) assigned to the streams transmitted by other PLC modems, depending on the degree of congestion.

The above-described determination method is merely an example, and the present embodiment is not limited to this.

The transmission processing unit 55 acquires, from the priority management table 150, the main priority (changed) of the stream relating to data to be transmitted by the own device (Step S159). The transmission processing unit 55 also acquires, from the priority setting table 130, CW and AIFS corresponding to the main priority (changed) acquired in Step S159. By using the acquired CW and AIFS, the transmission processing unit 55 then calculates and sets a wait time period for which the own device must wait to be able to start transmission (Step S160).

When the wait time period has elapsed, the transmission processing unit 55 stores each information into the frame header of the data frame (Step S161), and transmits the data frame (Step S162). Thereafter, processing of Step S151 is performed.

In Step S161, the transmission processing unit 55 sets, in the data frame, (i) the destination PLC address 211 to the address of the receiver PLC modem, (ii) the source PLC address 212 to the address of the own device, and (iii) the stream ID 213 to the stream ID of the stream relating to the data to be transmitted by the own device. The transmission processing unit 55 refers to the priority management table 150, and sets the main priority (original) 214, the main priority (changed) 215 and the sub-priority 216 of the data frame respectively to the main priority (original), the main priority (changed) and the sub-priority of the stream relating to the data to be transmitted by the own device. The transmission processing unit 55 further sets the attribute information 217 of the data frame to the attribute information piece associated with the stream relating to the data to be transmitted by the own device.

As stated earlier, if the transmission processing unit 55 confirms that the transmission queue contains data in Step S151, then the processing of Steps S152 to S162 is subsequently performed. Then, after processing moves back to Step S151, if the transmission processing unit 55 confirms that the transmission queue no longer contains any data, i.e., the transmission has been completed (S151: Transmission completed), then the sub-priority control unit 52 refers to the priority management table 150 and judges whether the priority management table 150 contains any stream whose main priority (original) and main priority (changed) are different from each other as the own terminal has changed this main priority (changed) (Step S163). If the sub-priority control unit 52 judges in the negative (S163: NO), then CPU 32 ends the transmission processing. On the other hand, when the sub-priority control unit 52 judges in the affirmative (S163: YES), then the notification signal generation unit 53 generates a notification signal and outputs the notification signal to the transmission processing unit 55 (Step S164). The transmission processing unit 55 transmits the notification signal input from the notification signal generation unit 53 (Step S165), and CPU 32 ends the transmission processing.

In Step S164, the notification signal generation unit 53 refers to the priority management table 150 and sets the destination PLC address 231 of the notification signal to the address stored in the source PLC address 152 corresponding to the stream whose main priority (changed) has been updated. The notification signal generation unit 53 also sets the source PLC address 232 and the control type 233 of the notification signal to the address of the own device and a parameter value "3", respectively. The notification signal generation unit 53 may set the control value 234, the main priority (original) 235 and the sub-priority 236 of the notification signal to, for example, an arbitrary value.

### {Reception Processing}

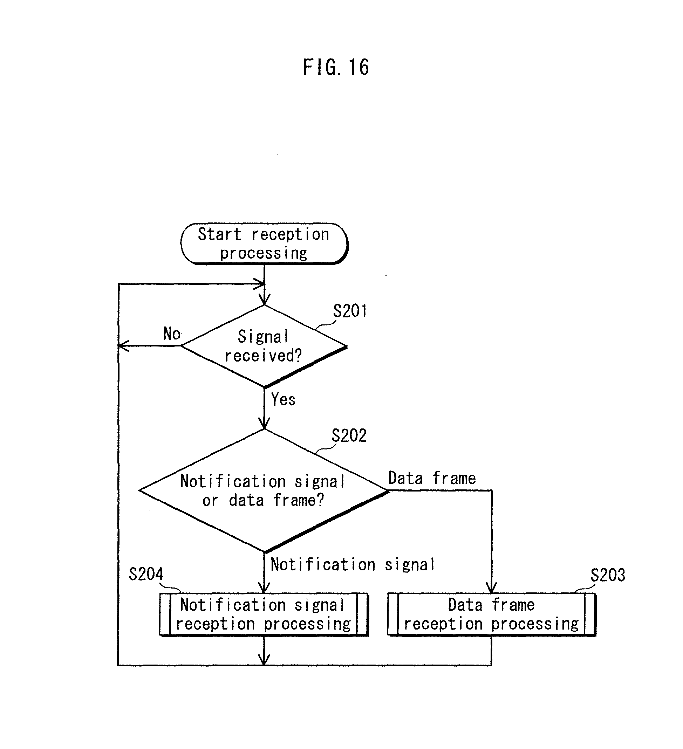

FIG. 16 is a flowchart of reception processing performed by CPU 32 provided in each of the PLC modems 11 through 14.

The reception processing unit 51 judges whether a signal has been received (Step S201). The processing of Step S201 is repeatedly performed until a signal is received (S201: NO). Once a signal has been received (S201: YES), the reception processing unit 51 judges whether the received signal is a notification signal or a data frame (Step S202). If the received signal is a data frame (S202: Data frame), then CPU 32 performs data frame reception processing (Step S203). On the other hand, if the received signal is a notification signal (S202: Notification signal), then CPU 32 performs notification signal reception processing (Step S204).

### (Data Frame Reception Processing)

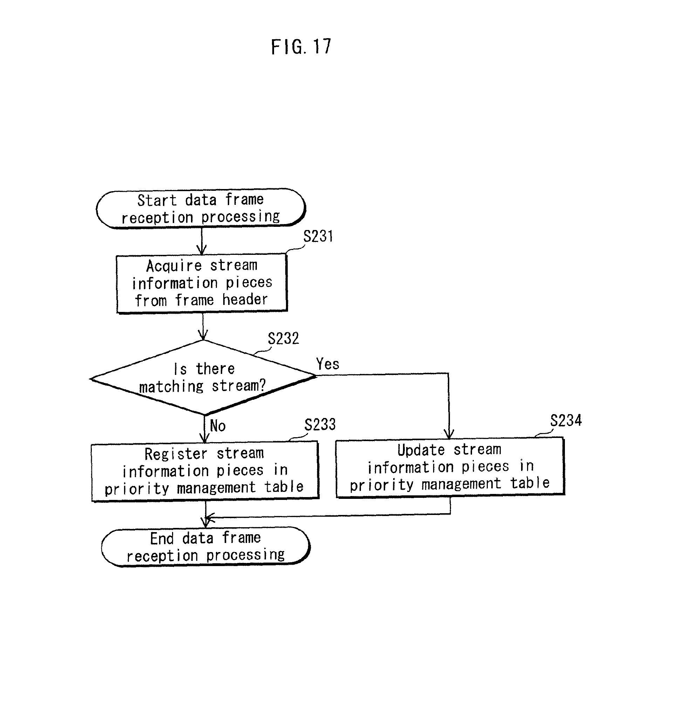

FIG. 17 is a flowchart of the data frame reception processing (Step S203) shown in FIG. 16.

The reception processing unit 51 extracts a frame header from the received data frame, and outputs the extracted frame header to the sub-priority control unit 52. The sub-priority control unit 52 acquires, from the frame header input from the reception processing unit 51, the stream ID, the source PLC address, the main priority (original), the main priority (changed), and the sub-priority (Step S231).

The sub-priority control unit 52 searches the priority management table 150 for a stream whose stream ID matches the acquired stream ID (Step S232).

If the priority management table 150 does not contain such a matching stream (S232: NO), then the sub-priority control unit 52 newly registers the contents acquired from the frame header, namely the stream ID, the source PLC address, the main priority (original), the main priority (changed) and the sub-priority, into the stream ID 151, the source PLC address 152, the main priority (original) 153, the main priority (changed) 154 and the sub-priority 155 of the priority management table 150, respectively (Step S233).

On the other hand, if the priority management table 150 does contain such a matching stream (S232: YES), then the sub-priority control unit 52 updates the priority management table 150 by updating the main priority (changed) 154 and the sub-priority 155 corresponding to the matching stream to the main priority (changed) and the sub-priority acquired from the frame header, respectively (Step S234).

### (Notification Signal Reception Processing)

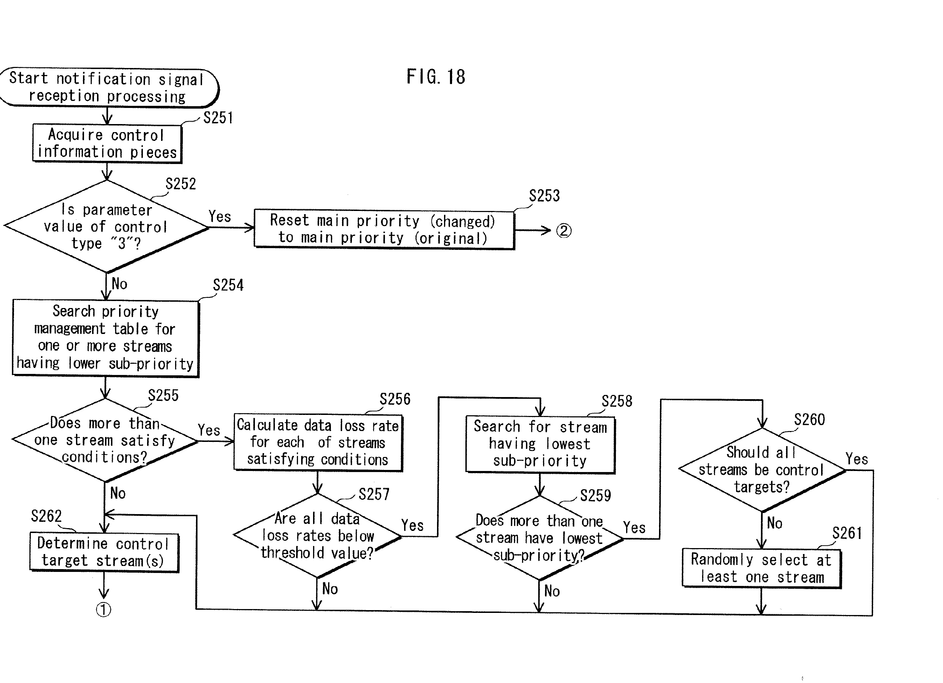

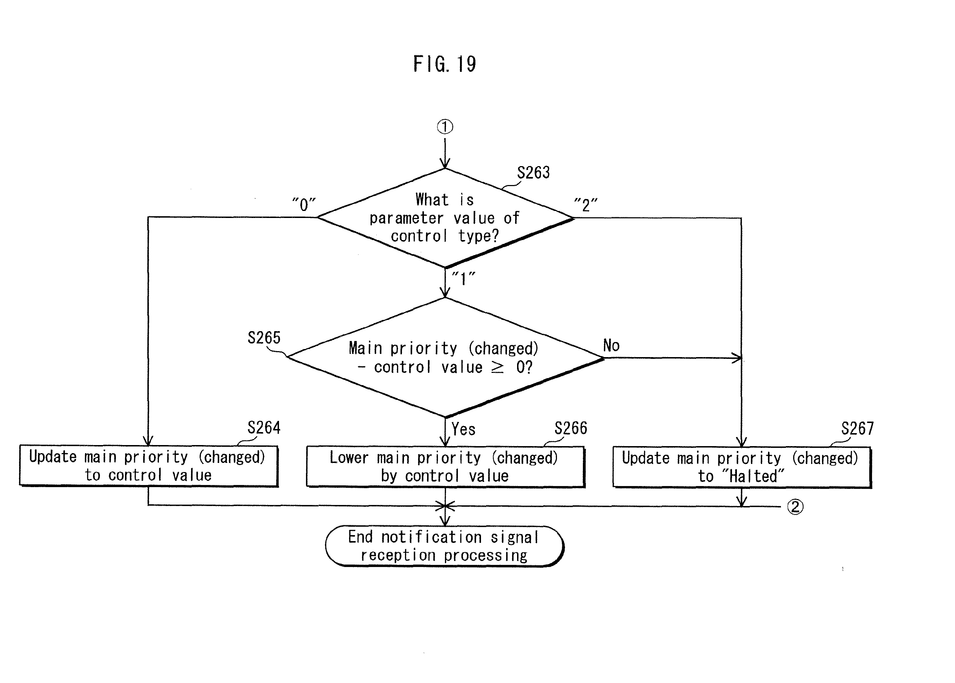

FIGs. 18 and 19 are flowcharts of the notification signal reception processing (Step S204) shown in FIG. 16.

The reception processing unit 51 outputs the received notification signal to the sub-priority control unit 52. The sub-priority control unit 52 acquires, from the notification signal input from the reception processing unit 51, the control type, the control value, the main priority (original) and the sub-priority (Step S251).

The sub-priority control unit 52 checks a parameter value indicated by the control type 233 acquired in Step S251, and judges whether this parameter value is "3" (Step S252).

If the parameter value is "3" (S252: YES), then the sub-priority control unit 52 updates the priority management table 150 by resetting each of the main priorities (changed) 154 corresponding to the streams transmitted by the own device (i.e., all the streams whose source PLC addresses 152 hold the address of the own device) to the value indicated by the corresponding main priority (original) 153 (Step S253).

If the parameter value indicates a value other than "3" (S252: NO), then the sub-priority control unit 52 refers to the priority management table 150 and searches for, from among the streams transmitted by the own device, one or more streams that satisfy the following conditions: (i) their main priorities (original) are the same as the main priority (original) acquired in Step S251; and (ii) their sub-priorities are lower than the sub-priorities acquired in Step S251 (Step S254).

The sub-priority control unit 52 judges whether the priority management table 150 contains more than one stream that satisfies the above conditions (Step S255). If the sub-priority control unit 52 judges in the affirmative (S255: YES), then processing of Step S256 is performed. On the other hand, if the sub-priority control unit judges in the negative (S255: NO), then it determines the stream that satisfies the above conditions as a stream whose main priority (changed) needs to be changed (hereinafter, "control target stream") (Step S262).

The sub-priority control unit 52 (i) calculates, for each of the streams that satisfy the above conditions, a data loss rate that the stream has suffered (Step S256), and (ii) after comparing the data loss rates of the streams with a predetermined threshold value, judges whether the data loss rates of all of the streams are below the threshold value (Step S257). If the data loss rates of all of the streams are below the threshold value (S257: YES), then processing of Step S258 is performed. On the other hand, if the data loss rate of at least one of the streams exceeds the threshold value (S257: NO), then the sub-priority control unit 52 determines the at least one of the streams as the control target stream (Step S262).

Although the judgment of Step S257 is made based on the data loss rates, the present embodiment is not limited to this. This judgment may instead be made based on a value that serves as an indicator showing the degree of congestion. For example, this judgment may be made based on a data length of data remaining in the transmission queue.

The sub-priority control unit 52 searches for, from among the streams that satisfy the above conditions, a stream whose sub-priority is lower than a sub-priority of any other stream (Step S258). If more than one stream has the lowest sub-priority (S259: YES), then processing of Step S260 is performed. On the other hand, if only one of the streams has the lowest sub-priority (S259: NO), then the sub-priority control unit 52 determines this stream having the lowest sub-priority, which is found as a result of the search conducted in Step S258, as the control target stream (Step S262).

The sub-priority control unit 52 judges whether the main priorities (changed) of all of the more than one stream that has the lowest sub-priority should be changed (Step S260). If the sub-priority control unit 52 judges that the main priorities (changed) of all of the more than one stream should be changed (S260: YES), then it determines all of the more than one stream that has the lowest sub-priority as the control target streams (Step S262). On the other hand, if the sub-priority control unit 52 judges that the main priority (changed) of only a part of the more than one stream should be changed (S260: NO), then it randomly selects at least one stream from among the more than one stream that has the lowest sub-priority (Step S261), and determines the at least one stream selected in Step S261 as the control target stream (Step S262).

The judgment of Step S260 may be made, for example, as follows. When each PLC modem is installed, the following information may be pre-registered in each PLC modem: information indicating whether the main priorities (changed) of all of more than one stream that has the lowest sub-priority should be changed, or the main priority (changed) of only a part of more than one stream that has the lowest sub-priority should be changed. The sub-priority control unit 52 conducts the judgment of Step S260 by referring to the aforementioned pre-registered information.

Also, the number of streams selected in Step S261 may be determined, for example, as follows. When each PLC modem is installed, the maximum number of streams to be selected in Step S261 is pre-registered in each PLC modem. The sub-priority control unit 52 generates a random number that is (i) equal to or smaller than the maximum number and (ii) smaller than the number of streams found as a result of the search conducted in Step S258. The sub-priority control unit 52 then deems the generated random number the number of streams to be selected in Step S261. Alternatively, the number of streams to be selected in Step S261 may be a fixed value, such as "1".

The above two methods to determine the number of streams to be selected are merely examples. The present embodiment is not limited to these.

The sub-priority control unit 52 checks a parameter value indicated by the control type 233 acquired in Step S251, and judges which one of "0", "1" and "2" this parameter value is (Step S263).

If the parameter value is "0" (S263: "0"), then the sub-priority control unit 52 updates the priority management table 150 by updating the main priority (changed) corresponding to the control target stream to the control value acquired in Step S251 (Step S264).

If the parameter value is "1" (S263: "1"), then the sub-priority control unit 52 judges whether a value obtained by lowering the main priority (changed) corresponding to the control target stream, which is contained in the priority management table 150, by the control value acquired in Step S251 is equal to or larger than "0" (Step S265). For a control target stream whose main priority (changed) becomes equal to or larger than "0" after getting thus lowered, (S265: YES), the sub-priority control unit 52 updates the priority management table 150 by lowing the main priority (changed) corresponding to the control target stream by the control value (Step S266). On the other hand, for a control target stream whose main priority (changed) does not become equal to or larger than "0" after getting thus lowered (S265: NO), the sub-priority control unit 52 updates the priority management table 150 by updating the main priority (changed) corresponding to the control target stream to "Halted" (Step S267).

When the parameter value is "2" (S263: "2"), then the sub-priority control unit 52 updates the priority management table 150 by updating the main priority (changed) corresponding to the control target stream to "Halted" (S267).

### <Specific Examples of Operations of PLC Modems>

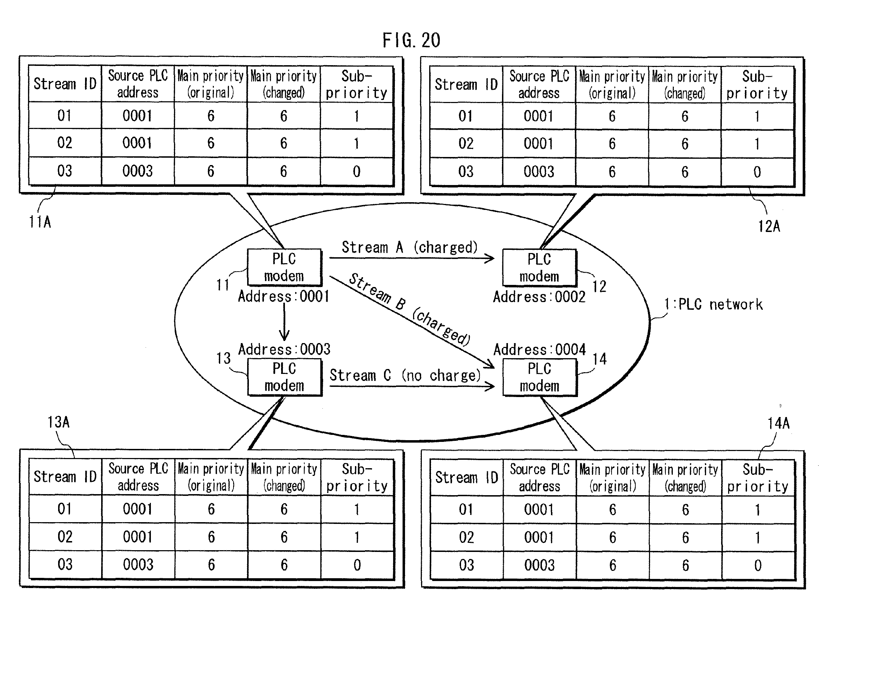

With reference to FIGs. 20 to 24, the following describes operations performed by the PLC modems 11 through 14 in a case where, after three streams of the same main priority (Stream A (charged), Stream B (charged), and Stream C (no charge)) have been carried through the PLC network 1 without incurring any data loss, it has become no longer possible to distribute the three streams without any of them incurring data loss due to reduction in the transmission band in the PLC network 1. The following description will be given under the assumption that in each of the PLC modems 11 through 14, the sub-priority management table 140 is stored into the memory 31 by CPU 32 executing the above-described initial processing and registration processing.

FIG. 20 is a diagram illustrating specific examples of operations of the PLC modems, or more specifically, operations performed by the PLC modems 11 through 14 when stream distribution is started in the PLC network 1. Each of 11A through 14A shown in FIG. 20 is the priority management table that has been explained with reference to FIG. 9.

The priority management table 11A of the PLC modem 11 is created as follows.

When transmitting data of Stream A (charged) by performing the above-described transmission processing, CPU 32 performs the following operations: (i) if the priority management table 11A does not contain stream information pieces of Stream A (charged), newly register the stream information pieces of Stream A (charged) in the priority management table 11A, and (ii) if the priority management table 11A does contain the stream information pieces of Stream A (charged), only update the sub-priority of Stream A (charged). Consequently, the stream information pieces of Stream A (charged) are stored in the priority management table 11A as follows: the stream ID 151 is set to the stream ID of Stream A (charged) ("01"); the source PLC address 152 is set to the address of the PLC modem 11 ("0001"); the main priority (original) 153 is set to the main priority assigned to stream distribution ("6"); the main priority (changed) 154 is set to the same value as the main priority (original) 153 ("6"); and the sub-priority 155 is set to "1" assigned to a charged stream.

When transmitting data of Stream B (charged) by performing the above-described transmission processing, CPU 32 performs the following operations: (i) if the priority management table 11A does not contain stream information pieces of Stream B (charged), newly register the stream information pieces of Stream B (charged) in the priority management table 11A, and (ii) if the priority management table 11A does contain the stream information pieces of Stream B (charged), only update the sub-priority of Stream B (charged). Consequently, the stream information pieces of Stream B (charged) are stored in the priority management table 11A as follows: the stream ID 151 is set to the stream ID of Stream B (charged) ("02"); the source PLC address 152 is set to the address of the PLC modem 11 ("0001"); the main priority (original) 153 is set to the main priority assigned to stream distribution ("6"); the main priority (changed) 154 is set to the same value as the main priority (original) 153 ("6"); and the sub-priority 155 is set to "1" assigned to a charged stream.

By performing the above-described reception processing and data frame reception processing, CPU 32 extracts a data frame of Stream C (no charge) carried through the PLC network 1, and stores stream information pieces of Stream C (no charge) into the priority management table 11A as follows: the stream ID 151 is set to the stream ID of Stream C (no charge) ("03"); the source PLC address 152 is set to the address of the PLC modem 13 ("0003"); the main priority (original) 153 is set to the main priority assigned to stream distribution ("6"); the main priority (changed) 154 is set to the same value as the main priority (original) 153 ("6"); and the sub-priority 155 is set to "0" assigned to a stream of no charge.

The priority management table 12A of the PLC modem 12 is created as follows.

By performing the above-described reception processing and data frame reception processing, CPU 32 extracts data frames of Stream A (charged), Stream B (charged) and Stream C (no charge) carried through the PLC network 1. CPU 32 then stores stream information pieces of Stream A (charged), Stream B (charged) and Stream C (no charge) into the priority management table 12A.

The priority management table 13A of the PLC modem 13 is created as follows.

When transmitting data of Stream C (no charge) by performing the above-described transmission processing, CPU 32 performs the following operations: (i) if the priority management table 13A does not contain stream information pieces of Stream C (no charge), newly register the stream information pieces of Stream C (no charge) in the priority management table 13A, and (ii) if the priority management table 13A does contain the stream information pieces of Stream C (no charge), only update the sub-priority of Stream C (no charge). Consequently, the stream information pieces of Stream C (no charge) are stored in the priority management table 13A as follows: the stream ID 151 is set to the stream ID of Stream C (no charge) ("03"); the source PLC address 152 is set to the address of the PLC modem 13 ("0003"); the main priority (original) 153 is set to the main priority assigned to stream distribution ("6"); the main priority (changed) 154 is set to the same value as the main priority (original) 153 ("6"); and the sub-priority 155 is set to "0" assigned to a stream of no charge.

By performing the above-described reception processing and data frame reception processing, CPU 32 extracts data frames of Stream A (charged) and Stream B (charged) carried through the PLC network 1, and stores stream information pieces of Stream A (charged) and Stream B (charged) into the priority management table 13A.

The priority management table 14A of the PLC modem 14 is created as follows.

By performing the above-described reception processing and data frame reception processing, CPU 32 extracts data frames of Stream A (charged), Stream B (charged) and Stream C (no charge) carried through the PLC network 1, and stores stream information pieces of Stream A (charged), Stream B (charged) and Stream C (no charge) into the priority management table 14A.

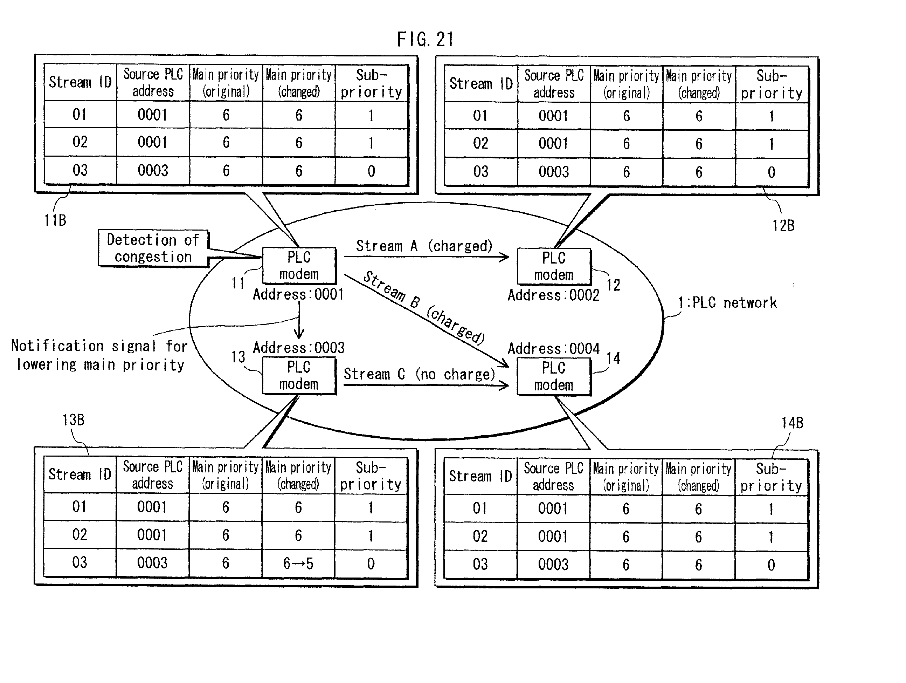

FIG. 21 is a diagram illustrating specific examples of operations of the PLC modems, or more specifically, operations performed by the PLC modems 11 through 14 when the PLC modem 11 detects congestion in the PLC network 1. Each of 11B through 14B shown in FIG. 21 is the priority management table that has been explained with reference to FIG. 9.

The PLC modem 11 distributes Stream A (charged) and Stream B (charged). Upon transmitting, for example, data of Stream A (charged) by performing the above-described transmission processing, CPU 32 of the PLC modem 11 detects congestion. Here, if nothing is done, the main priorities of Stream A (charged), Stream B (charged) and Stream C (no charge) will remain the same as one another. In such a situation, if the transmission band is reduced, it will be impossible to guarantee loss-free communication for all of Stream A (charged), Stream B (charged) and Stream C (no charge).

CPU 32 of the PLC modem 11 refers to the priority management table 11B and searches for, from among streams transmitted by other PLC modems, a stream that has (i) the same main priority (original) as Stream A (charged) and (ii) a lower sub-priority than Stream A (charged). As a result, CPU 32 of the PLC modem 11 finds Stream C (no charge) transmitted by the PLC modem 13. Then, CPU 32 of the PLC modem 11 generates a notification signal that contains (i) the destination PLC address 231 set to the address of the PLC modem 13 ("0003"), (ii) the source PLC address 232 set to the address of the PLC modem 11 ("0001"), (iii) the control type 233 set to "1", (iv) the control value 234 set to "1", (v) the main priority (original) 235 set to the main priority (original) of Stream A (charged) ("6"), and (vi) the sub-priority 236 set to the sub-priority of Stream A (charged) ("1"). CPU 32 of the PLC modem 11 then transmits the generated notification signal. Note, the above values to which the control type 233 and the control value 234 are set are merely examples.

By performing the above-described reception processing and notification signal reception processing, CPU 32 of the PLC modem 13 extracts the notification signal transmitted by the PLC modem 11 through the PLC network 1. In accordance with the contents of the notification signal, CPU 32 of the PLC modem 13 updates the priority management table 13B by updating the value indicated by the main priority (changed) 154 of Stream C (no charge) from "6" to "5".

As this notification signal transmitted by the PLC modem 11 is not addressed to the PLC modems 12 and 14, neither of them updates the priority management table (12B or 14B) in response to this notification signal.

As set forth above, from among the streams relating to a plurality of data having the same data type (i.e., the same main priority (original)), a stream with a low sub-priority is selected, and the main priority (changed) of the selected stream is lowered. The above method reduces the probability that the PLC modem transmitting the selected stream can transmit data relating thereto, but relatively increases the probability that the PLC modem transmitting a stream with a high sub-priority can transmit data relating thereto. As a result, the data relating to such a stream with a high sub-priority can be exchanged without suffering data loss.

Also, the above method lowers the main priority (changed) of a stream with a low sub-priority to the extent that the data relating to a stream with a high sub-priority can be exchanged without suffering data loss. In other words, while exchange of a stream with a high sub-priority can be guaranteed, exchange of a stream with a low sub-priority can also be continued by using a vacant transmission band that does not affect the exchange of the stream with a high sub-priority.

Furthermore, in a case where congestion cannot be resolved even by lowering the main priority (changed) of a stream with a low sub-priority, the main priority (changed) of such a stream with a low sub-priority can further be lowered by transmitting an additional notification signal. This further increases the probability that the PLC modem transmitting a stream with a high sub-priority can transmit data relating thereto, with the result that exchange of such a stream with a high sub-priority is guaranteed.

Also, by transmitting a notification signal that contains a control type 233 set to a parameter value "2", transmission of a stream with a low sub-priority can be halted. This further increases the probability that the PLC modem transmitting a stream with a high sub-priority can transmit data relating thereto, with the result that exchange of such a stream with a high sub-priority is guaranteed.

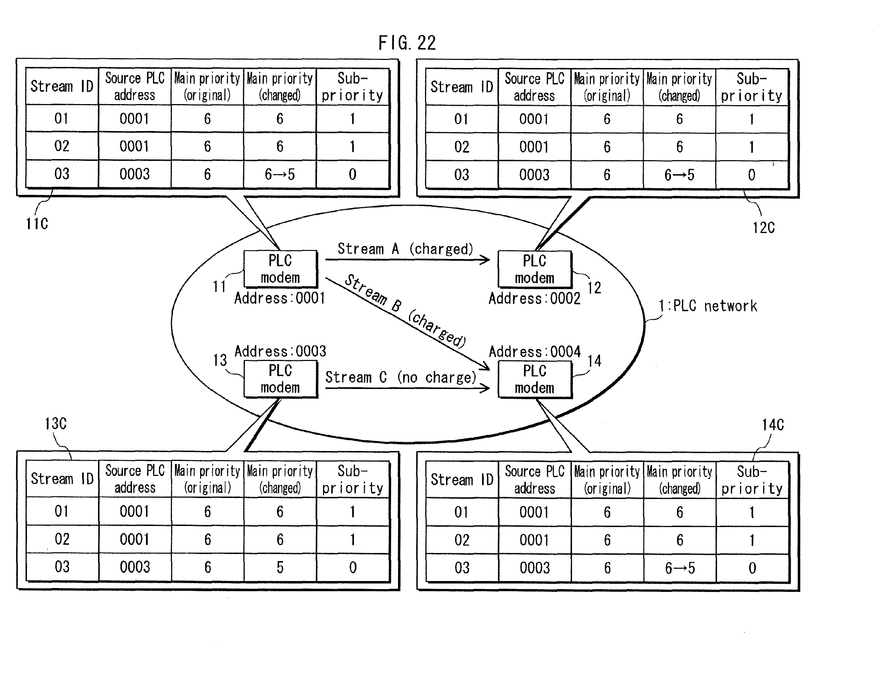

FIG. 22 is a diagram illustrating specific examples of operations of the PLC modems, or more specifically, operations performed by the PLC modems 11 through 14 after the PLC modem 13 has changed the main priority (changed) of Stream C (no charge). Each of 11C through 14C shown in FIG. 21 is the priority management table that has been explained with reference to FIG. 9.

By performing the above-described transmission processing, CPU 32 of the PLC modem 13 generates a data frame that contains (i) the destination PLC address 211 set to the address of the PLC modem 14 ("0004"), (ii) the source PLC address 212 set to the address of the PLC modem 13 ("0003"), (iii) the stream ID 213 set to the stream ID of Stream C (no charge) ("03"), (iv) the main priority (original) 214 set to the main priority (original) of Stream C (no charge) ("6"), (v) the main priority (changed) 215 set to the main priority (changed) of Stream C (no charge) ("5"), (vi) the sub-priority 216 set to the sub-priority of Stream C (no charge) ("0"), and (vii) the attribute information 217 set to the attribute information piece associated with Stream C (no charge). Then, CPU 32 of the PLC modem 13 transmits the generated data frame.

By performing the above-described reception processing and data frame reception processing, CPU 32 of each of the PLC modems 11, 12 and 14 extracts the data frame of Stream C (no charge), which has been transmitted by the PLC modem 13 through the PLC network 1. Then, in accordance with the contents of a frame header of the extracted data frame, CPU 32 of each of the PLC modems 11, 12 and 14 updates the priority management table (11C, 12C or 14C) by updating the value indicated by the main priority (changed) 154 of Stream C (no charge) from "6" to "5" which is shown by the main priority (changed) 215 of the frame header.

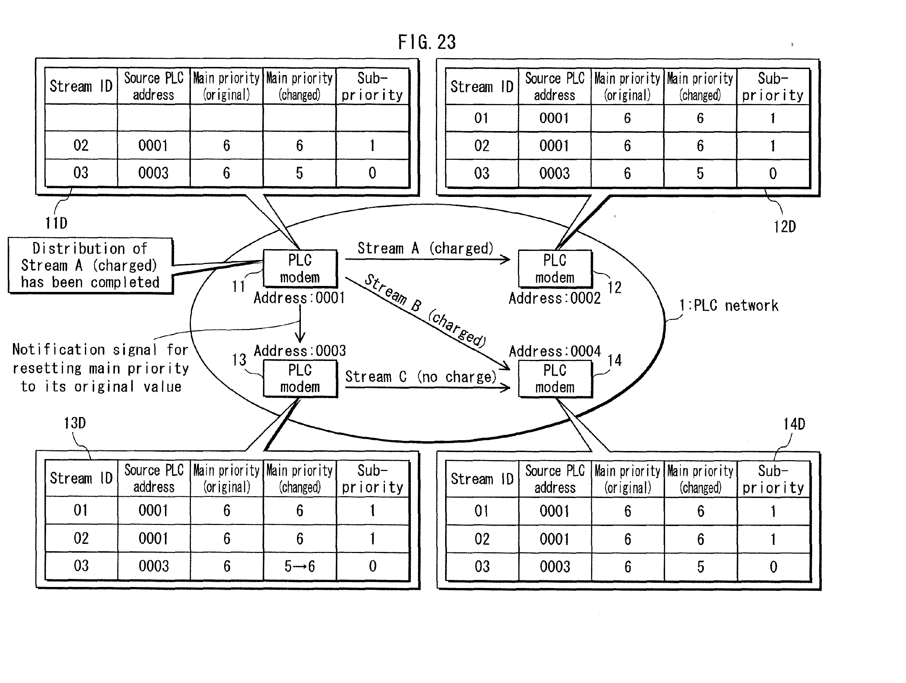

FIG. 23 is a diagram illustrating specific examples of operations of the PLC modems, or more specifically, operations performed by the PLC modems 11 through 14 when the PLC modem 11 has completed distribution of Stream A (charged). Each of 11D through 14D shown in FIG. 23 is the priority management table that has been explained with reference to FIG. 9.

When CPU 32 of the PLC modem 11 has completed distribution of Stream A (charged) while performing the above-described transmission processing, CPU 32 of the PLC modem 11 generates a notification signal that contains (i) the destination PLC address 231 set to the address of the PLC modem 13 ("0003"), (ii) the source PLC address 232 set to the address of the PLC modem 11 ("0001"), and (iii) the control type 233 set to "3". CPU 32 of the PLC modem 11 then transmits the generated notification signal.

By performing the above-described reception processing and notification signal reception processing, the PLC modem 13 extracts the notification signal that has been transmitted by the PLC modem 11 through the PLC network 1. In accordance with the contents of this notification signal, the PLC modem 13 updates the priority management table 13D by resetting the main priority (changed) 154 corresponding to Stream C (no charge) from "5" to "6" which is the value indicated by the main priority (original) 153.

As this notification signal transmitted by the PLC modem 11 is not addressed to the PLC modems 12 and 14, neither of them updates the priority management table (12D or 14D) in response to this notification signal.

As set forth above, the PLC modem 11 transmits, to the PLC modem 13, a notification signal that contains the control type 233 set to a parameter value "3". This way, even if the PLC modem 13 has once lowered the main priority (changed) of a low sub-priority stream that is transmitted by the own device, the PLC modem 13 can later reset the main priority (changed) of such a low sub-priority stream to a value originally indicated thereby. Accordingly, exchange of such a low sub-priority stream can be recovered and guaranteed.

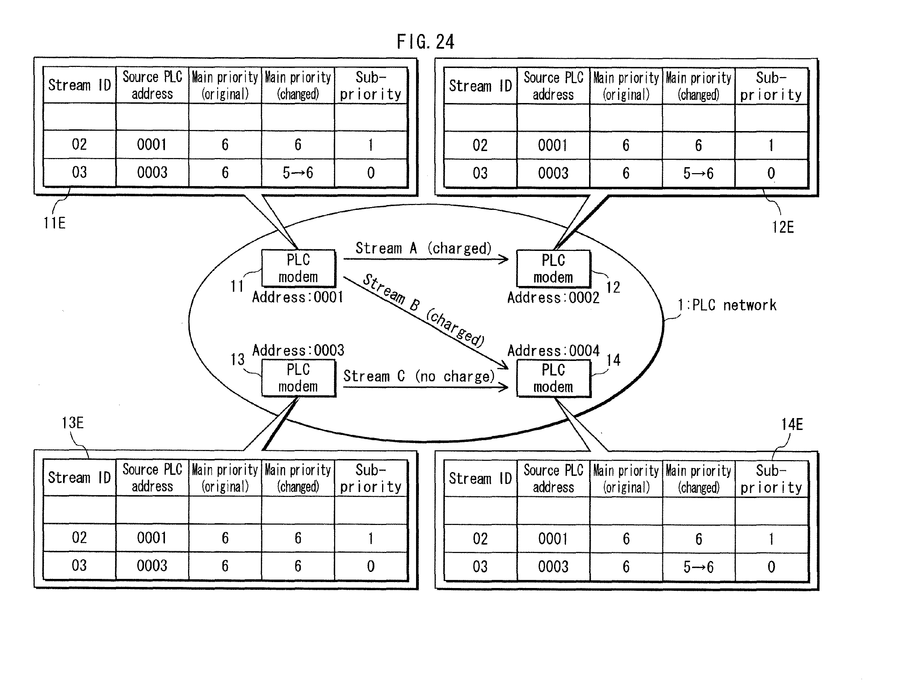

FIG. 24 is a diagram illustrating specific examples of operations of the PLC modems, or more specifically, operations performed by the PLC modems 11 through 14 after the PLC modem 13 has reset the main priority (changed) of Stream C (no charge) to a value originally indicated thereby. Each of 11E through 14E shown in FIG. 24 is the priority management table that has been explained with reference to FIG. 9.

By performing the above-described transmission processing, CPU 32 of the PLC modem 13 generates a data frame that contains (i) the destination PLC address 211 set to the address of the PLC modem 14 ("0004"), (ii) the source PLC address 212 set to the address of the PLC modem 13 ("0003"), (iii) the stream ID 213 set to the stream ID of Stream C (no charge) ("03"), (iv) the main priority (original) 214 set to the main priority (original) of Stream C (no charge) ("6"), (v) the main priority (changed) 215 set to the main priority (changed) of Stream C (no charge) ("6"), (vi) the sub-priority 216 set to the sub-priority of Stream C (no charge) ("0"), and (vii) the attribute information 217 set to the attribute information piece associated with Stream C (no charge). CPU 32 of the PLC modem 13 then transmits the generated data frame.

By performing the above-described reception processing and data frame reception processing, CPU 32 of each of the PLC modems 11, 12 and 14 extracts the data frame of Stream C (no charge), which has been transmitted by the PLC modem 13 through the PLC network 1. Then, in accordance with the contents of a frame header of the extracted data frame, CPU 32 of each of the PLC modem 11, 12 and 14 updates the priority management table 11E, 12E or 14E by updating the value indicated by the main priority (changed) 154 corresponding to Stream C (no charge) from "5" to "6" which is indicated by the main priority (changed) 215 contained in the data frame.

In the present embodiment, the attribute information pieces have been explained as indicating data types. The present embodiment, however, is not limited to this. For example, the attribute information pieces may indicate PHY rates. In this case, the sub-priority control unit 52 may set a sub-priority in such a manner that the sub-priority is higher as the corresponding PHY rate is higher. Alternatively, each attribute information piece may indicate a transmission duration required for each unit of data transmission. In this case, the sub-priority control unit 52 may set a sub-priority in such a manner that the sub-priority is higher as the corresponding total transmission duration is shorter, the total transmission duration being a sum of transmission durations required to transmit-frames within a predetermined time period. Alternatively, each attribute information piece may indicate the amount of remaining data associated with the corresponding stream. In this case, the sub-priority control unit 52 may set a sub-priority in such a manner that the sub-priority is higher as the amount of remaining data associated with the corresponding stream is smaller. At this time, a PLC modem that transmits a data frame stores, into a frame header of the data frame, the amount of remaining data of the corresponding stream to be transmitted.

Also, when a reception queue is provided in the reception processing unit 51, the congestion detection unit 54 may monitor the reception queue to detect congestion.

### <<Embodiment 2>>

The following describes Embodiment 2 of the present invention with reference to the accompanying drawings. Constituent elements and processing steps of Embodiment 2 that are substantially the same as those of Embodiment 1 are given the same reference numbers as their counterparts of Embodiment 1. As their explanations are given in Embodiment 1, they are omitted from the present embodiment.

When a plurality of PLC modems perform communication using a common transmission line, they do not necessarily belong to the same interference range. Therefore, there is a case where such PLC modems belong to different interference ranges. In this case, some PLC modems belonging to a certain interference range may be able to receive a data frame carried through the common transmission line, but other PLC modems belonging to other interference ranges may not. Therefore, some PLC modems belonging to the certain interference range may be able to update sub-priorities contained in their priority management tables, but other PLC modems belonging to other interference ranges may not. This could lead to a situation where the priority management tables of the PLC modems that perform communication using the common transmission line do not contain the same sub-priorities. A consequence of such a situation is that, in the PLC modems belonging to other interference ranges, the sub-priorities of a plurality of data having the same data type (the same main priority (original)) do not reflect the actual communication status. As a result, there may be a case where a PLC modem that is attempting to transmit data having a certain data type (a certain main priority (original)) and a low sub-priority transmits a notification signal to another PLC modem that is attempting to transmit data having the same data type (the same main priority (original)) and a high sub-priority.

The present embodiment aims to solve the above problem. To be more specific, the present embodiment introduces the following structure. Upon receiving a notification signal, a PLC modem refers to its priority management table and judges whether or not data to be transmitted by the own device has a higher sub-priority than data to be transmitted by a PLC modem that has transmitted the notification signal ("notification signal transmitter"). When judging in the affirmative, the PLC modem transmits, to the notification signal transmitter, a response signal for notifying that the data to be transmitted by the own device has a higher sub-priority than the data to be transmitted by the notification signal transmitter.

### <Network>

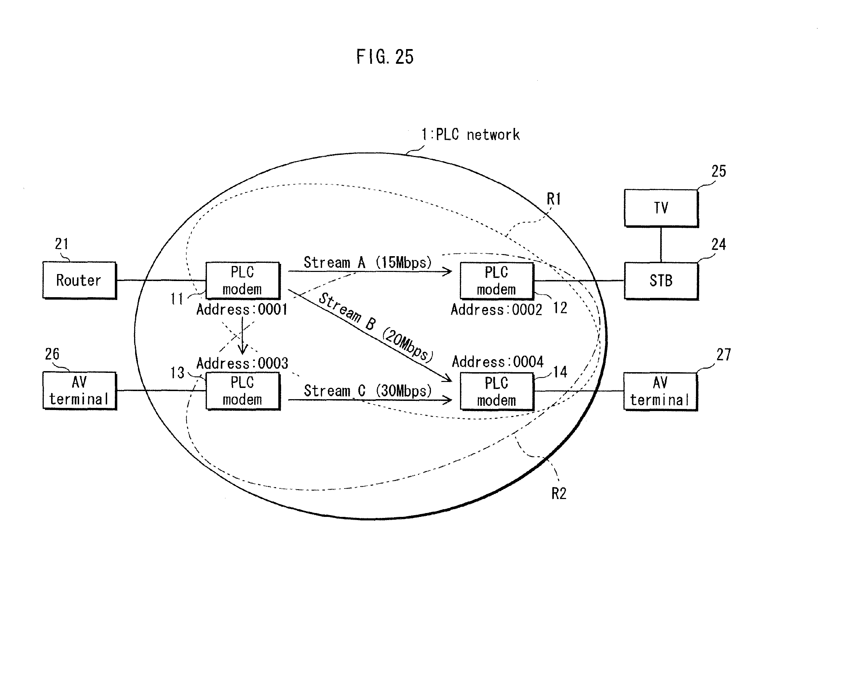

FIG. 25 is a structural diagram of a network including a PLC network 1 pertaining to the present embodiment. The PLC network 1 includes PLC modems 11 through 14 and a management terminal 15. Referring to FIG. 25, R1 is an interference range in which a data frame transmitted by the PLC modem 11 can be received, and R2 is an interference range in which a data frame transmitted by the PLC modem 13 can be received. Note, in the drawings pertaining to the present embodiment, values contained in the parentheses (as in "Stream A (...)") each represent a PHY rate, which is described later.

### <Hardware Structure of PLC Modem>

The PLC modems 11 through 14 shown in FIG. 25 are each composed of a memory 31, CPU 32a, and network interfaces 33 and 34. In the present embodiment, each memory 31 need not store a sub-priority management table 140 since PHY rates (described later) are used as the attribute information pieces. Each CPU 32a controls an entirety of the PLC modem (one of 11 through 14) in which it is provided, by performing various types of control programs stored in each memory 31.

### <Functional Structure of CPU>

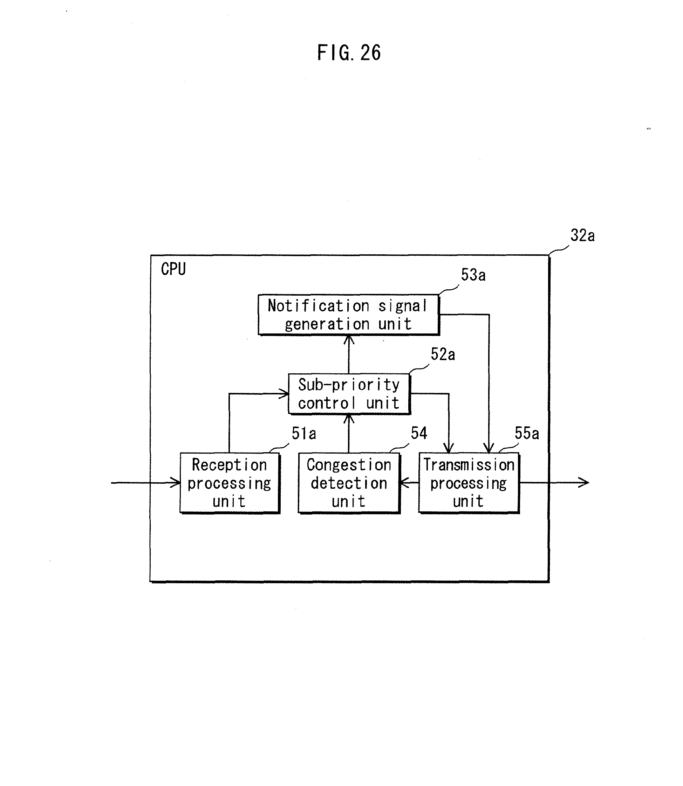

FIG. 26 is a functional block diagram of CPU 32a provided in each of the PLC modems 11 through 14 shown in FIG. 25. CPU 32a functions as a reception processing unit 51 a, a sub-priority control unit 52a, a notification signal generation unit 53a, a congestion detection unit 54 and a transmission processing unit 55a, by executing various types of control programs stored in the memory 31. The reception processing unit 51a, the sub-priority control unit 52a, the notification signal generation unit 53a and the transmission processing unit 55a correspond to the reception processing unit 51, the sub-priority control unit 52, the notification signal generation unit 53 and the transmission processing unit 55, respectively. Below, processing flows will be described with a focus on differences between the former units and the latter units.

### <Frame Format of Frame Carried through PLC Network>

The following describes a frame format of a response signal carried through the PLC network 1. Note, data formats of a data frame and a notification signal carried through the PLC network 1 are substantially the same as those illustrated in FIGs. 10 and 11. As their explanations are given in Embodiment 1, they are omitted from the present embodiment.

### {Frame Format of Response Signal}

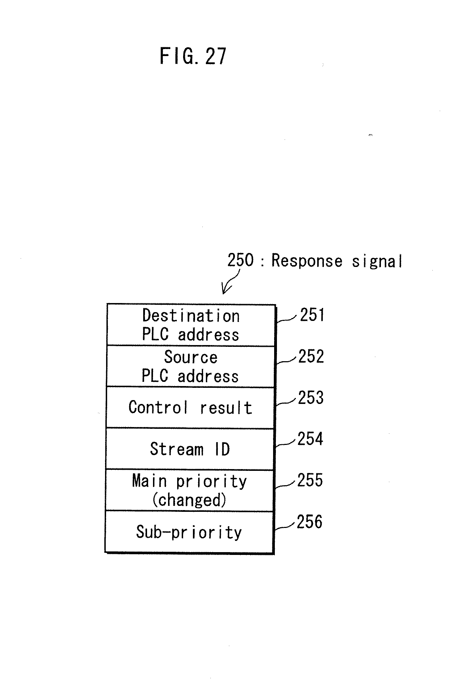

FIG. 27 shows a frame format of a response signal carried through the PLC network 1 shown in FIG. 25. A response signal 250 is returned as a response to a notification signal transmitted by the PLC modem 11 ("notification signal transmitter"). The response signal 250 is composed of a frame header and a payload in which data to be actually exchanged is stored.

The frame header contains a destination PLC address 251 and a source PLC address 252. The destination PLC address 251 is set to the address of the PLC modem to which the response signal is transmitted. The source PLC address 252 is set to the address of the PLC modem that transmits the response signal.

The payload contains a control result 253, a stream ID 254, a main priority (changed) 255 and a sub-priority 256.

The control result 253 is set to a parameter value indicating whether or not the main priority (changed) has been properly updated based on the notification signal transmitted by the notification signal transmitter. In the present embodiment, the control result 253 is set to one of parameter values "0" and "1". When the control result 253 is set to a parameter value "0", it means that (i) a stream (#1) relating to data to be transmitted by the notification signal transmitter has a higher sub-priority than a stream (#2) relating to data transmitted by the transmitter of the response signal, and (ii) the main priority (changed) of the latter stream (#2) has been changed in accordance with the control type and the control value contained in the notification signal. On the other hand, when the control result 253 is set to a parameter value "1", it means that (i) the stream relating to data transmitted by the transmitter of the response signal has a higher sub-priority than the stream relating to data to be transmitted by the notification signal transmitter, and (ii) the main priority (changed) of the former stream (#1) has not been changed.

The stream ID 254 is set to the stream ID of the stream transmitted by the transmitter of the response signal. The main priority (changed) 255 is set to the main priority (changed) of this stream. The sub-priority 256 is set to the sub-priority of this stream.

It should be noted that a response signal that contains a control result 253 set to a parameter value "1" is equivalent to a response signal for notifying other communication terminal devices that data transmitted by the own device (transmitter of the response signal) has a high sub-priority.

### <Internal Control on PLC Modems>

A description is now given of internal control on the PLC modems 11 through 14.

### {Initial Processing}

The reception processing unit 51a receives, from the management terminal 15, attribute information pieces that serve as the standard of setting sub-priorities. In the present embodiment, upon acknowledging that each of the received attribute information pieces is a PHY rate, the sub-priority control unit 52 stores the attribute information pieces into the memory 31. It is not necessary to create a sub-priority management table 140.

In the present embodiment, each attribute information piece is a PHY rate. A higher PHY rate a stream has, a higher sub-priority the stream is assigned. That is, a stream with a high PHY rate is protected. Note, a PHY rate denotes a communication speed showing the amount of data that can be exchanged per second through a common transmission line between the transmitter PLC modem and the receiver PLC modem, while different types of data are being transmitted through the common transmission line. The higher the numeral of the PHY rate, the faster the communication speed. Accordingly, when PHY rates are used as the attribute information pieces, a stream with a fast communication speed can be protected.

### {Transmission Processing}

The transmission processing unit 55a performs transmission processing that is similar to the transmission processing shown in the flowchart of FIG 15, except that the processing of Step S153 is replaced by the following processing. Also, in the present embodiment, when generating a data frame in Step S161, the attribute information 217 is set to information showing the corresponding PHY rate.

Step S153 may be replaced by the following processing. As each attribute information piece is a PHY rate, the sub-priority control unit 52a may, for example, (i) acquire a PHY rate of the transmission line between the transmitter PLC modem and the receiver PLC modem by performing transmission line estimation either at predetermined intervals (e.g., every 30 ms) or when the amount of data loss that the transmission line has incurred becomes equal to or larger than a threshold value, and (ii) determine the acquired PHY rate as a sub-priority. In this case, the sub-priority control unit 52a sets the corresponding sub-priority 155 of the priority management table 150 to the determined sub-priority in Step S154.

As set forth above, by performing transmission line estimation, for example, at predetermined intervals or when the amount of data loss that the transmission line has incurred becomes equal to or larger than a threshold value, sub-priorities can reflect a transmission line status that constantly changes.

### {Reception Processing}

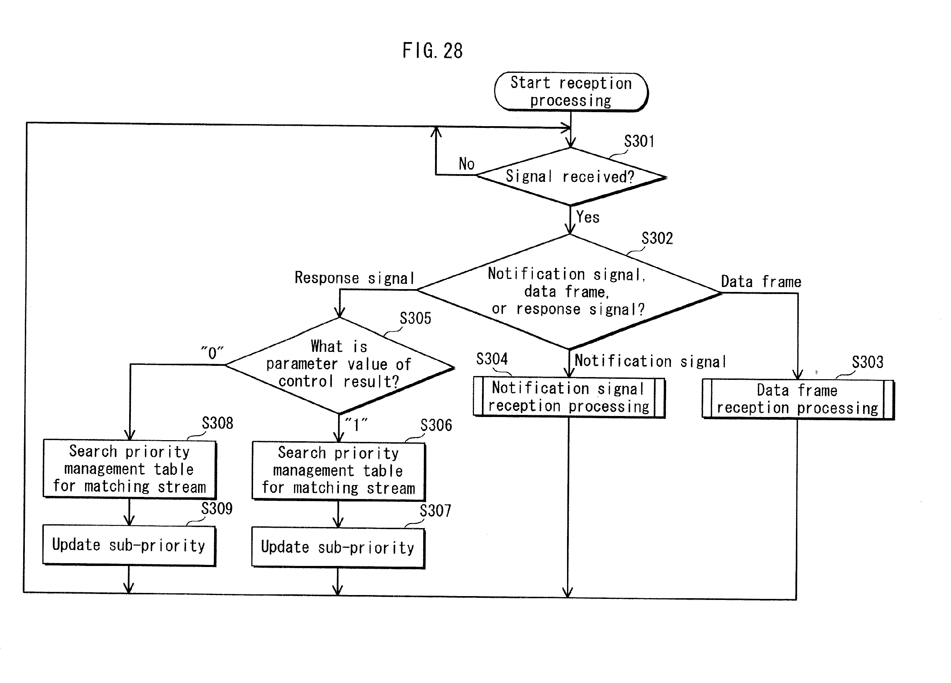

FIG. 28 is a flowchart of reception processing performed by CPU 32a of each of the PLC modems 11 through 14.

The reception processing unit 51a judges whether a signal has been received (Step S301). Processing of Step S301 is repeatedly performed until a signal is received (S301: NO). Once a signal has been received (S301: YES), the reception processing unit 51a judges whether the received signal is a notification signal, a data frame, or a response signal (Step S302). If the received signal is a data frame (S302: Data frame), then CPU 32 performs the data frame reception processing that has been explained with reference to FIG. 17 (Step S303). If the received signal is a notification signal (S302: Notification signal), then CPU 32 performs notification signal reception processing (Step S304). If the received signal is a response signal (S302: Response signal), then CPU 32 performs processing of Step S305.

The sub-priority control unit 52a confirms a parameter value indicated by the control result 253 contained in the response signal (Step S305).

If the parameter value is "1" (S305: "1"), the sub-priority control unit 52a searches the priority management table 150 for a stream whose stream ID matches the stream ID 254 contained in the response signal (Step S306), and updates the main priority (changed) 154 and the sub-priority 155 corresponding to the stream found as a result of the above search to the main priority (changed) 255 and the sub-priority 256 contained in the response signal, respectively (Step S307). Thereafter, processing of Step S301 is performed.

On the other hand, if the parameter value is "0" (S305: "0"), then the sub-priority control unit 52a searches the priority management table 150 for a stream whose stream ID matches the stream ID 254 contained in the response signal (Step S308), and updates the main priority (changed) 154 and the sub-priority 155 corresponding to the stream found as a result of the above search to the main priority (changed) 255 and the sub-priority 256 contained in the response signal, respectively (Step S309). Thereafter, processing of Step S301 is performed.

### (Notification Signal Reception Processing)

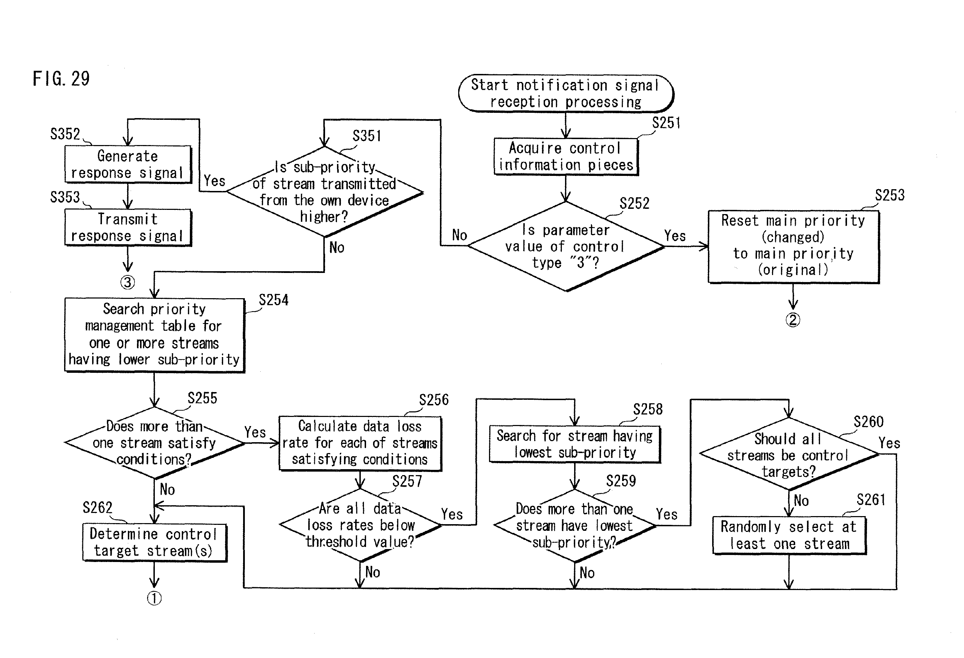

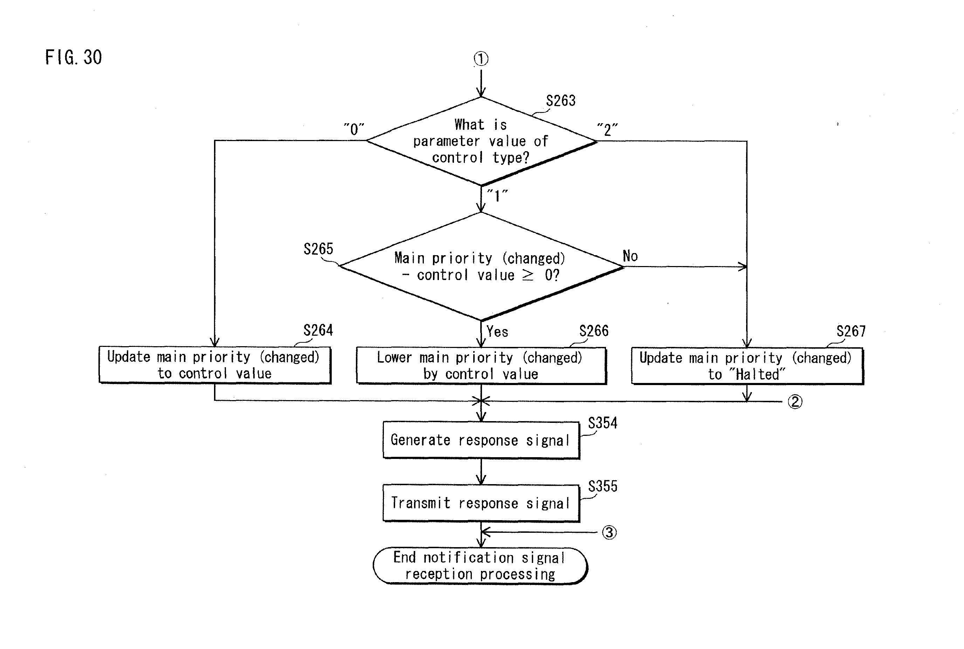

FIGs. 29 and 30 are flowcharts of the notification signal reception processing (Step S304) shown in FIG. 28. Note, the notification signal reception processing shown in FIGs. 29 and 30 are substantially the same as the notification signal reception processing of FIGs. 18 and 19, except that in the present embodiment, processing of Steps S351 to S353 is added between the NO branch of Step S252 and Step S254, and processing of Steps S354 and S355 is added subsequent to Steps S264, S266 and S267. Below, the notification signal reception processing shown in FIGs. 29 and 30 is described with a focus on differences between the notification signal reception processing shown in FIGs. 18 and 19 and the notification signal reception processing shown in FIGs. 29 and 30.

If the parameter value is other than "3" (S252: NO), then the sub-priority control unit 52a refers to the priority management table 150 and judges whether sub-priorities of all of the streams, which are transmitted by the own device and have the same priorities (original) as the main priority (original) contained in the notification signal, are higher than the sub-priority contained in the notification signal (Step S351). If the sub-priority control unit 52a judges in the affirmative (S351: YES), then processing of Step S352 is performed. If the sub-priority control unit 52a judges in the negative (S351: NO), then processing of Step S254 is performed.

The notification signal generation unit 53a generates a response signal and outputs the response signal to the transmission processing unit 55a (Step S352). The transmission processing unit 55a transmits the response signal input from the notification signal generation unit 53a (Step S353). In Step S352, the notification signal generation unit 53a generates the response signal that contains (i) the destination PLC address 251 set to the address of the PLC modem that has transmitted the notification signal, (ii) the source PLC address 252 set to the PLC address of the own device, (iii) the control result 253 set to a parameter value "1", (iv) the stream ID 254 set to the stream ID of, from among the streams transmitted by the own device, a stream that has the same main priority (original) as the main priority (original) contained in the notification signal, and a higher sub-priority than the sub-priority contained in the notification signal, (v) the main priority (changed) 255 set to the main priority (changed) of this stream, and (vi) the sub-priority 256 set to the sub-priority of this stream.

After processing of Steps S264, S266 and S267 has been performed, the notification signal generation unit 53a generates a response signal and outputs the response signal to the transmission processing unit 55a (Step S354). The transmission processing unit 55a transmits the response signal input from the notification signal generation unit 53a (Step S355). In Step S354, the notification signal generation unit 53a generates the response signal that contains (i) the destination PLC address 251 set to the address of the PLC modem that has transmitted the notification signal, (ii) the source PLC address 252 set to the PLC address of the own device, (iii) the control result 253 set to a parameter value "0", (iv) the stream ID 254 set to the stream ID of the stream whose main priority (changed) has been changed, (v) the main priority (changed) 255 set to the main priority (changed) of this stream, and (iii) the sub-priority 256 set to the sub-priority of this stream.

### <Specific Examples of Operations of PLC Modems>

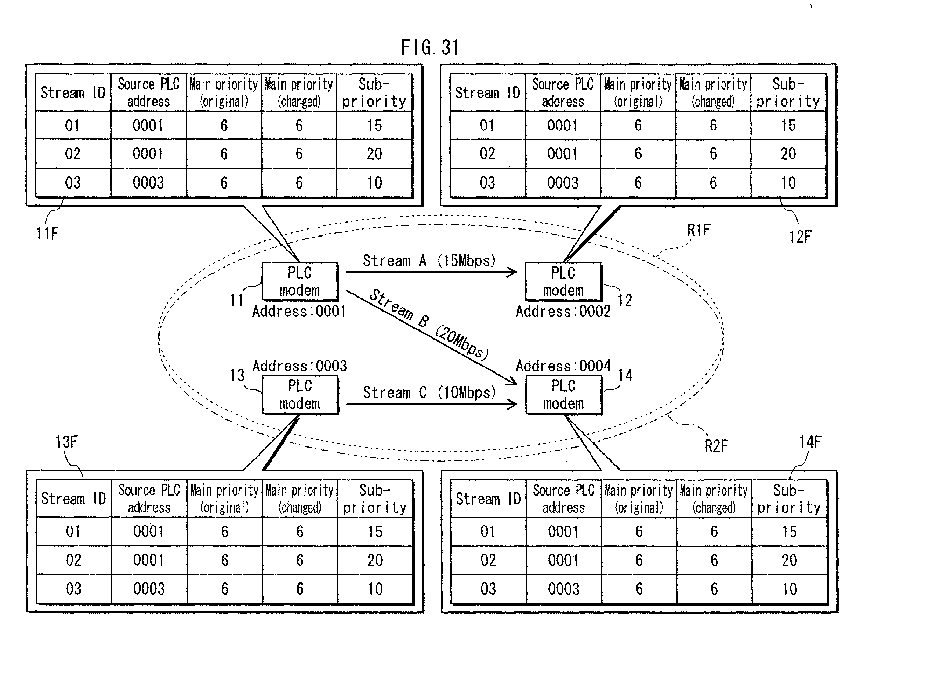

With reference to FIGs. 31 through 34, the following describes examples of operations performed by the PLC modems 11 through 14 in the PLC network 1. Note, CPU 32a of each of the PLC modems 11 through 14 acknowledges that each attribute information piece is a PHY rate by performing the initial processing. Referring to FIGs. 31 through 34, R1F through R1I are interference ranges in which a data frame transmitted by the PLC modem 11 can be received, and R2F to R2I are interference ranges in which a data frame transmitted by the PLC modem 13 can be received.

FIG. 31 is a diagram illustrating specific examples of operations of the PLC modems, or more specifically, operations performed by the PLC modem 11 through 14 when stream distribution is started in the PLC network 1. Referring to FIG. 31, the interference range R1F, in which a data frame transmitted by the PLC modem 11 can be received, and the interference range R2F, in which a data frame transmitted by the PLC modem 13 can be received, overlap each other. Each of 11F through 14F shown in FIG. 3 is the priority management table that has been explained with reference to FIG. 9.

The priority management table 11F of the PLC modem 11 is created as follows.

As each attribute information piece is a PHY rate, when transmitting data of Stream A by performing the above-described transmission processing, CPU 32a performs the following operations: (i) if the priority management table 11F does not contain stream information pieces of Stream A, newly register the stream information pieces of Stream A in the priority management table 11F; (ii) if the priority management table 11F does contain the stream information pieces of Stream A, only update the sub-priority of Stream A. Consequently, the stream information pieces of Stream A are stored in the priority management table 11F as follows: the stream ID 151 is set to the stream ID of Stream A ("01"); the source PLC address 152 is set to the address of the PLC modem 11 ("0001"); the main priority (original) 153 is set to the main priority assigned to stream distribution ("6"); the main priority (changed) 154 is set to the same value as the main priority (original) 153 ("6"); and the sub-priority 155 is set to "15" indicating a 15 Mbps PHY rate in the transmission line between the PLC modems 11 and 12, the PHY rate being acquired as a result of the transmission line estimation.

As each attribute information piece is a PHY rate, when transmitting data of Stream B by performing the above-described transmission processing, CPU 32a performs the following operations: (i) if the priority management table 11F does not contain stream information pieces of Stream B, newly register the stream information pieces of Stream B in the priority management table 11F; (ii) if the priority management table 11F does contain the stream information pieces of Stream B, only update the sub-priority of Stream B. Consequently, the stream information pieces of Stream B are stored in the priority management table 11F as follows: the stream ID 151 is set to the stream ID of Stream B ("02"); the source PLC address 152 is set to the address of the PLC modem 11 ("0001"); the main priority (original) 153 is set to the main priority assigned to stream distribution ("6"); the main priority (changed) 154 is set to the same value as the main priority (original) 153 ("6"); and the sub-priority 155 is set to "20" indicating a 20 Mbps PHY rate in the transmission line between the PLC modems 11 and 14, the PHY rate being acquired as a result of the transmission line estimation.

By performing the above-described reception processing and data frame reception processing, CPU 32a extracts a data frame of Stream C carried through the PLC network 1, and stores stream information pieces of Stream C into the priority management table 11F as follows: the stream ID 151 is set to the stream ID of Stream C ("03"); the source PLC address 152 is set to the address of the PLC modem 13 ("0003"); the main priority (original) 153 is set to the main priority assigned to stream distribution ("6"); the main priority (changed) 154 is set to the same value as the main priority (original) 153 ("6"); and the sub-priority 155 is set to "10" indicating a 10 Mbps PHY rate in the transmission line between the PLC modems 13 and 14.

The priority management table 12F of the PLC modem 12 is created as follows.

By performing the above-described reception processing and data frame reception processing, CPU 32 extracts data frames of Streams A, B and C carried through the PLC network 1, and stores stream information pieces of Streams A, B and C into the priority management table 12F.

The priority management table 13F in the PLC modem 13 is created as follows.

As each attribute information piece is a PHY rate, when transmitting data of Stream C by performing the above-described transmission processing, CPU 32a performs the following operations: (i) if the priority management table 13F does not contain stream information pieces of Stream C, newly register the stream information pieces of Stream C in the priority management table 13F; (ii) if the priority management table 13F does contain the stream information pieces of Stream C, only update the sub-priority of Stream C. Consequently, the stream information pieces of Stream C are stored in the priority management table 13F as follows: the stream ID 151 is set to the stream ID of Stream C ("03"); the source PLC address 152 is set to the address of the PLC modem 13 ("0003"); the main priority (original) 153 is set to the main priority assigned to stream distribution ("6"); the main priority (changed) 154 is set to the same value as the main priority (original) 153 ("6"); and the sub-priority 155 is set to "10" indicating a 10 Mbps PHY rate in the transmission line between the PLC modems 13 and 14, the PHY rate being acquired as a result of the transmission line estimation.

By performing the above-described reception processing and data frame reception processing, CPU 32a extracts data frames of Streams A and B carried through the PLC network 1, and stores stream information pieces of Streams A and B into the priority management table 13F.

The priority management table 14F of the PLC modem 14 is created as follows.

By performing the above-described reception processing and data frame reception processing, CPU 32a extracts data frames of Streams A, B and C carried through the PLC network 1, and stores stream information pieces of Streams A, B and C into the priority management table 14F.

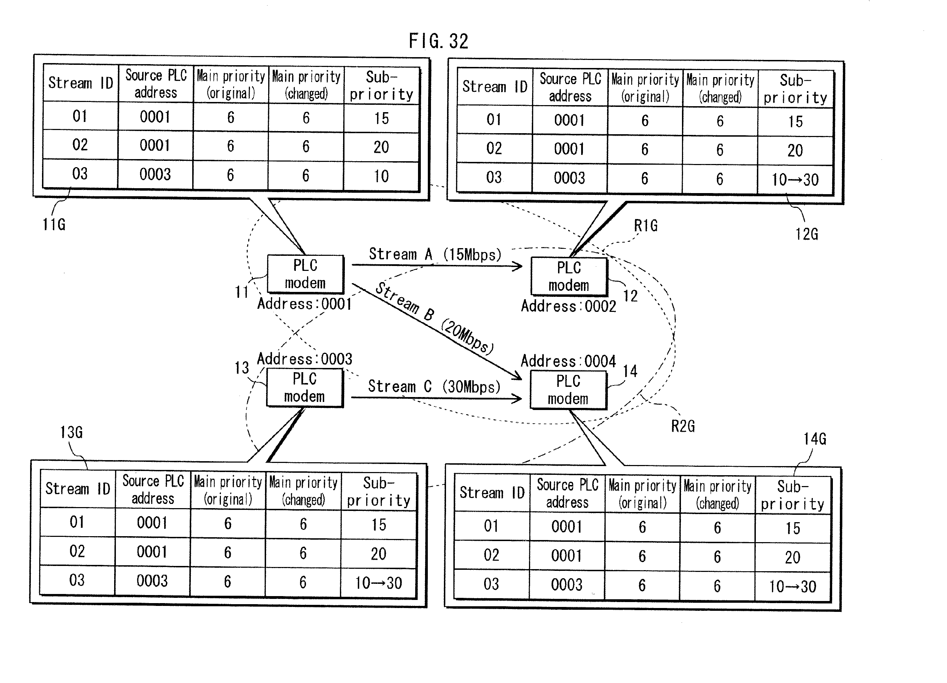

FIG. 32 is a diagram illustrating specific examples of operations of the PLC modems, or more specifically, operations performed by the PLC modems 11 through 14 when the sub-priority of Stream C has been changed under the situation where the interference range R1G (in which a data frame transmitted by the PLC modem 11 can be received) is partially outside the interference range R2G (in which a data frame transmitted by the PLC modem 13 can be received). Each of 11G through 14G shown in FIG. 32 is the priority management table that has been explained with reference to FIG. 9.

As each attribute information piece is a PHY rate, when transmitting data of Stream C by performing the above-described transmission processing, CPU 32a provided in the PLC modem 13 (i) acquires a 30 Mbps PHY rate in the transmission line between the PLC modems 13 and 14 by performing transmission line estimation, and (ii) updates the priority management table 13G by updating the value indicated by the sub-priority corresponding to Stream C from "10" to "30".

Then, CPU 32a of the PLC modem 13 generates a data frame that contains (i) the destination address 211 set to the address of the PLC modem 14 ("0004"), (ii) the source PLC address 212 set to the address of the PLC modem 13 ("0003"), (iii) the stream ID 213 set to the stream ID of Stream C ("03"), (iv) the main priority (original) 214 set to the main priority (original) of Stream C ("6"), (v) the main priority (changed) 215 set to the main priority (changed) of Stream C ("6"), (vi) the sub-priority 216 set to the sub-priority of Stream C ("30"), and (vii) the attribute information 217 set to information showing the corresponding PHY rate. CPU 32a of the PLC modem 13 then transmits the data frame.

By performing the above-described reception processing and data frame reception processing, CPU 32a provided in each of the PLC modems 12 and 14 extracts the data frame of Stream C carried through the PLC network 1. In accordance with the contents of a frame header of the data frame, CPU 32a of each of the PLC modems 12 and 14 updates its priority management table 12G or 14G by updating the sub-priority corresponding to Stream C from "10" to "30".

As the PLC modem 11 is outside the interference range R2G in which the data frame transmitted by the PLC modem 13 can be received, CPU 32a of the PLC modem 11 cannot receive the data frame transmitted by the PLC modem 13. Therefore, in the priority management table 11G, the sub-priority corresponding to Stream C still shows "10".

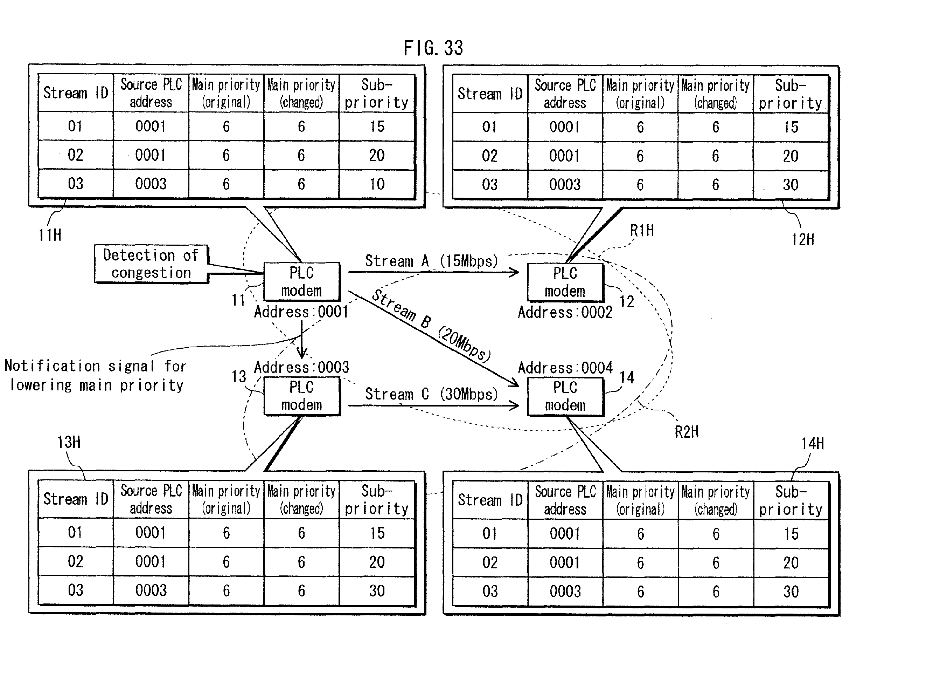

FIG. 33 is a diagram illustrating specific examples of operations of the PLC modems, or more specifically, operations performed by the PLC modems 11 through 14 when the PLC modem 11 detects congestion in the PLC network 1. Each of 11H through 14H shown in FIG. 33 is the priority management table that has been explained with reference to FIG. 9.

The PLC modem 11 distributes Streams A and B. Upon transmitting, for example, data of Stream B by performing the above-described transmission processing, CPU 32a of the PLC modem 11 detects congestion. CPU 32a of the PLC modem 11 refers to the priority management table 11H, and searches for, from among streams transmitted by other PLC modems, a stream that has (i) the same main priority (original) as Stream B and (ii) a lower sub-priority than Stream B. Consequently, CPU 32a of the PLC modem 11 finds Stream C transmitted by the PLC modem 13. CPU 32a of the PLC modem 11 generates a notification signal that contains (i) the destination PLC address 231 set to the address of the PLC modem 13 ("0003"), (ii) the source PLC address 232 set to the address of the PLC modem 11 ("0001"), (iii) the control type 233 set to "0", (iv) the control value 234 set to "5", (v) the main priority (original) 235 set to the main priority (original) of Stream B ("6"), and (vi) the sub-priority 236 set to the sub-priority of Stream B ("20"). CPU 32a of the PLC modem 11 then transmits the generated notification signal. Note, the above values to which the control type 233 and the control value 234 are set are merely examples.

By performing the above-described reception processing and notification signal reception processing, CPU 32a of the PLC modem 13 extracts the notification signal transmitted by the PLC modem 11 through the PLC network 1. CPU 32a of the PLC modem 13 refers to the priority management table 13H, confirms that the sub-priority of Stream C ("30") is higher than the sub-priority contained in the notification signal ("20"), and therefore does not update the main priority (changed) of Stream C in the priority management table 13H.

As set forth above, even when the PLC modem 13 has received, from the PLC modem 11, a notification signal that contains the control type 233 set to one of parameter values "0", "1" and "2", the PLC modem 13 refers to the priority management table 13H and judges whether the sub-priority of the stream relating to data transmitted by the PLC modem 13 is higher than the sub-priority of the stream relating to data to be transmitted by the PLC modem 11 (notification signal transmitter). If the PLC modem 13 judges in the affirmative, then it does not update the main priority (changed) of the stream relating to the data transmitted by the PLC modem 13.

Hence, even when different interference ranges exist in the PLC network 1, the above structure can prevent a situation where the notification signal transmitted by the PLC modem 11, which transmits data having a low sub-priority, lowers the main priority (changed) of data having a high priority that is transmitted by the PLC modem 13.

As the notification signal transmitted by the PLC modem 11 is not addressed to the PLC modems 12 and 14, neither of them updates its priority management table (12H or 14H) in response to this notification signal.

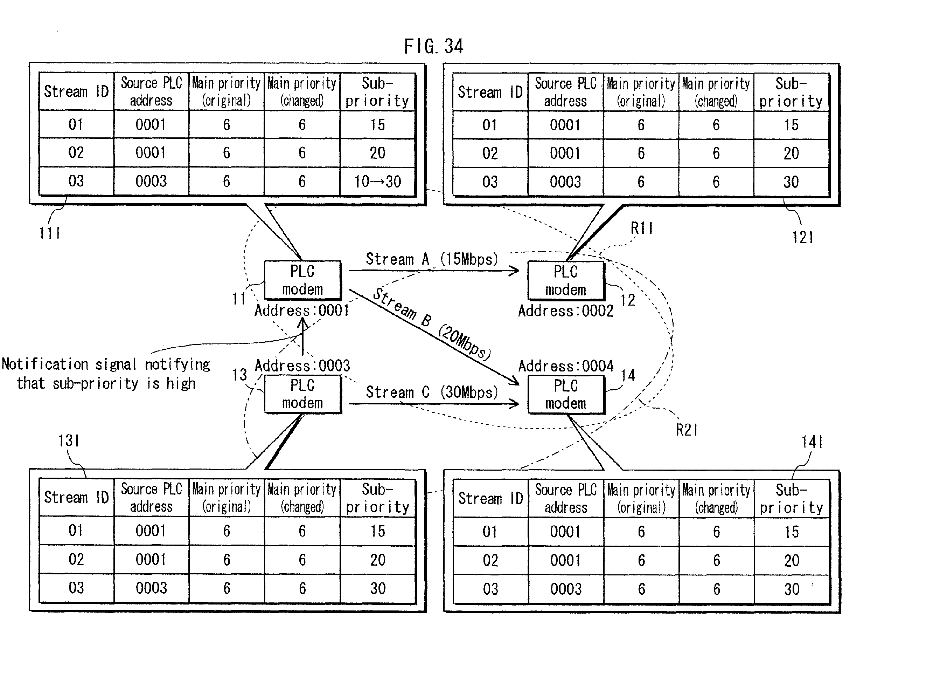

FIG. 34 is a diagram illustrating specific examples of operations of the PLC modems, or more specifically, operations performed by the PLC modems 11 through 14 when the PLC modem 13 has confirmed, in the network 1, that the sub-priority of the stream transmitted by the own device is higher than the sub-priority contained in the notification signal. Each of 11I through 14I shown in FIG. 34 is the priority management table that has been explained with reference to FIG. 9.

By performing the above-described reception processing and notification signal reception processing, CPU 32a of the PLC modem 13 refers to the priority management table 13I and confirms that the sub-priority of She stream C transmitted by the own device ("30") is higher than the sub-priority contained in the notification signal ("20"). CPU 32a of the PLC modem 13 generates a response signal that contains (i) the destination PLC address 251 set to the address of the PLC modem 11 ("0001"), (ii) the source PLC address 252 set to the PLC address of the own device ("0003"), (iii) the control result 253 set to a parameter value "1", (iv) the stream ID 254 set to the stream ID of Stream C ("03"), (v) the main priority (changed) 255 set to the main priority (changed) of Stream C ("6"), and (vi) the sub-priority 256 set to the sub-priority of Stream C ("30"). CPU 32a of the PLC modem 13 then transmits the generated response signal.

By performing the above-described reception processing, CPU 32a of the PLC modem 11 extracts the response signal transmitted by the PLC modem 13 through the PLC network 1. Upon confirming that the parameter value "1" is indicated by the control result 253 contained in the response signal, CPU 32a of the PLC modem 11 updates the priority management table 11I by updating (i) the value indicated by the main priority (changed) 154 corresponding to Stream C from "6" to "6" which is the value indicated by the main priority (changed) 255 contained in the response signal, and (ii) the value indicated by the sub-priority 155 from "10" to "30" which is the value indicated by the sub-priority 256 contained in the response signal.

As set forth above, in accordance with the response signal transmitted by the PLC modem 13, the PLC modem 11 updates the priority management table 11I by updating the main priority (changed) and the sub-priority of the stream relating to data transmitted by the PLC modem 13. Put another way, this structure can perform appropriate processing in accordance with the specific communication status that constantly changes in the transmission line.

As the response signal transmitted by the PLC modem 13 is not addressed to the PLC modems 12 and 14, neither of them updates its priority management table (12I or 14I) in response to this response signal.

Although it has been described in the present embodiment that each attribute information piece is a PHY rate, the present embodiment is not limited to this. Instead, each attribute information piece may be, for example, a parameter indicating the characteristics of a transmission line through which a stream is transmitted, such as a link speed at which a stream is transmitted, a level of stability in the transmission line, and a time period during which the transmission line is occupied to transmit a stream. Alternatively, each attribute information piece may be a transmission start time at which transmission of the corresponding stream is started. Here, the transmission start time may be an absolute time at which the transmission of the stream is started, or may be obtained using time stamps that are synchronous in the network. Alternatively, each attribute information piece may be a stream distributing medium provided in the PLC modem that transmits the corresponding stream or in the PLC modem that receives the stream.

### <<Embodiment 3>>

The following describes Embodiment 3 of the present invention with reference to the accompanying drawings. Constituent elements and processing steps of Embodiment 3 that are substantially the same as those of Embodiments 1 and 2 are given the same reference numbers as their counterparts of Embodiments 1 and 2. As their explanations are given in Embodiments 1 and 2, they are omitted from the present embodiment.

When a plurality of PLC modems perform communication using a common transmission line, they do not necessarily belong to the same interference range. Therefore, there is a case where such PLC modems belong to different interference ranges. In this case, some PLC modems belonging to a certain interference range may be able to receive a data frame carried through the common transmission line, but other PLC modems belonging to other interference ranges may not. Therefore, some PLC modems belonging to the certain interference range may be able to update sub-priorities contained in their priority management tables, but other PLC modems belonging to other interference ranges may not. This could lead to a situation where the priority management tables of the PLC modems that perform communication using the common transmission line do not contain the same sub-priorities. A consequence of such a situation is that, in the PLC modems belonging to other interference ranges, the sub-priorities of a plurality of data having the same data type (the same main priority (original)) do not reflect the actual communication status. Accordingly, a PLC modem that transmits data having a certain data type (a certain main priority (original)) and a high sub-priority cannot detect transmission of another data having the same data type (the same main priority (original)) and a low sub-priority. This may lead to a situation where a PLC modem that transmits data having a high sub-priority cannot transmit a notification signal to another PLC modem that transmits data having a low sub-priority, despite the fact that the data having a high sub-priority is being affected by congestion due to the transmission band being used for transmission of the data having a low sub-priority.

The present embodiment aims to solve the above problem. To be more specific, the present embodiment introduces the following structure. When a receiver PLC modem detects congestion in a common transmission line, the receiver PLC modem refers to its priority management table and transmits, to another PLC modem that transmits data having a lower sub-priority than data to be received by the receiver PLC modem, a notification signal notifying that the data to be received by the receiver PLC modem has a high sub-priority.

### <Network>

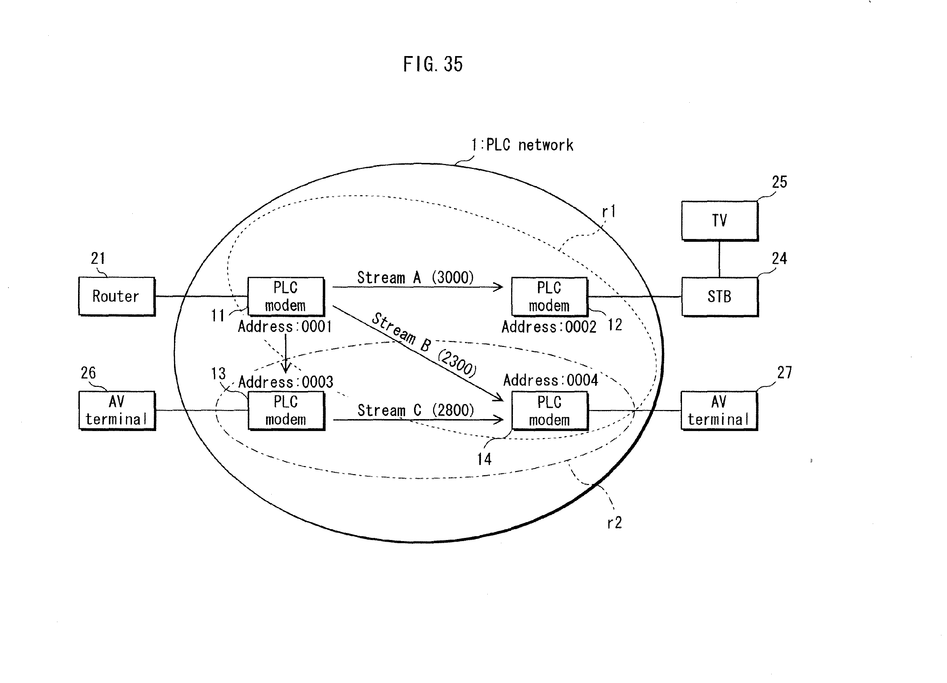

FIG. 35 is a structural diagram of a network including a PLC network 1 pertaining to the present embodiment. The PLC network 1 includes PLC modems 11 through 14 and a management terminal 15. Referring to FIG. 35, r1 is an interference range in which a data frame transmitted by the PLC modem 11 can be received, and r2 is an interference range in which a data frame transmitted by the PLC modem 13 can be received. Note, in the drawings pertaining to the present embodiment, values contained in the parentheses (as in "Stream A (...)") each represent a corresponding per-frame transmission duration, which is be described later.

### <Hardware Structure of PLC Modem>

Each of the PLC modems 11 through 14 shown in FIG. 35 is composed of a memory 31, CPU 32b, and network interfaces 33 and 34. As each attribute information piece is a per-frame transmission duration (described later) in the present embodiment, the memory 31 need not store the sub-priority management table 140. CPU 32b controls an entirety of the PLC modem (one of 11 through 14) in which it is provided, by performing various types of control programs stored in the memory 31.

### <Functional Structure of CPU>

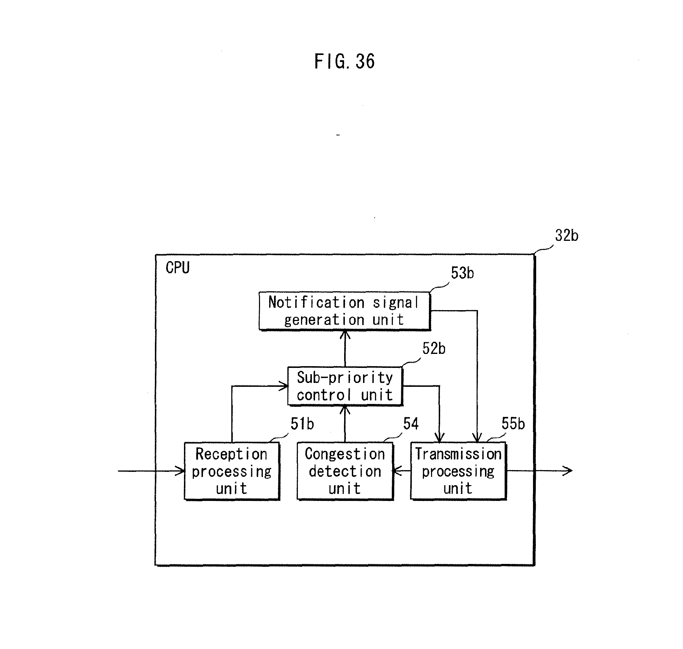

FIG. 36 is a functional block diagram of CPU 32b provided in each of the PLC modems 11 through 14 shown in FIG. 35. CPU 32b functions as a reception processing unit 51b, a sub-priority control unit 52b, a notification signal generation unit 53b, a congestion detection unit 54 and a transmission processing unit 55b by performing various types of programs stored in the memory 31. The reception processing unit 51b, the sub-priority control unit 52b, the notification signal generation unit 53b, and the transmission processing unit 55b correspond to the reception processing units 51 and 51a, the sub-priority control units 52 and 52a, the notification signal generation units 53 and 53a, and the transmission processing units 55 and 55a, respectively. Below, processing flows will be described with a focus on differences between the former units and the latter units.

### <Internal Control on PLC Modems>

A description is now given of internal control on the PLC modems 11 through 14.

### {Initial Processing}

The reception processing unit 51b receives, from the management terminal 15, attribute information pieces that serve as the standard of setting sub-priorities. In the present embodiment, the sub-priority control unit 52 acknowledges that each of the received attribute information pieces is a per-frame transmission duration, and stores the attribute information pieces into the memory 31. It is not necessary to create the sub-priority management table 140.

In the present embodiment, each attribute information piece is a per-frame transmission duration that is calculated by using a communication speed in a transmission line and the amount of data to be transmitted within one frame. Given that every data has the same data amount, the faster the communication speed at which the data is transmitted in the transmission line, the shorter the transmission duration required for the data. Given that every data is transmitted at the same communication speed, the smaller the data amount of data, the shorter the transmission duration required for the data. Accordingly, when each attribute information piece is a per-frame transmission duration, with the transmission speed and the amount of data to be transmitted taken into consideration, a stream that occupies the transmission line for the shortest amount of time can be protected.

Meanwhile, assume a case where, during a predetermined time period, one PLC modem (#1) transmits a stream twice while another PLC modem (#2) transmits a stream once. Here, if the amount of data contained in each of the streams transmitted by the PLC modem #1 is equal to the amount of data contained in the stream transmitted by the PLC modem #2, then it means that the streams transmitted by the PLC modem #1, altogether, are double the size of the stream transmitted by the PLC modem #2. This would naturally lead to the understanding that the stream transmitted by the PLC modem #2 is preferentially protected. In this case, it is required to make judgment as to which one of the streams should be protected on the basis of a total duration for which one or more frames transmitted by each PLC modem occupy the transmission line during the predetermined period, not on the basis of a per-frame transmission duration of each frame; otherwise a stream that requires a short transmission duration cannot be preferentially protected.

In the present embodiment, as each attribute information piece is "a per-frame transmission duration", a data frame to be transmitted contains a sub-priority 216 set to the corresponding per-frame transmission duration. Upon receiving such a data frame, a PLC modem (i) adds the per-frame transmission duration indicated by the sub-priority 216 contained in this data frame to the value indicated by the corresponding sub-priority 155 contained in the priority management table 150, and (ii) updates the value indicated by the sub-priority 155 to a value obtained by the addition of (i). Stated another way, a PLC modem accumulates the per-frame transmission durations indicated by the sub-priorities 216 contained in the data frames of the same stream that have been transmitted during a predetermined time period, and stores a value obtained from this accumulation into the corresponding sub-priority 155 of the priority management table 150.

The aforementioned predetermined time period may be determined in terms of time. Alternatively, the predetermined time period may be determined by specifying times that are synchronous in the network or absolute times. Alternatively, the predetermined time period may be a time period between receptions of control signals that are periodically transmitted through the network. Alternatively, the predetermined period need not be a fixed time period, but may be an irregular time period between receptions of nonperiodic control signals.

### {Transmission Processing}

The transmission processing unit 55 performs transmission processing that is similar to the transmission processing shown in the flowchart of FIG. 15, except that the processing of Steps S153 and S154 is replaced by the following processing. Also, in the present embodiment, when generating a data frame in Step S161, the attribute information 217 is set to information showing the corresponding per-frame transmission duration, and the sub-priority 216 is set to a per-frame transmission duration that is calculated in the processing (described later) performed in replacement of the processing of Step S153.

The following describes the processing that is performed in replacement of the processing of Step S153. Since each attribute information piece is a per-frame transmission duration, the sub-priority control unit 52b calculates a transmission duration (a per-frame transmission duration) for which one frame occupies a transmission line when being transmitted between the transmitter PLC modem and the receiver PLC modem, by using (i) a PHY rate of this transmission line, which is acquired as a result of transmission line estimation, and (ii) the amount of data to be transmitted within one frame, which is calculated in Step S152. This calculation is performed every time a frame is transmitted. Then, the sub-priority control unit 52b sets the sub-priority 216 of the data frame to the calculated per-frame transmission duration. As stated earlier, the transmission line estimation is performed, for example, at predetermined intervals (e.g., every 30 ms) or when the amount of data loss that the transmission line has incurred becomes equal to or larger than a threshold value.

The most appropriate value is set as a PHY rate according to the transmission line status that the transmission line is in at a time of transmission. Also, the amount of data to be transmitted differs every time transmission is performed, depending on the amount of data remaining in the transmission queue of that time. Therefore, a per-frame transmission duration changes constantly as well, reflecting the transmission status of that time.

The following processing is performed in replacement of the processing of Step S154. The sub-priority control unit 52b updates the priority management table 150 by (i) adding the per-frame transmission duration calculated in the above manner to the value indicated by the sub-priority 155 of the corresponding stream to be transmitted, and (ii) updating the value indicated by the sub-priority 155 to a value obtained by the addition of (i).

### {Reception Processing}

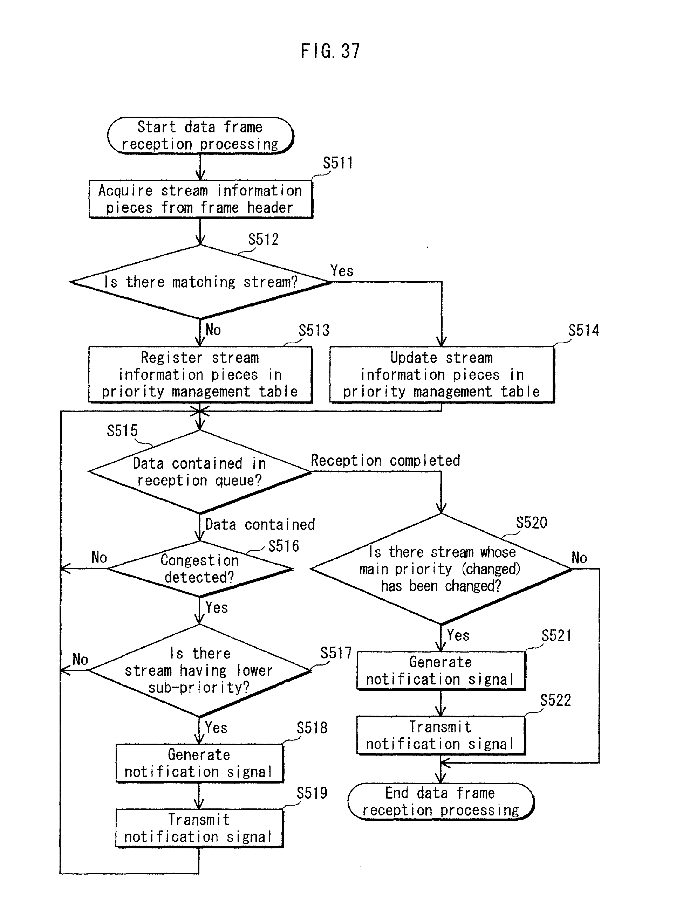

As for the reception processing shown in FIG. 28, CPU 32b pertaining to the present embodiment performs data frame reception processing shown in FIG. 37 in Step S303, and the notification signal reception processing explained with reference to FIGs. 29 and 30 in Step S304.

### (Data Frame Reception Processing)

FIG. 37 is a flowchart of the data frame reception processing performed by CPU 32b shown in FIG. 36.

The reception processing unit 51b extracts a frame header from a received data frame, and outputs the extracted frame header to the sub-priority control unit 52b. The sub-priority control unit 52b acquires, from the frame header input from the reception processing unit 51b, the stream ID, the source PLC address, the main priority (original), the main priority (changed), and the sub-priority (Step S511).

The sub-priority control unit 52b searches the priority management table 150 for a stream whose stream ID matches the acquired stream ID (Step S512).

If the priority management table 150 does not contain such a matching stream (S512: NO), then the sub-priority control unit 52b newly registers the stream ID, the source PLC address, the main priority (original), the main priority (changed) and the sub-priority acquired from the frame header in the stream ID 151, the source PLC address 152, the main priority (original) 153, the main priority (changed) 154 and the sub-priority 155 of the priority management table 150, respectively (Step S513).

On the other hand, if the priority management table 150 does contain such a matching stream (S512: YES), then the sub-priority control unit 52b updates the priority management table 150 as follows. First, the control unit 52b updates the main priority (changed) 154 corresponding to the matching stream to the main priority (changed) acquired from the frame header. The sub-priority control unit 52b then (i) adds the acquired sub-priority (indicating a per-frame transmission duration) to the value indicated by the sub-priority 155 corresponding to the matching stream, and (ii) updates the value indicated by the sub-priority 155 corresponding to the matching stream to a value obtained by the addition of (i) (Step S514).

The reception processing unit 51b confirms whether a reception queue provided therein contains any data (Step S515). If the reception processing unit 51b b confirms that the reception queue contains data (S515: Data contained), then the congestion detection unit 54 monitors the occurrence of congestion (Step S516). If the congestion detection unit 54 does not detect congestion (S516: NO), then processing of Step S515 is performed. On the other hand, if the congestion detection unit 54 detects congestion (S516: YES), then processing of Step S517 is performed.

The sub-priority control unit 52b refers to the priority management table 150 and searches for, from among streams transmitted by other PLC modems, a stream that satisfies the following conditions: (i) its main priority (original) is the same as the main priority (original) of a stream relating to data that the own device is receiving; and (ii) its sub-priority is lower than the stream relating to the data that the own device is receiving. The sub-priority control unit 52b judges whether the priority management table 150 contains such a stream satisfying the above conditions (Step S517). If the sub-priority control unit 52b judges in the negative (S517: NO), then processing of Step S515 is performed. On the other hand, if the sub-priority control unit 52b judges in the affirmative (S517: YES), then processing of Step S518 is performed.

The notification signal generation unit 53b generates a notification signal and outputs the notification signal to the transmission processing unit 55b (Step S518). The transmission processing unit 55b transmits the notification signal input from the notification signal generation unit 53b (Step S519).

In Step S518, the notification signal generation unit 53b generates the notification signal that contains (i) the destination PLC address 231 set to the address of the PLC modem that transmits the stream found as a result of the search conducted in Step S517 (i.e., the stream having the same main priority (original) as and a lower sub-priority than the stream relating to the data that the own device is receiving), (ii) the source PLC address 232 set to the address of the own device, (iii) the control type 233 set to one of parameter values "0", "1" and "2". Here, when setting the control type 233 to a parameter value "0", the notification signal generation unit 53b sets the control value 234 of the notification signal directly to a main priority (changed) to which the PLC modem receiving the notification signal should change the corresponding main priority (changed). When setting the control type 233 to a parameter value "1", the notification signal generation unit 53b sets the control value 234 to a value by which the PLC modem receiving the notification signal should lower the corresponding main priority (changed). Furthermore, the notification signal generation unit 53b sets the main priority (original) 235 and the sub-priority 236 of the notification signal to the main priority (original) and the sub-priority of the stream relating to the data that the own device is receiving, respectively. Here, a parameter value to which the control type 233 is set as well as a value to which the control value 234 is set may be determined, for example, in accordance with the congestion status of the transmission line.

Note, a notification signal that contains a control type 233 set to one of parameter values "0", "1" and "2" is equivalent to a notification signal for notifying other communication terminal devices that the data the own device (transmitter of the notification signal) is receiving has a high sub-priority.

In Step S515, the reception processing unit 55b confirms that the reception queue contains data. Then, after processing moves back to Step S515, if the reception processing unit 55b confirms that the reception queue no longer contains any data, i.e., the reception has been completed (S515: Reception completed), the sub-priority control unit 52b refers to the priority management table 150 and judges whether the priority management table 150 contains any stream whose main priority (original) and main priority (changed) are different from each other as the own device has changed this main priority (changed) (Step S520). If the priority management table 150 does not contain such a stream whose main priority (changed) has been changed (S520: NO), then CPU 32b ends the data frame reception processing. On the other hand, if the priority management table 150 does contain such a stream whose main priority (changed) has been changed (S520: YES), then the notification signal generation unit 53b generates a notification signal and outputs the notification signal to the transmission processing unit 55b (Step S521). The transmission processing unit 55b transmits the notification signal input from the notification signal generation unit 53b (Step S522), and CPU 32b ends the reception processing.

When generating the notification signal in Step S521, the notification signal generation unit 53b refers to the priority management table 150 and sets (i) the destination PLC address 231 to the address indicated by the source PLC address 152 corresponding to the stream whose main priority (changed) has been changed, (ii) the source PLC address 232 to the address of the own device, (iii) the control type 233 to a parameter value "3", and (iv) each of the control value 234, the main priority (original) 235 and the main priority (changed) 236 to an arbitrary value.

### <Specific Examples of Operations of PLC Modems>

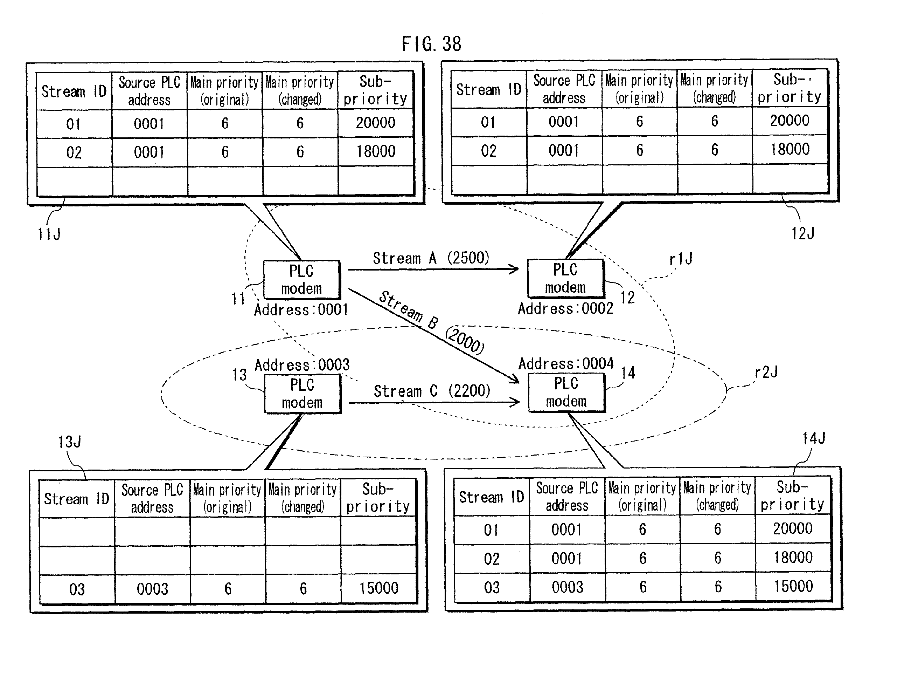

With reference to FIGs. 38 through 40, the following describes examples of operations performed by the PLC modems 11 through 14 in the PLC network 1. It should be noted that in each of the PLC modems 11 through 14, CPU 32b acknowledges that each attribute information piece is a per-frame transmission duration by performing the initial processing. Referring to FIGs. 38 through 40, r1J through r1L are interference ranges in which a data frame transmitted by the PLC modem 11 can be received, and r2J through r2L are interference ranges in which a data frame transmitted by the PLC modem 13 can be received.

FIG. 38 is a diagram illustrating specific examples of operations of the PLC modems, or more specifically, operations performed by the PLC modems 11 through 14 between (i) a start of stream distribution in the PLC network 1 and (ii) detection of congestion. In FIG. 38, the interference range r1J (in which the data frame transmitted by the PLC modem 11 can be received) is partially outside the interference range r2J (in which the data frame transmitted by the PLC modem 13 can be received). Each of 11J through 14J shown in FIG. 38 is the priority management table that has been explained with reference to FIG. 9.

The priority management table 11J of the PLC modem 11 is created as follows.

As each attribute information piece is a per-frame transmission duration, when transmitting data of Steam A by performing the above-described transmission processing, CPU 32b performs the following operations: (i) if the priority management table 11J does not contain stream information-pieces of Stream A, newly register the stream information pieces of Stream A in the priority management table 11J; and (ii) if the priority management table 11J does contain the stream information pieces of Stream A, only update the sub-priority of Stream A. Consequently, the stream information pieces of Stream A are stored in the priority management table 11J as follows: the stream ID 151 is set to the stream ID of Stream A ("01"); the source PLC address 152 is set to the address of the PLC modem 11 ("0001"); the main priority (original) 153 is set to a main priority assigned to stream distribution ("6"); the main priority (changed) 154 is set to the same value as the main priority (original) 153 ("6"); and the sub-priority 155 is set to "20000" indicating the sub-priority of Stream A (accumulated per-frame transmission durations required to transmit Stream A during a predetermined time period).

Likewise, the stream information pieces of Stream B are stored in the priority management table 11J as follows: the stream ID 151 is set to the stream ID of Stream B ("02"); the source PLC address 152 is set to the address of the PLC modem 11 ("0001"); the main priority (original) 153 is set to a main priority assigned to stream distribution ("6"); the main priority (changed) 154 is set to the same value as the main priority (original) 153; and the sub-priority 155 is set to "18000" indicating the sub-priority of Stream B (accumulated per-frame transmission durations required to transmit Stream B during a predetermined time period).

The priority management table 12J of the PLC modem 12 is created as follows.

By performing the above-described reception processing and data frame reception processing, CPU 32b extracts data frames of Streams A and B carried through the PLC network 1, and stores stream information pieces of Streams A and B into the priority management table 12J.

The PLC modems 11 and 12 are outside the interference range r2J in which a data frame transmitted by the PLC modem 13 can be received. Thus, in both of the PLC modems 11 and 12, CPU 32b cannot receive the data frame transmitted by the PLC modem 13, and hence cannot store stream information pieces of Stream C into the priority management table (11J or 12J).

The priority management table 13J of the PLC modem 13 is created as follows.

As each attribute information piece is a per-frame transmission duration, when transmitting data of Steam A by performing the above-described transmission processing, CPU 32b performs the following operations: (i) if the priority management table 13J does not contain the stream information pieces of Stream C, newly register the stream information pieces of Stream C in the priority management table 13J; and (ii) if the priority management table 13J does contain the stream information pieces of Stream C, only update the sub-priority of Stream C. Consequently, the stream information pieces of Stream C are stored in the priority management table 13J as follows: the stream ID 151 is set to the stream ID of Stream C ("03"); the source PLC address 152 is set to the address of the PLC modem 13 ("0003"); the main priority (original) 153 is set to a main priority assigned to stream distribution ("6"); the main priority (changed) 154 is set to the same value as the main priority (original) 153 ("6"); and the sub-priority 155 is set to "15000" indicating the sub-priority of Stream C (accumulated per-frame transmission durations required to transmit Stream C during a predetermined time period).

As the PLC modem 13 is outside the interference range r1J in which a data frame transmitted by the PLC modem 11 can be received, CPU 32b of the PLC modem 13 cannot receive the data frame transmitted by the PLC modem 11, and therefore cannot store the stream information pieces of Streams A and B into the priority management table 13J.

The priority management table 14J of the PLC modem 14 is created as follows.

By performing the above-described reception processing and data frame reception processing, CPU 32a extracts the data frames of Streams A, B and C carried through the PLC network 1, and stores the stream information pieces of Streams A, B and C into the priority management table 14J.

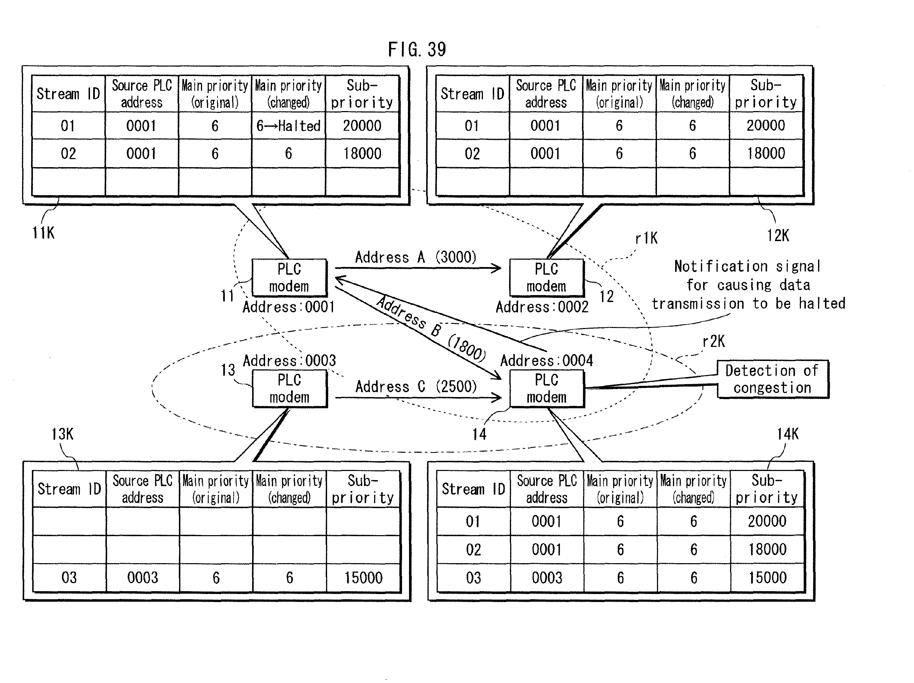

FIG. 39 is a diagram illustrating specific examples of operations of the PLC modems, or more specifically, operations that are performed by the PLC modems 11 through 14 when the PLC modem 14 has detected congestion due to reduction in the transmission band in the interference range r1K or the interference range r2K in the PLC network 1. Each of 11K through 14K shown in FIG. 39 is the priority management table that has been explained with reference to FIG. 9.

By CPU 32b of the PLC modem 14 performing the above-described reception processing and data frame reception processing, the PLC modem 14 receives the distributed Stream C. While receiving the distributed Stream C, CPU 32b of the PLC modem 14 detects congestion. CPU 32b of the PLC modem 14 refers to the priority management table 14K and searches for, from among streams transmitted by other PLC modems, at least one stream that satisfies the following conditions: (i) its main priority (original) is the same as the main priority (original) of Stream C that the own device is receiving, and (ii) its sub-priority is lower than the sub-priority of Stream C. Consequently, CPU 32b of the PLC modem 14 finds Streams A and B transmitted by the PLC modem 11. CPU 32 of the PLC modem 14 then generates a notification signal that contains (i) the destination PLC address 231 set to the address of the PLC modem 11 ("0001"), (ii) the source PLC address 232 set to the address of the PLC modem 14 ("0004"), (iii) the control type 233 set to "2", (iv) the control value 234 set to "Halted", (v) the main priority (original) 235 set to the main priority (original) of Stream C ("6"), and (vi) the sub-priority 236 set to the sub-priority of Stream C ("15000"). CPU 32 of the PLC modem 14 then transmits the generated notification signal. The values to which the control type 233 and the control value 234 are set here are merely examples.

By performing the above-described reception processing and notification signal reception processing, CPU 32b of the PLC modem 11 extracts the notification signal transmitted by the PLC modem 14 through the network 1. CPU 32b of the PLC modem 11 then refers to the priority management table 11K and confirms that both of the sub-priority of Stream A ("20000") and the sub-priority of Stream B ("18000") are lower than the sub-priority contained in the notification signal ("15000"). As the control type 233 contained in the notification signal is set to a parameter value "2", CPU 32b of the PLC modem 11 updates the priority management table 11K by updating the main priority (changed) of Stream A, which is of a lower sub-priority than Stream B, from "6" to "Halted".

As set forth above, when the PLC modem 14 included in both of the interference ranges r1K and r2K detects congestion, it can cause the PLC modem 11, which is transmitting a stream of a low sub-priority, to lower the main priority (changed) of this stream. This relatively increases the probability that a stream of a high sub-priority can be transmitted as compared to the probability that a stream of a low sub-priority can be transmitted. As a result, exchange of a stream of a high sub-priority can be guaranteed.

As the notification signal transmitted by the PLC modem 14 is not addressed to the PLC modems 12 and 13, neither of them updates the priority management table (12K or 13K) in response to this notification signal.

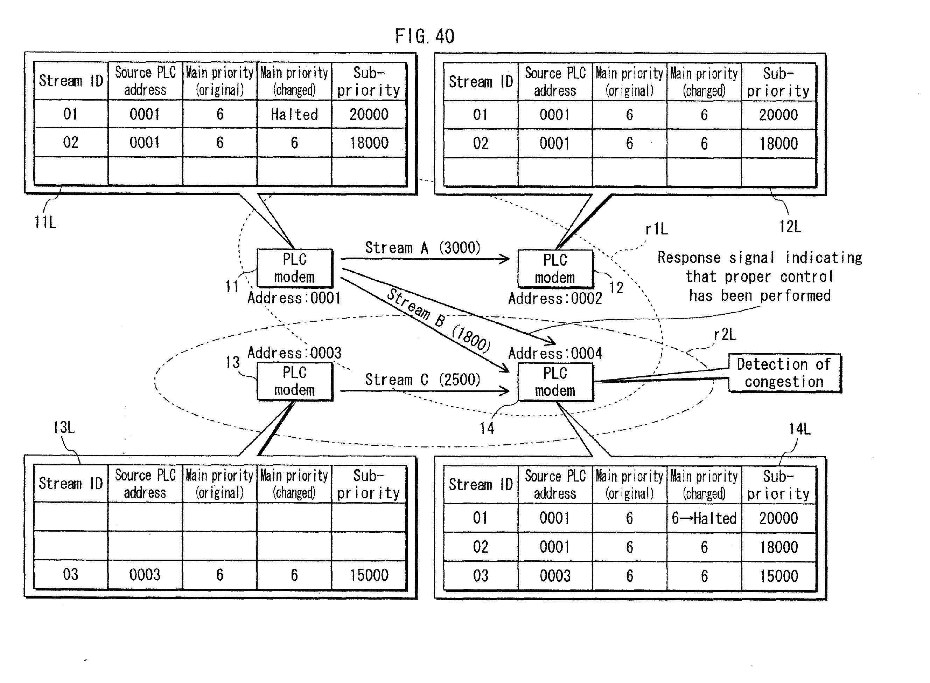

FIG. 40 is a diagram illustrating specific examples of operations of the PLC modems, or more specifically, operations performed by the PLC modems 11 through 14 when the PLC modem 11 has updated the main priority (changed) of a stream transmitted by the own device to "Halted" as the sub-priority of this stream is lower than the sub-priority contained in the notification signal in the PLC network 1. Each of 11L through 14L shown in FIG. 40 is the priority management table that has been explained with reference to FIG. 9.

By performing the above-described reception processing and notification signal reception processing, CPU 32 of the PLC modem 11 refers to the priority management table 11L and confirms that the sub-priority of Stream A ("20000") and the sub-priority of Stream B ("18000") are both lower than the sub-priority contained in the notification signal (" 15000"). As the control type 233 contained in the notification signal is set to a parameter value "2", CPU 32b of the PLC modem 11 updates the priority management table 11L by updating the main priority (changed) of Stream A, which is of a lower sub-priority than Stream B, from "6" to "Halted". CPU 32b of the PLC modem 11 generates a response signal that contains (i) the destination PLC address 251 set to the address of the PLC modem 14 ("0004"), (ii) the source PLC address 252 set to the PLC address of the own device ("0001"), (iii) the control result 253 set to a parameter value "0", (iv) the stream ID 254 set to the stream ID of Stream A ("01"), (v) the main priority (changed) 255 set to "Halted", which has been changed from "6", and (vi) the sub-priority 256 set to the sub-priority of Stream A ("20000"). CPU 32b of the PLC modem 11 then transmits the generated response signal.

By performing the above-described reception processing, CPU 32b of the PLC modem 14 extracts the response signal transmitted by the PLC modem 11 through the PLC network 1. Upon confirming that the control result 253 contained in the response signal is set to a parameter value "0", CPU 32b of the PLC modem 14 updates the priority management table 14L by updating (i) the value indicated by the main priority (changed) 154 of Stream A from "6" to "Halted", which is indicated by the main priority (changed) 255 contained in the response signal, and (ii) the value indicated by the sub-priority 155 from "20000" to "20000", which is indicated by the sub-priority 256 contained in the response signal.

As the response signal transmitted by the PLC modem 11 is not addressed to the PLC modems 12 and 13, neither of them updates the priority management table (12L or 13L) in response to this response signal.

### <<Embodiment 4>>

The following describes Embodiment 4 of the present invention with reference to the accompanying drawings. In Embodiment 1, when congestion is detected in a common transmission line, each of the PLC modems 11 through 14 causes another PLC modem to lower the main priority (changed) of a stream transmitted by the other PLC modem. As opposed to Embodiment 1, Embodiment 4 introduces the following structure: when congestion is detected in a common transmission line, each of the PLC modems 11 through 14 raises the main priority (changed) of a stream transmitted by the own device. Constituent elements and processing steps of Embodiment 4 that are substantially the same as those of Embodiment 1 are given the same reference numbers as their counterparts of Embodiment 1. As their explanations are given in Embodiment 1, they are omitted from the present embodiment.

### <Hardware Structure of PLC Modem>

PLC modems of the present embodiment are each composed of a memory 31, CPU 32c, and network interfaces 33 and 34. In each PLC modem, CPU 32c controls an entirety of the PLC modem in which it is provided, by performing various types of control programs stored in the memory 31.

### <Functional Structure of CPU>

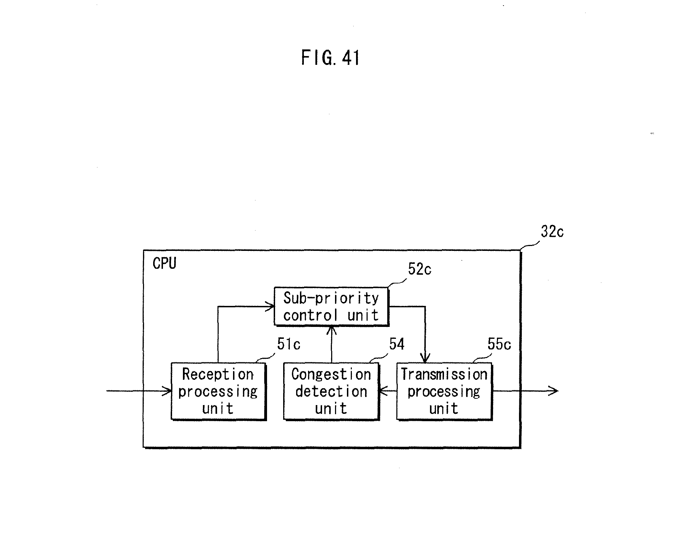

FIG. 41 is a functional block diagram of CPU 32c provided in each of the PLC modems pertaining to the present embodiment. CPU 32c functions as a reception processing unit 51c, a sub-priority control unit 52c, a congestion detection unit 54 and a transmission processing unit 55c by performing various types of control programs stored in the memory 31. The reception processing unit 51c, the sub-priority control unit 52c and the transmission processing unit 55c correspond to the reception processing unit 51, the sub-priority control unit 52 and the transmission processing unit 55, respectively. Below, processing flows will be described with a focus on differences between the former units and the latter units.

### <Internal Control on PLC Modems>

A description is now given of internal control on the PLC modems.

### {Initial Processing and Registration Processing}

CPU 32b performs the initial processing and the registration processing that have been explained with reference to FIGs. 13 and 14, respectively.

### {Transmission Processing}

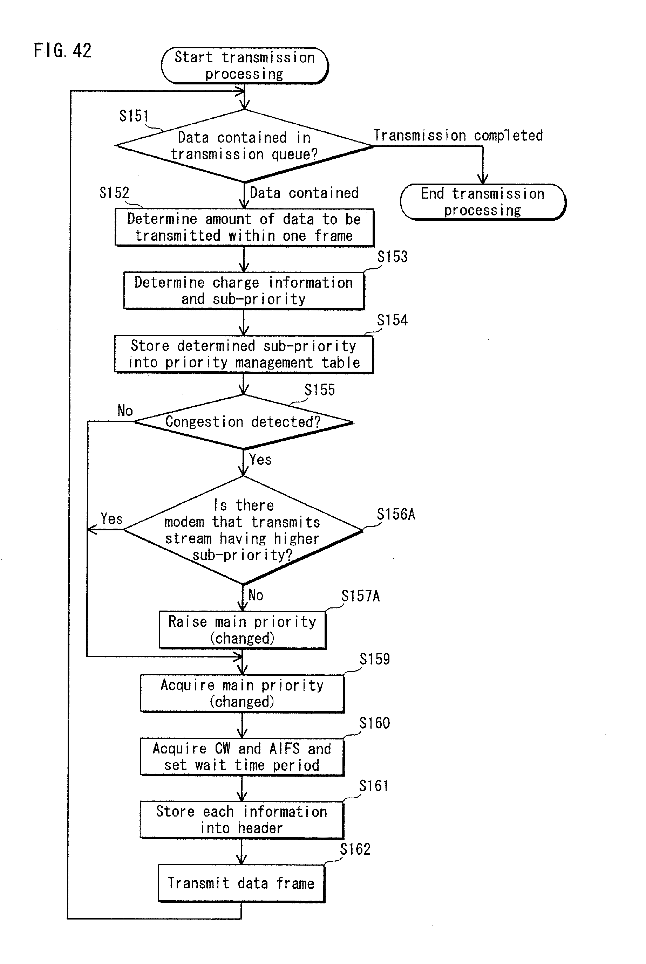

FIG. 42 is a flowchart of transmission processing performed by CPU 32c shown in FIG. 41.

The above-described processing of Steps S151 to S155 is performed. If congestion is detected (S155: YES), then processing o Step S156A is performed. On the other hand, if congestion is not detected (S155: NO), then processing of Step S159 is performed.

The sub-priority control unit 52c refers to the priority management table 150 and judges whether the priority management table 150 contains another PLC modem that transmits a stream relating to data that satisfies the following conditions: (i) its data type (main priority (original)) is the same as the data type (main priority (original)) of data transmitted by the own device, and (ii) its sub-priority is higher than the sub-priority of the data transmitted by the own device (Step S156A). If the sub-priority control unit 52c judges in the affirmative (S156A: YES), then processing of Step S159 is performed. If the sub-priority control unit 52c judges in the negative (S156A: NO), then processing of Step S157A is performed.

The sub-priority control unit 52c updates the priority management table 150 by raising the value indicated by the main priority (changed) of the stream to be transmitted by the own device (Step S157A). Thereafter, processing of Step S159 is performed. In Step S157A, the value indicated by the main priority (changed) may be raised by a constant value, or by a value that could vary depending on the status of congestion.

Subsequent to the above-described processing of Steps S159 to S162, processing moves back to S151. If the transmission processing unit 55c confirms that a transmission queue contains data in Step S151, then processing of Steps S152 to S162 is performed. If the transmission processing unit 55c confirms that the transmission queue no longer contains any data, i.e., the transmission has been completed (S151: Transmission completed), then CPU 32c ends the transmission processing.

### {Reception Processing}

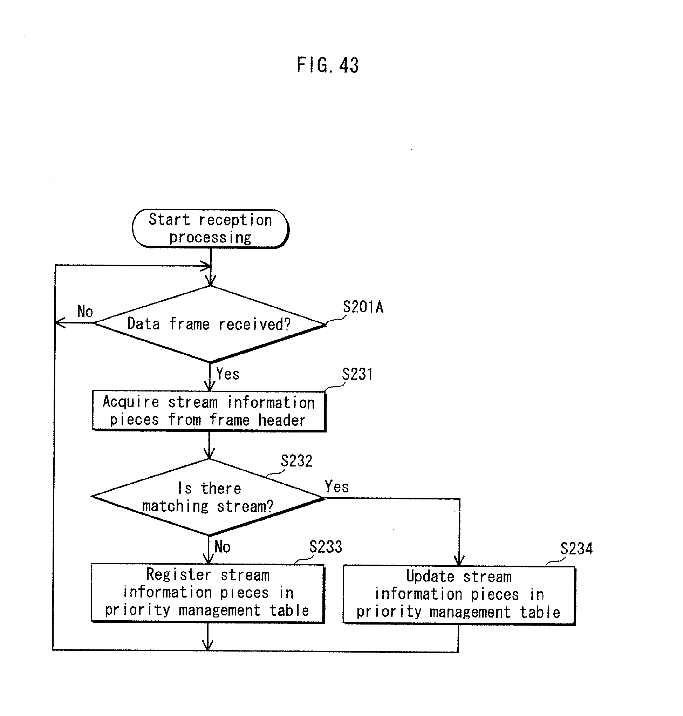

FIG. 43 is a flowchart of reception processing performed by CPU 32 of each of the PLC modems 11 through 14.

The reception processing unit 51c judges whether a data frame has been received (Step S201A). Until a data frame is received (S201A: NO), the reception processing unit 51c repeatedly performs the processing of Step S201A. Once a data frame has been received (S201A: YES), the above-described processing of Steps S231 to S234 is performed. Thereafter, processing of Step S201A is performed.

According to the above-described present embodiment, when congestion is detected, each PLC modem raises the main priority (changed) of a stream relating to data to be transmitted by the own device. This relatively increases the transmission probability for such a stream, and therefore can guarantee exchange of a stream having a high sub-priority.

### <<Additional Notes>>

The present invention is not limited to the above embodiments, and may be implemented in any forms as long as the object/aims of the present invention, as well as other relevant and accompanying objects/aims, can be achieved. The following cases are also possible.

(1) In Embodiment 1, the sub-priority management table 140 contains source ID information in correspondence with charge information (attribute information). However, the sub-priority management table 140 is not limited to this, and may contain destination ID information in correspondence with charge information (attribute information).

(2) In the above embodiments, the management terminal 15 distributes attribute information pieces. The present invention, however, is not limited to this. The attribute information pieces may be distributed by one of the PLC modems 11 through 14 included in the PLC network 1, or from an external device connected to an external network via the PLC modems 11 through 14. The attribute information pieces may be set individually when connecting the PLC modems 11 through 14 to the network, or when manufacturing the PLC modems 11 through 14.

(3) Each of the PLC modems explained in the above embodiments may have the following additional functions: (i) when one of the streams transmitted by the own device has a low sub-priority, lowering the main priority (changed) of this stream or halting data transmission for this stream; and (ii) when one of the streams transmitted by the own device has the lowest sub-priority, lowering the main priority (changed) of this stream or halting data transmission for this stream upon detection of congestion.

(4) In Step S261 of the above embodiments, the sub-priority control unit randomly selects at least one stream from among more than one stream that has the lowest sub-priority. The present invention, however, is not limited to this. At least one stream may be selected by referring to sub-priorities of other streams. Alternatively, a specific stream may be selected by including the stream ID of this specific stream in the notification signal. Furthermore, when the main priority (changed) of the control target stream cannot be changed, a stream having the second lowest sub-priority may be selected.

(5) In the above embodiments, each PLC modem may have the following additional function: upon completing data transmission, transmitting a notification signal that causes other PLC modems to raise main priorities (changed) of streams transmitted by the other PLC modems. In this case, it is possible to preset a threshold value indicating to what extent such main priorities (changed) may be raised (e.g., each PLC modem follows a rule that such main priorities (changed) should each be raised to a value originally indicated thereby, at a maximum). Alternatively, each PLC modem may have the following additional function: upon confirming that transmission of a stream having a higher sub-priority than a stream transmitted by the own device has been completed, performing the processing of, for example, resetting the main priority (changed) of the stream transmitted by the own device to a value originally indicated thereby without receiving a notification signal. Alternatively, each PLC modem may perform the processing of resetting the main priority (changed) of the stream transmitted by the own device to a value originally indicated thereby when a predetermined time period has elapsed since transmission of the stream having the higher sub-priority than the stream transmitted by the own device was completed.

(6) In the above embodiments, upon receiving a notification signal that contains a control type 233 set to a parameter value "3", each PLC modem resets the corresponding main priority (changed) to a value originally indicated thereby. The present invention, however, is not limited to this. For example, each PLC modem may reset the corresponding main priority (changed) to a value originally indicated thereby when a predetermined time period has elapsed since the reception of the notification signal. As another example, the notification signal may contain information on a certain time period that indicates when each PLC modem should reset the corresponding main priority (changed) to a value originally indicate thereby after receiving the notification signal. In this case, each PLC modem resets the corresponding main priority (changed) to a value originally indicated thereby when the certain time period has elapsed since the reception of the notification signal.

(7) The present invention provides, as Modification Example 1, a communication terminal device comprising: a storage unit for storing a first table in which the following (i) are registered in one-to-one correspondence with the following (ii): (i) data types of a plurality of data that are exchanged between a plurality of communication terminal devices using a common transmission line and include first data and second data, the plurality of communication terminal devices including the own terminal; and (ii) priorities; a control unit operable to (i) determine, for some of the plurality of data having the same data type and therefore the same priority, sub-priorities based on predetermined attribute information pieces associated with the data, and (ii) register the determined sub-priorities in the first table; and a communication unit operable to, upon detecting congestion in the common transmission line when the own terminal is to transmit the first data, (i) refer to the first table and (ii) transmit a first notification signal, which notifies that the sub-priority of the first data is high, to another terminal that is included in the plurality of communication terminal devices and transmits the second data having the same data type as and a lower sub-priority than the first data.

According to the above structure, each communication terminal device that performs communication using the common transmission line determines, for some of the plurality of data having the same data type and therefore the same priority, sub-priorities based on the predetermined attribute information pieces associated with the data. That is to say, each communication terminal device determines, on its own, sub-priorities for some of the plurality of data having the same data type and therefore the same priority in accordance with the communication status. Each communication terminal device can thus perform appropriate processing in accordance with the specific communication status that changes constantly.

Furthermore, according to the above structure, the sub-priorities are not registered in a server; each communication terminal device determines the sub-priorities on its own. Therefore, there is no need to manage the sub-priorities in the server, and each communication terminal device can promptly perform processing in accordance with the specific communication status that changes constantly.

Furthermore, according to the above structure, upon detecting congestion in the common transmission line when the own terminal is to transmit the first data, the communication unit (i) refers to the first table and (ii) transmits a first notification signal, which notifies that the sub-priority of the first data is high, to another terminal that is included in the plurality of communication terminal devices and transmits the second data having the same data type as and a lower sub-priority than the first data. Once the other terminal has received this first notification signal, the other terminal can perform processing of, for example, lowering the priority of the second data. That is to say, after the transmission band has been reduced, the above structure does not reallocate the reduced transmission band to all the communications that are currently being performed. Instead, the above structure lowers the priority of, from among the plurality of data having the same priority, data having a low sub-priority. This can reduce the transmission probability for data having a low sub-priority, and relatively increase the transmission probability for data having a high sub-priority. The above structure can guarantee exchange of data having a high sub-priority when congestion has occurred in the common transmission line.

(8) The present invention provides, as Modification Example 2, the communication terminal device of Modification Example 1 wherein every time each data changes, the control unit updates a corresponding one of the sub-priorities that have been once registered based on the predetermined attribute information pieces associated with the plurality of data.

The present invention provides, as Modification Example 3, the communication terminal device of Modification Example 2 wherein every time each data is transmitted on a per-frame basis, the control unit updates the corresponding one of the sub-priorities that have been once registered based on the predetermined attribute information pieces associated with the plurality of data.

The present invention provides, as Modification Example 4, the communication terminal device of Modification Example 1 wherein the control unit determines the sub-priorities based on the predetermined attribute information pieces associated with the plurality of data, which include all of data transmitted by the own terminal and all of data transmitted by other terminals that are included in the plurality of communication terminal devices.

The present invention provides, as Modification Example 5, the communication terminal device of Modification Example 1 wherein upon receiving the first notification signal, the other terminal lowers the priority of the second data.

After the transmission band has been reduced, the above structure does not reallocate the reduced transmission band to all the communications that are currently being performed. Instead, the above structure lowers the priority of, from among a plurality of data having the same priority, data having a low sub-priority. This can reduce the transmission probability for data having a low sub-priority, and relatively increase the transmission probability for data having a high sub-priority. The above structure can guarantee exchange of data having a high sub-priority when congestion has occurred in the common transmission line

(9) The present invention provides, as Modification Example 6, the communication terminal device of Modification Example 5 wherein the priority of the second data transmitted by the other terminal represents a maximum number of slots that indicates how many slots the other terminal must wait to be able to start data transmission since occupation of the common transmission line by transmission of certain data was cleared.

The present invention provides, as Modification Example 7, the communication terminal device of Modification Example 6 wherein the maxim number of slots is a contention window specified in the IEEE standard 802.11e.

The present invention provides, as Modification Example 8, the communication terminal device of Modification Example 5 wherein the priority of the second data transmitted by the other terminal represents a wait time period for which the other terminal must wait to be able to start transmission since occupation of the common transmission line by transmission of certain data was cleared.

The present invention provides, as Modification Example 9, the communication terminal device of Modification Example 8 wherein the wait time period is AIFS (arbitration interframe space) specified in the IEEE standard 802.11e.

The present invention provides, as Modification Example 10, the communication terminal device of Modification Example 5 wherein the first notification signal transmitted by the communication unit to the other terminal indicates an extent to which the other terminal lowers the priority of the second data.

The above structure allows a communication terminal device that transmits data having a high sub-priority to specify an extent to which another terminal that transmits data having a low sub-priority should lower the priority of the latter data. In other words, a communication terminal device can determine, depending on the degree of congestion it has detected, an extent to which another terminal should lower the priority of data transmitted thereby. Consequently, the other terminal lowers the priority of the data transmitted thereby in accordance with the degree of congestion. Note, the first notification signal may specify such an extent (the extent to which the other terminal should lower the priority of the data transmitted thereby) in various manners. For example, the first notification signal may instruct the other terminal to lower the priority of the data transmitted thereby in two steps. Alternatively, the first notification signal may specify an exact value to which the other terminal should lower the priority of the data transmitted thereby (e.g., in a case where the priority of the data transmitted by the other terminal should be changed to "3").

(10) The present invention provides, as Modification Example 11, the communication terminal device of Modification Example 5 wherein upon detecting another congestion in the common transmission line after having transmitted the first notification signal, the communication unit transmits another first notification signal to the other terminal.

The present invention provides, as Modification Example 12, the communication terminal device of Modification Example 11 wherein when the other terminal has received the first notification signal a predetermined number of times, the other terminal halts its data transmission.

When the congestion in the common transmission line cannot be resolved even by lowering the priority of data having a low sub-priority, the above structure halts transmission of such data having a low sub-priority. This can further increase the transmission probability for data having a high sub-priority, and therefore guarantee exchange of such data having a high sub-priority.

(11) The present invention provides, as Modification Example 13, the communication terminal device of Modification Example 1 wherein in a case where the other terminal transmits a plurality of data having the same sub-priority, the other terminal (i) refers to sub-priorities registered in a first table stored therein upon receiving the first notification signal, and (ii) lowers the priorities of one or more of the plurality of data that have low sub-priorities.

The present invention provides, as Modification Example 14, the communication terminal device of Modification Example 1 wherein in a case where the other terminal transmits a plurality of data having the same sub-priority, the other terminal (i) refers to sub-priorities registered in a first table stored therein upon receiving the first notification signal, (ii) randomly selects data from among one or more of the plurality of data that have low sub-priorities, (iii) and lowers the priority of the selected data.

The present invention provides, as Modification Example 15, the communication terminal device of Modification Example 1 wherein in a case where the other terminal transmits a plurality of data having the same sub-priority, the other terminal (i) refers to sub-priorities registered in a first table stored therein upon receiving the first notification signal and (ii) halts transmission of one or more of the plurality of data that have a low sub-priority.

The present invention provides, as Modification Example 16, the communication terminal device of Modification Example 13 wherein upon detecting another congestion in the common transmission line after having transmitted the first notification signal, the communication unit transmits another first notification signal to the other terminal.

The present invention provides, as Modification Example 17, the communication terminal device of Modification Example 1 wherein when the other terminal has received the first notification signal a predetermined number of times, the other terminal refers to sub-priorities registered in a first table stored therein, and halts transmission of data having a yet lower sub-priority.

The present invention provides, as Modification Example 18, the communication terminal device of Modification Example 1 wherein when the own terminal has completed transmission of the first data, the communication unit transmits, to the other terminal, a second notification signal notifying that the own terminal has completed the transmission of the first data.

According to the above structure, when the other terminal has received the second notification signal, the other terminal can perform processing of, for example, resetting the priorities it has once lowered to the values originally indicated thereby. Hence, the above structure can not only guarantee exchange of data having a high sub-priority, but also recover and guarantee exchange of data having a low sub-priority.

(12) The present invention provides, as Modification Example 19, the communication terminal device of Modification Example 18 wherein the other terminal (i) lowers the priority of the second data upon receiving the first notification signal, and (ii) resets the priority of the second data to a value originally indicated thereby upon receiving the second notification signal.

The present invention provides, as Modification Example 20, the communication terminal device of Modification Example 18 wherein the other terminal (i) halts transmission of the second data upon receiving the first notification signal, and (ii) resumes the transmission of the second data upon receiving the second notification signal.

The present invention provides, as Modification Example 21, the transmission terminal device of Modification Example 18 wherein in a case where the other terminal transmits a plurality of data that have the same sub-priority, the other terminal (i) lowers the priority of each of these data upon receiving the first notification signal, and (ii) resets the priority of each of these data to a value originally indicated thereby upon receiving the second notification signal.

The present invention provides, as Modification Example 22, the transmission terminal device of Modification Example 18 wherein in a case where the other terminal transmits a plurality of data that have the same sub-priority, (i) upon receiving the first notification signal, the other terminal refers to sub-priorities registered in a first table stored therein and halts transmission of data that has a low sub-priority, and (ii) upon receiving the second notification signal, the other terminal resumes the transmission of the data that has a low sub-priority.

The present invention provides, as Modification Example 23, the transmission terminal device of Modification Example 1 wherein in a case where the other terminal judges, after having received the first notification signal and referred to a first table stored therein, that an actual sub-priority of the second data is higher than the sub-priority of the first data, the communication unit of the own terminal receives, from the other terminal, a response signal notifying that the actual sub-priority of the second data is high.

When a plurality of communication terminal devices perform communication using a common transmission line, they do not necessarily belong to the same interference range. In other words, there is a case where these communication terminal devices belong to different interference ranges. In this case, some communication terminal devices belonging to a certain interference range may be able to receive predetermined attribute information pieces associated with data carried through the common transmission line, but other communication terminal devices belonging to other interference ranges may not. In other words, some communication terminal devices belonging to the certain interference range may be able to update sub-priorities contained in their tables, but other communication terminal devices belonging to other interference ranges may not. This could lead to a situation where the tables of the communication terminal devices that perform communication using the common transmission line do not contain the same sub-priorities. A consequence of such a situation is that, in the communication terminal devices belonging to other interference ranges, the sub-priorities of a plurality of data having the same data type (the same priority) do not reflect the actual communication status. As a result, there may be a case where a communication terminal device that is attempting to transmit data having a certain data type (a certain priority) and a low sub-priority transmits a notification signal to another terminal that is attempting to transmit data having the same data type (the same priority) and a high sub-priority.

According to Modification Example 23, in a case where the other terminal judges, after having received the first notification signal and referred to the first table stored therein, that the actual sub-priority of the second data is higher than the sub-priority of the first data, the communication unit of the own terminal receives, from the other terminal, the response signal notifying that the actual sub-priority of the second data is high. This way, when the plurality of communication terminal devices that perform communication using the common transmission line belong to different interference ranges from one another, the other terminal does not perform processing based on a notification signal transmitted by a terminal that belongs to a different interference range and thus has not updated its table. Instead, the other terminal makes judgments on its own, and notifies the terminal that has not updated its table that it should update its table. Accordingly, the structure of Modification Example 23 prevents a communication terminal device that transmits data having a certain data type (a certain priority) and a low sub-priority from performing priority control on another communication terminal device that transmits data having the same data type (the same priority) and a high sub-priority.

(13) The present invention provides, as Modification Example 24, the communication terminal device of Modification Example 23 wherein upon receiving the response signal, the control unit updates the sub-priority of the second data, which is registered in the first table, in accordance with the response signal.

According to the Modification Example 24, upon receiving the response signal, the control unit updates the corresponding sub-priority registered in the first table based on the response signal. This way, in a case where the first table has not been updated due to the own terminal and other terminals belonging to different interference ranges, the sub-priorities registered in the first table can be updated based on the response signal. In other words, the own terminal can perform proper processing in accordance with the specific communication status that changes constantly in the transmission line.

(14) The present invention provides, as Modification Example 25, the communication terminal device of Modification Example 1 wherein each of the predetermined attribute information pieces is the data type of corresponding data.

The present invention provides, as Modification Example 26, the communication terminal device of Modification Example 25 wherein each data type indicates whether the corresponding data is charged data or data of no charge.

The present invention provides, as Modification Example 27, the communication terminal device of Modification Example 26 wherein (i) the other terminal downloads data from servers, (ii) the other terminal has a second table in which, for each server, information indicating whether the server transmits charged data or data of no charge is registered, and (iii) the control unit acquires the predetermined attribute information pieces by extracting, from the common transmission line, data relating to one or more of the servers to which the other terminal accesses.

The present invention provides, as Modification Example 28, the communication terminal device of Modification Example 1 wherein the control unit acquires the predetermined attribute information pieces associated with the plurality of data transmitted to the other terminal, by extracting these data carried through the common transmission line.

The present invention provides, as Modification Example 29, the communication terminal device of Modification Example 28 wherein each of the predetermined attribute information pieces is a PHY rate stored in one or more headers of the corresponding data.

According to the above structure, when the plurality of data are transmitted, each data can be protected in order so that the better the transmission line status each data is carried in, the more preferentially it is protected.

The present invention provides, as Modification Example 30, the communication terminal device of Modification Example 28 wherein (i) each data is transmitted on a per-frame basis, (ii) each frame contains a header that stores a transmission duration required to transmit the frame, and (iii) each of the predetermined attribute information pieces is a total transmission duration which is a sum of the transmission durations stored in the headers contained in the frames of a corresponding one of the plurality of data that can be transmitted during a predetermined time period.

According to the above structure, each data can be protected in order such that the shorter total transmission duration the data requires during the predetermined time period, the more preferentially it is protected (i.e., the shorter the time period for which the data occupies the common transmission line when being transmitted, the more preferentially it is protected).

The present invention provides, as Modification Example 31, the communication terminal device of Modification Example 28 wherein each of the predetermined attribute information pieces is an amount of remaining data which is stored in one or more headers of a corresponding one of the plurality of data.

The present invention provides, as Modification Example 32, the communication terminal device of Modification Example 31 wherein when transmitting the second data on a per-frame basis, the other terminal stores, into the header of each frame to be transmitted, the corresponding amount of remaining data.

(15) The present invention provides, as Modification Example 33, the Modification Example of 1 wherein the predetermined attribute information pieces are distributed by a management terminal that manages the plurality of communication terminal devices that perform communication using the common transmission line.

With the above structure, the communication terminal devices that perform communication using the common transmission line can acquire and share the predetermined attribute information pieces, thus preventing the communication terminal devices from having different attribute information pieces. Furthermore, with the above structure, the management terminal can also distribute new attribute information pieces to all of the communication terminal devices that perform communication using the common transmission line, thus enabling these communication terminal devices to alter their standard of setting sub-priorities at one time.

The present invention provides, as Modification Example 34, the communication terminal device of Modification Example 1 wherein the first notification signal contains at least one of (i) information indicating the sub-priority of the first data, (ii) information specifying a value by which the sub-priority of the second data should be lowered, (iii) information specifying a new sub-priority to which the sub-priority of the second data should be changed, and (iv) information instructing the other terminal to halt transmission of the second data.

With the above structure, the own terminal can control the sub-priority of the second data transmitted by the other terminal.

(17) The present invention provides, as Modification Example 35, the communication terminal device of Modification Example 1 wherein after having received the first notification signal, the other terminal changes the priority of the second data based on the first notification signal, and the own terminal in return receives, from the other terminal, the changed priority of the second data.

With the above structure, the own terminal can acknowledge how the other terminal has changed the sub-priority of the second data based on the first notification signal.

(18) The present invention provides, as Modification Example 36, the communication terminal device of Modification Example 23 wherein the response signal contains the actual sub-priority of the second data.

The present invention provides, as Modification Example 37, a communication terminal device comprising: a storage unit for storing a table in which the following (i) are registered in one-to-one correspondence with the following (ii): (i) data types of a plurality of data that are exchanged between a plurality of communication terminal devices using a common transmission line and include first data and second data, the plurality of communication terminal devices including the own terminal; and (ii) priorities; a control unit operable to (i) determine, for some of the plurality of data having the same data type and therefore the same priority, sub-priorities based on predetermined attribute information pieces associated with the data, and (ii) register the determined sub-priorities in the table; and a communication unit operable to, upon detecting congestion in the common transmission line when the own terminal is to receive the first data from another terminal that is included in the plurality of communication terminal devices, (i) refer to the table and (ii) transmit a first notification signal, which notifies that the sub-priority of the first data is high, to yet another terminal that is included in the plurality of communication terminal devices and transmits the second data having the same data type as and a lower sub-priority than the first data.

When a plurality of communication terminal devices perform communication using a common transmission line, they do not necessarily belong to the same interference range. In other words, there is a case where these communication terminal devices belong to different interference ranges. In this case, some communication terminal devices belonging to a certain interference range may be able to receive predetermined attribute information pieces associated with data carried through the common transmission line, but other communication terminal devices belonging to other interference ranges may not. In other words, some communication terminal devices belonging to the certain interference range may be able to update sub-priorities contained in their tables, but other communication terminal devices belonging to other interference ranges may not. This could lead to a situation where the tables of the communication terminal devices that perform communication using the common transmission line do not contain the same sub-priorities. A consequence of such a situation is that, in the communication terminal devices belonging to other interference ranges, the sub-priorities of a plurality of data having the same data type (the same priority) do not reflect the actual communication status. As a result, there may be a case where a communication terminal device that is attempting to transmit data having a certain data type (a certain priority) and a low sub-priority transmits a notification signal to another terminal that is attempting to transmit data having the same data type (the same priority) and a high sub-priority.

According to Modification Example 37, when the own terminal (the receiver terminal) has detected congestion in the common transmission line, the own terminal refers to the table and transmits the notification signal, which notifies that the sub-priority of the first data is high, to the yet another terminal that transmits the second data having the same data type as and a lower sub-priority than the first data. With this structure, even in a case where the transmitter terminals (i.e., the above-mentioned another terminal and yet another terminal) perform communication using the common transmission line but belong to different interference ranges from each other, the own terminal (the receiver terminal) can transmit/receive notification signals to/from the transmitter terminals if it belongs to both of the interference ranges to which the transmitter terminals belong. Therefore, the receiver terminal can transmit a notification signal to another communication terminal device that transmits data having the same data type (the same priority) as and a lower sub-priority than data that the receiver terminal receives.

The present invention provides, as Modification Example 38, a communication control method used in a communication terminal device to control a plurality of communication terminal devices that perform communication using a common transmission line and include the own terminal, the communication control method comprising the steps of: (i) storing a table in which the following (a) are registered in one-to-one correspondence with the following (b): (a) data types of a plurality of data that are exchanged between the plurality of communication terminal devices using the common transmission line and include first data and second data; and (b) priorities; (ii) determining, for some of the plurality of data having the same data type and therefore the same priority, sub-priorities based on predetermined attribute information pieces associated with the data, and registering the determined sub-priorities in the table; and (iii) upon detecting congestion in the common transmission line when the own terminal is to transmit the first data, referring to the table-and transmitting a first notification signal, which notifies that the sub-priority of the first data is high, to another terminal that is included in the plurality of communication terminal devices and transmits the second data having the same data type as and a lower sub-priority than the first data.

### Industrial Applicability

The present invention can be used to perform priority control on communication terminal devices that perform communication using a common transmission line.

## Claims

1. A communication terminal device comprising:
a storage unit storing a table in which, for each of a plurality of data that are exchanged using a common transmission line and include first data and second data, the following (i) and (ii) are registered in correspondence with each other: (i) one of a plurality of communication terminal devices that transmits the data, the plurality of communication terminal devices including the own device; and (ii) a main priority determined in accordance with a data type of the data;
a control unit operable to register, in the table, a sub-priority for each of the plurality of data, each sub-priority being determined in accordance with one of predetermined attribute information pieces that is associated with a corresponding one of the plurality of data; and
a communication unit operable to, upon detecting congestion in the common transmission line when the own device is to transmit the first data, (i) refer to the table and (ii) transmit a notification signal, which notifies that the sub-priority of the first data is high, to another device that is included in the plurality of communication terminal devices and transmits the second data whose main priority and sub-priority are respectively same as and lower than the main priority and the sub-priority of the first data.

2. The communication terminal device of Claim 1, wherein
when the own device is to transmit the first data, the control unit updates, on a per-frame basis, the sub-priority of the first data in accordance with one of the predetermined attribute information pieces that is associated with the first data.

3. The communication terminal device of Claim 1, wherein
the plurality of data further include third data, and
the control unit lowers the main priority of the first data in accordance with another notification signal transmitted by another device that is included in the plurality of communication terminal devices and transmits the third data, the other notification signal notifying that the sub-priority of the third data is high.

4. The communication terminal device of Claim 1, wherein
the notification signal includes one of (i) information indicating a value by which the main priority of the second data should be lowered, (ii) information indicating a new main priority to which the main priority of the second data should be changed, and (iii) information indicating that the other device should halt transmission of the second data.

5. The communication terminal device of Claim 1, wherein
upon detecting another congestion in the common transmission line after having transmitted the notification signal, the communication unit further transmits another notification signal.

6. The communication terminal device of Claim 1, wherein
when the own device has completed transmission of the first data, the communication unit transmits, to the other device, a completion notification signal notifying that the own device has completed the transmission of the first data.

7. The communication terminal device of Claim 6, wherein
the plurality of data further include third data,
the control unit lowers the main priority of the first data in accordance with another notification signal transmitted by another device that is included in the plurality of communication terminal devices and transmits the third data, the other notification signal notifying that the sub-priority of the third data is high, and
the control unit resets the main priority of the first data to a value originally indicated thereby in accordance with another completion notification signal transmitted by the other device that transmits the third data, the other completion notification signal notifying that transmission of the third data has been completed.

8. The communication terminal device of Claim 1, wherein
the plurality of data further include third data, and
when the communication unit has received, from another device that is included in the plurality of communication terminal devices and transmits the third data, another notification signal notifying that a sub-priority of the third data registered in another table held by the other device is high, the communication unit (i) refers to the table stored in the storage unit, and (ii) if the sub-priority of the first data is higher than the sub-priority of the third data registered in the table stored in the storage unit, transmits a response signal to the other device that transmits the third data, the response signal notifying that the sub-priority of the first data is high.

9. The communication terminal device of Claim 8, wherein
the plurality of data further include fourth data, and
when the control unit has received, from another device that is included in the plurality of communication terminal devices and transmits the fourth data, another response signal notifying that an actual sub-priority of the fourth data is high, the control unit updates the sub-priority of the fourth data, which is registered in the table stored in the storage unit, to the actual sub-priority thereof.

10. The communication terminal device of Claim 1, further comprising
a reception unit operable to receive the predetermined attribute information pieces that are distributed by a management terminal that manages the plurality of communication terminal devices.

11. A communication terminal device comprising:
a storage unit storing a table in which, for each of a plurality of data that are exchanged using a common transmission line and include first data and second data, the following (i) and (ii) are registered in correspondence with each other: (i) one of a plurality of communication terminal devices that transmits the data, the plurality of communication terminal devices including the own device; and (ii) a main priority determined in accordance with a data type of the data;
a control unit operable to register, in the table, a sub-priority for each of the plurality of data, each sub-priority being determined in accordance with one of predetermined attribute information pieces that is associated with a corresponding one of the plurality of data; and
a communication unit operable to, upon detecting congestion in the common transmission line when the own device is to receive the first data, (i) refer to the table and (ii) transmit a notification signal, which notifies that the sub-priority of the first data is high, to another device that is included in the plurality of communication terminal devices and transmits the second data whose main priority and sub-priority are respectively same as and lower than the main priority and the sub-priority of the first data.

12. A communication terminal device comprising:
a storage unit storing a table in which, for each of a plurality of data that are exchanged using a common transmission line and include first data and second data, the following (i) and (ii) are registered in correspondence with each other: (i) one of a plurality of communication terminal devices that transmits the data, the plurality of communication terminal devices including the own device; and (ii) a main priority determined in accordance with a data type of the data; and
a control unit operable to (i) register, in the table, a sub-priority for each of the plurality of data, each sub-priority being determined in accordance with one of predetermined attribute information pieces that is associated with a corresponding one of the plurality of data, and (ii) upon detecting congestion in the common transmission line when the own device is to transmit the first data, (a) refer to the table and (b) if the table does not contain another device that is included in the plurality of communication terminal devices and transmits the second data whose main priority and sub-priority are respectively same as and higher than the main priority and the sub-priority of the first data, raises the main priority of the first data.

13. A communication control method used in a communication terminal device, the method comprising the steps of:
storing a table in which, for each of a plurality of data that are exchanged using a common transmission line and include first data and second data, the following (i) and (ii) are registered in correspondence with each other: (i) one of a plurality of communication terminal devices that transmits the data, the plurality of communication terminal devices including the own device; and (ii) a main priority determined in accordance with a data type of the data;
registering, in the table, a sub-priority for each of the plurality of data, each sub-priority being determined in accordance with one of predetermined attribute information pieces that is associated with a corresponding one of the plurality of data; and
upon detecting congestion in the common transmission line when the own device is to transmit the first data, (i) referring to the table and (ii) transmitting a notification signal, which notifies that the sub-priority of the first data is high, to another device that is included in the plurality of communication terminal devices and transmits the second data whose main priority and sub-priority are respectively same as and lower than the main priority and the sub-priority of the first data.

14. A communication control method used in a communication terminal device, the method comprising the steps of:
storing a table in which, for each of a plurality of data that are exchanged using a common transmission line and include first data and second data, the following (i) and (ii) are registered in correspondence with each other: (i) one of a plurality of communication terminal devices that transmits the data, the plurality of communication terminal devices including the own device; and (ii) a main priority determined in accordance with a data type of the data;
registering, in the table, a sub-priority for each of the plurality of data, each sub-priority being determined in accordance with one of predetermined attribute information pieces that is associated with a corresponding one of the plurality of data; and
upon detecting congestion in the common transmission line when the own device is to receive the first data, (i) referring to the table and (ii) transmitting a notification signal, which notifies that the sub-priority of the first data is high, to another device that is included in the plurality of communication terminal devices and transmits the second data whose main priority and sub-priority are respectively same as and lower than the main priority and the sub-priority of the first data.

15. A communication control method used in a communication terminal device, the method comprising the steps of:
storing a table in which, for each of a plurality of data that are exchanged using a common transmission line and include first data and second data, the following (i) and (ii) are registered in correspondence with each other: (i) one of a plurality of communication terminal devices that transmits the data, the plurality of communication terminal devices including the own device; and (ii) a main priority determined in accordance with a data type of the data;
registering, in the table, a sub-priority for each of the plurality of data, each sub-priority being determined in accordance with one of predetermined attribute information pieces that is associated with a corresponding one of the plurality of data, and
upon detecting congestion in the common transmission line when the own device is to transmit the first data, (i) referring to the table and (ii) if the table does not contain another device that is included in the plurality of communication terminal devices and transmits the second data whose main priority and sub-priority are respectively same as and higher than the main priority and the sub-priority of the first data, raising the main priority of the first data.
